# EUROPEAN PATENT APPLICATION

(11) **EP 4 822 851 A1**
(43) Date of publication of application: **14.10.2026**
(21) Application number: 24923162.2
(22) Date of filing: 21.05.2024
(51) Int. Cl.: H01M 50/244, H01M 50/249, H01M 10/625, H01M 10/655, H01M 10/6556

(54) **BATTERY AND ELECTRICAL DEVICE**

(30) Priority: 06.02.2024 CN 202410171916
(71) Applicant: Contemporary Amperex Technology Co., Limited, Ningde, Fujian 352100 (CN)
(72) Inventor: GUO, Xinfei, Ningde, Fujian 352100 (CN)
(74) Representative: Ziebig Hengelhaupt Intellectual Property Attorneys Patentanwaltskanzlei PartGmbB
(86) International application number: PCT/CN2024/094499
(87) International publication number: WO 2025/166939

(57) **Abstract**

A battery and an electrical device. The battery comprises a case, a fixed beam, battery cells, and a first heat exchange member; the fixed beam is arranged in the case and divides the inner space of the case into a first cavity and a second cavity; clearance spaces enabling the first cavity and the second cavity to be communicated with each other are formed in the fixed beam and/or the case; the battery cells are arranged in the case and located in the first cavity; the first heat exchange member is arranged in the case and located between the battery cells and the case; the first heat exchange member is provided with at least one heat exchange flow channel and comprises a heat exchange part and connection parts; the heat exchange part is located in the first cavity and used for exchanging heat with the battery cells; the connection parts are provided with ports of the heat exchange flow channel; and the connection parts penetrate through the clearance spaces from the heat exchange part and extend into the second cavity, so that the ports of the heat exchange flow channel are located in the second cavity.

## Description

### CROSS-REFERENCE TO RELATED APPLICATIONS

The present application claims the priority of the Chinese patent application with the application number 202410171916.7 and filed on February 06, 2024, the entire contents of which are incorporated herein by reference.

### TECHNICAL FIELD

The present application relates to the technical field of batteries, and in particular, to a battery and an electrical apparatus.

### BACKGROUND

In recent years, new energy vehicles have made significant advancements. In the field of electric vehicles, batteries, as the sources of power for electric vehicles, play an irreplaceable important role. The batteries, as a core part of a new energy automobile, have relatively high requirements on reliability.

### SUMMARY OF THE INVENTION

The present application provides a battery and an electrical apparatus, which can improve the use reliability of the battery.

In a first aspect, the embodiment of the present application provides the battery, which includes a box; a fixed beam which is arranged in the box and divides an internal space of the box into a first chamber and a second chamber, the fixed beam and/or the box forming an avoiding space for communicating the first chamber with the second chamber; a battery cell which is arranged in the box and is located in the first chamber; and a first heat exchange member which is arranged in the box and is located between the battery cell and the box, forms at least one heat exchange flow channel and includes a heat exchange part and a connecting part, in which, the heat exchange part is located in the first chamber and configured to exchange heat with the battery cell; the connecting part forms a port of the heat exchange flow channel; and the connecting part penetrates through the avoiding space from the heat exchange part and extends to the second chamber, so as to locate the port of the heat exchange flow channel in the second chamber.

In the above technical solution, the avoiding space is formed in the fixed beam and the connecting part penetrates through the avoiding space from the heat exchange part and extends to the second chamber, so as to locate the port of the heat exchange flow channel in the second chamber, therefore, the assembling of the first heat exchange member and the fixed beam is facilitated, the connecting part of the first heat exchange member can extend to the second chamber without greatly bending around the fixed beam, and the structure of the first heat exchange member is simplified; moreover, the avoiding space is arranged, thus the port of the heat exchange flow channel can be located in the second chamber, namely, the port of the heat exchange flow channel and the battery cell are separated by the fixed beam so as to be located in different chambers, the box provides a proper arrangement space for communication of the first heat exchange member and other components; and meanwhile, even if a heat exchange medium leaks at the port position of the first heat exchange member, the leaked heat exchange medium does not easily flow to the position of the battery cell at the first time, thus the influence of the leakage of the heat exchange medium at the port position of the first heat exchange member on the battery cell is reduced, and the use reliability of the battery is improved.

In some embodiments, the fixed beam is provided with a first concave part, and/or, a wall of the box is provided with a second concave part, and the first concave part and/or the second concave part form the avoiding spaces.

In the above technical solution, a first concave part and/or a second concave part are/is arranged to form the avoiding space, and the avoiding space is arranged between the box and the fixed beam, thus the connecting part that penetrates through the avoiding space can be arranged closer to the box and corresponds to the wall of a first heat exchange member, which is conducive to reducing the distance from the connecting part to a heat exchange part in a normal direction of the wall of the box, moreover, the connecting part and the heat exchange part are even favorably prevented from being bent at a connection position, the structure of the first heat exchange member is simplified, and the processing is convenient.

In some embodiments, the avoiding channels are configured to allow the connection parts to pass through.

In the above technical solution, the avoiding space is arranged to allow the connecting part to pass through, namely, the avoiding space allows the connecting part to pass through, the connecting part can extend to the second chamber from the first chamber through the avoiding space, and when assembling the battery, an assembling mode of "assembling the box and the fixed beam and then mounting the first heat exchange member on the box" can be selected; and this assembling mode is particularly applicable to arrangement of "after assembling the fixed beam and the box, performing electrophoresis on the fixed beam and the box to form a protection film and then mounting the first heat exchange member", thereby improving the assembling convenience.

In some embodiments, a part of the first heat exchange member in the first chamber and a part of the first heat exchange member in the second chamber are connected at an obtuse angle.

In the above technical solution, the parts of the first heat exchange member located on two opposite sides of the fixed beam are connected at the obtuse angle, thus a first part can be aligned to the avoiding space firstly during the assembling process of the first heat exchange member, at the moment, a second part is approximately inclined, the inclination angle of the second part gradually decreases along with penetration of the first part until the first part penetrates through the avoiding space to finish penetration of the first heat exchange member, therefore, the heat exchange part of the first heat exchange member can be attached to a corresponding wall of the box at the moment, the penetration of the first heat exchange member is facilitated, and the mounting convenience of the first heat exchange member is improved; moreover, the assembling mode is particularly applicable to a condition that the heat exchange part occupies larger space on the corresponding wall of the box, for example, the heat exchange part is constructed as that the length of the first heat exchange member is larger than or equal to that of the first chamber in a direction from the first chamber to the second chamber, the first heat exchange member cannot be directly arranged on the corresponding wall in the normal direction of the corresponding wall of the box at the moment, the assembling mode in the above solution can be facilitated, smooth mounting of the first heat exchange member is realized, and meanwhile, the heat exchange area of the heat exchange part is increased.

In some embodiments, the battery further includes a current collector, and the current collector is in communication with the port of the connecting part and is located in the second chamber.

In the above technical solution, the current collector is in communication with the ports, thus heat exchange media flow to heat exchange flow channels through the current collector, and/or, the heat exchange media after heat exchange in the heat exchange flow channels flow into the current collector through the ports, thereby facilitating circular flowing of the heat exchange media; the current collector is located in the second chamber, so the communication positions of the current collector and other components except the first heat exchange member are also located in the second chamber, therefore, even if the heat exchange media leak at the communication positions of the current collector and other components, the heat exchange media which leak cannot easily flow to the first chamber with the battery cells at the first time, the influence of leakage of the heat exchange media at the current collector on the battery cells is reduced, and the use reliability of the battery is improved.

In some embodiments, the avoiding space is configured to allow the current collector to pass through.

In the above technical solution, the avoiding space is configured to allow the current collector to pass through, the current collector can move from the first chamber to the second chamber through the avoiding space, thus an assembling mode of "assembling the box and the fixed beam, and assembling the first heat exchange member and the current collector, and then assembling the assembled first heat exchange member and the current collector to the box" can be selected during assembling the battery; and this assembling mode is particularly applicable to arrangement of "after assembling the fixed beam and the box, performing electrophoresis on the fixed beam and the box to form the protection film and then mounting the first heat exchange member", which achieving the assembling convenience and protecting capability of the battery at the same time.

In some embodiments, the connecting part is provided with at least two ports; the current collector, the connecting part, and the avoiding space is in one-by-one correspondence; the current collector is in communication with a plurality of ports of the corresponding connecting part, or, the current collector divides the plurality of ports of the corresponding connecting part into a plurality of independent flow channels.

In the above technical solution, the current collector corresponds to the avoiding space one by one, and the current collector corresponds to the at least two ports, thus the avoiding space can correspond to the at least two ports on the premise of achieving liquid intake and liquid output of the heat exchange flow channels by the current collector; and therefore, the quantity of the avoiding space is favorably reduced, the processing procedure of the fixed beam is simplified, and the processing of the fixed beam is facilitated.

In some embodiments, a plurality of heat exchange flow channels are provided, two ports of each heat exchange flow channel are respectively a first port and a second port, the first port is used for liquid intake, and the second port is used for liquid output; two current collectors are provided and are respectively a first current collector and a second current collector, all first ports are in communication with the first current collector, and all second ports are in communication with the second current collector; or, one current collector is provided, and the current collector is provided with two flow channels which are separated and independently arranged; all first ports are in communication with one flow channel, and all second ports are in communication with the other flow channel.

In the above technical solution, no matter one or two current collectors are arranged, the circulation of the media in all heat exchange flow channels can be conveniently realized by a small number of current collectors, the number of avoiding space can be reduced, the processing difficulty can be reduced, and the processing procedures can be saved.

In some embodiments, the fixed beam is constructed to be a first expansion beam and is provided with a first matching surface abutting against the battery cells; the battery further includes a bearing member, the bearing member is arranged in the avoiding space and is provided with a second matching surface that is abutted against the battery cells; the first matching surface is flush with the second matching surface; the bearing member is provided with a notch for avoiding the connecting part; and the notch penetrates through a peripheral side of the bearing member.

In the above technical solution, the bearing member is arranged in the avoiding space, and the second matching surface of the bearing member is flush with the first matching surface of the fixed beam, thus the bearing member and the fixed beam can bear an expansion force of the battery cells together, which is conducive to reducing the deformation difference of the battery cells at the avoiding space positions and other positions staggered with a first avoiding space, reducing the risk of lithium precipitation that is easily caused by excessively large deformation difference of the battery cells at different positions, reducing the risk of shell breakage and electrolyte leakage caused by non-uniform stress of the battery cells, and improving the use reliability of the battery; and moreover, the notch penetrates through the peripheral side of the bearing member, the notch can be used for avoiding the corresponding connecting part, the bearing member is also conveniently arranged in the avoiding space after the first heat exchange member and the fixed beam are arranged, and therefore, the bearing member is successfully arranged.

In some embodiments, a stop part that is in abutting fit the bearing member is formed on at least one of the fixed beam and the box so as to limit movement of the bearing member from the first chamber to the second chamber.

In the above technical solution, a stop part is formed on at least one of the fixed beam and the box to limit the movement of the bearing member in the direction from the first chamber to the second chamber, so that the reliable limitation to the bearing member in the width direction of the fixed beam is realized, meanwhile, the stop part can resist the expansion force applied by the battery cells to the bearing member, the bearing capacity of the bearing member is favorably improved, the bearing member stably bears the expansion force of the battery cells, and the probability that the bearing member moves towards the second chamber by the battery cells is reduced; and if at least one of the fixed beam and the box is also fixedly connected to the bearing member in other modes, such as at least one of the fixed beam and the box is bonded with the bearing member, the above solution is favorable for reducing the acting force borne by at least one of the fixed beam and the box in other connection modes with the bearing member, and the arrangement reliability and stability of the bearing member are favorably improved.

In some embodiments, the stop part is formed at the avoiding channel position on the side of the fixed beam facing the first chamber, and/or, a stop step that protrudes towards the fixed beam is formed on a wall, provided with the first heat exchange member, of the box and; and the stop step forms the stop part.

In the above technical solution, the stop part is formed at the avoiding channel position on the side of the fixed beam facing the first chamber, so that the stop part is conveniently defined by the structure of the fixed beam to achieve limitation to the bearing member, additional independent arrangement is not needed, and the structure of the fixed beam is favorably simplified; moreover, the stop part is located on the side of the fixed beam facing the first chamber, which is conveniently matched with the mounting mode of the bearing member "matched with the avoiding space along the direction from the first chamber to the second chamber", the stop part cannot interfere with assembling of the bearing member, and the assembling convenience is favorably improved; the stop step that protrudes towards the fixed beam is formed on the wall of the box, the stop step forms the stop part, so that the stop part is conveniently defined by the structure of the box to achieve limitation to the bearing member, additional independent arrangement is not needed, the structure of the box is favorably simplified, and moreover, the sealing performance of the structure of the box cannot be affected by the stop step.

In some embodiments, on a cross section of the fixed beam, the stop part on the fixed beam is formed into an arc-shaped structure, and a cross section of the fixed beam is vertical to a length direction of the fixed beam.

In the above technical solution, the stop part arranged on the fixed beam on the cross section of the fixed beam forms an arc-shaped structure, thus the stop part can avoid the part of the bearing member matched with the stop part to a certain extent on the premise of limiting the movement of the bearing member; moreover, the stop part is located on the side of the fixed beam facing the first chamber, a situation that the bearing member is easily protruded out of the first matching surface towards the first chamber due to matching with the stop part is reduced, and the second matching surface is flush with the first matching surface conveniently. In addition, when the part of the fixed beam corresponding to the stop part is an integrally molded bent plate, the stop part can be located at a bent position of the plate, so that the stop part can be directly molded in a bent plate molding process, and furthermore, the processing procedures of the fixed beam are saved, the processing difficulty is reduced and the production efficiency is improved.

In some embodiments, the bearing member includes a plate body part and a matching part, a surface of the side of the plate body part in the thickness direction forms the second matching surface, and the notch penetrates the two sides of the plate body part in the thickness direction; and the matching part is formed on an outer edge of the plate body part and is in abutting fit with the fixed beam, so that movement of the bearing member from the first chamber to the second chamber is limited.

In the above technical solution, the bearing member includes a plate body part and a matching part; the plate body part can provide a relatively flat second matching surface with a relatively large area, thus the shielding capability of the bearing member to the avoiding space is improved; the limitation to the bearing member can be realized by the matching part, thus reliable mounting of the bearing member is implemented; therefore, the bearing member has a certain capability of bearing the expansion force of the battery cells, and meanwhile, the bearing member is simple in structure and is convenient to implement; and moreover, the matching part is in abutting fit with the fixed beam, if the fixed beam is subjected to certain deformation by the battery cells to cause that the first matching surface deviates from an original position and/or an original posture, the matching part is convenient to adapt to deformation of the fixed beam and the second matching surface of the bearing member is adaptively adjusted with the change of the first matching surface, and therefore, the second matching surface and the first matching surface are always flush or are very small in dislocation to a certain extent.

In some embodiments, the matching part is provided with a first surface and a second surface, the first surface is an arc-shaped surface that is sunken towards the second surface and is matched with the fixed beam, and the second surface is connected to the first surface and is arranged in a flush manner with the second matching surface.

In the above technical solution, the first surface of the matching part is in abutting fit with the fixed beam, the limitation fit between the bearing member and the fixed beam is conveniently achieved due to arc-shaped arrangement of the first surface; moreover, the second surface is conveniently prevented from protruding out of the second matching surface towards the first chamber, so the matching between the second matching surface and the battery cells cannot be affected; and definitely, the second surface also can be in abutting fit with the battery cells.

In some embodiments, at least one clamping hole is formed in the expansion beam; the bearing member further includes at least one clamping hook part; the clamping hook part is formed at an outer edge of the plate body part and is located on the side of the plate body part deviating from the second matching surface; and the clamping hook part is clamped in the corresponding clamping hole.

In the above technical solution, the clamping hook part of the bearing member is clamped in the clamping hole in the fixed beam, thus the bearing member can conveniently move in a direction from the second chamber to the first chamber, the mounting reliability of the bearing member is further improved, and the problem that the bearing member is easy to deviate from an avoiding channel towards the first chamber along the second chamber during the assembling process of the battery is solved, for example, pre-limitation to the bearing member can be realized, and the assembling efficiency of the battery is further improved.

In some embodiments, the bearing member further includes at least one support part; the support part is arranged on the side of the plate body part deviating from the second matching surface and avoids the notch; and the support part is in butting fit with the box.

In the above technical solution, the support part is arranged, so that the plate body part is conveniently reinforced, the structural strength of the bearing member is improved, and the support part cannot influence the abutting fit between the plate body part and the battery cells; the support part is in abutting fit with the box, thus the acting force applied by the battery cells to the bearing member is conveniently dispersed to the box through the support part, and the mounting reliability and the bearing capacity of the bearing member can be further improved; the bearing member is matched with the fixed beam and the box by the matching part and the support part respectively, so that the whole plate body part can be supported and limited in a relatively balanced manner; and moreover, the support part is arranged to avoid the notch, the arrangement of the support part cannot interfere with the connecting part, and thus the bearing member is conveniently assembled.

In some embodiments, a width of the support part in a thickness direction of the plate body part increases from the matching part to the first heat exchange member.

In the above technical solution, the width of the support part in the thickness direction of the plate body increases in the direction from the matching part to the first heat exchange member, thus the abutting fit area of the support part and the box is conveniently increased by a relatively small amount of materials, the matching reliability of the support part and the box is improved, and the cost and the bearing reliability are simultaneously balanced.

In some embodiments, the bearing member is arranged between the first heat exchange member and the fixed beam, and a heat conductivity coefficient of the bearing member is less than that of the fixed beam; and/or, the bearing member and the first heat exchange member are arranged at an interval.

In the above technical solution, the bearing member is arranged between the first heat exchange member and the fixed beam, meanwhile, the heat conductivity coefficient of the bearing member is less than that of the fixed beam, and/or, the bearing member and the first heat exchange member are arranged at an interval, so that the heat resistance between the first heat exchange member and the fixed beam is increased, the heat exchange amount between the expansion beam and the first heat exchange member is reduced, the proportion of heat or cold transferred to the battery cells by the first heat exchange member is increased to a certain extent, and the heat management performance is improved; and in addition, when the bearing member and the first heat exchange member are arranged at an interval, the risk of interference between the bearing member and the first heat exchange member can be reduced during assembling of the bearing member, and the mounting convenience of the bearing member is improved.

In some embodiments, a strength of a material of the bearing member is at least 0.8 time of the strength of the material of the fixed beam.

In the above technical solution, the strength of the material of the bearing member is at least 0.8 time of the strength of the material of the fixed beam, so that the bearing member has a good bearing capability and can reliably and stably bear the expansion force of the battery cells.

In some embodiments, the first heat exchange member is arranged on a bottom wall of the box; the end of the second matching surface facing the first heat exchange member is flush with the ends of the battery cells facing the corresponding first heat exchange member, or, the end of the second matching surface facing the first heat exchange member is adjacent to the first heat exchange member relative to the ends of the battery cells facing the corresponding first heat exchange member.

In the above technical solution, the end of the second matching surface facing the first heat exchange member is flush with the ends of the battery cells facing the corresponding first heat exchange member, or, the end of the second matching surface facing the first heat exchange member is arranged adjacent to the first heat exchange member relative to the ends of the battery cells facing the first heat exchange member, so that the whole surfaces of the battery cells facing the expansion beam can be supported, the stress uniformity of the battery cells in expansion and deformation can be improved, the problems of lithium precipitation, liquid leakage and the like caused by non-uniform stress are reduced, and furthermore, the use reliability of the battery is improved.

In some embodiments, the fixed beam is constructed to be a first expansion beam; the fixed beam and the first heat exchange member are arranged at an interval, so that heat insulation between the first heat exchange member and the fixed beam is realized.

In the above technical solution, the heat insulation between the first heat exchange member and the fixed beam is implemented, so that the heat resistance between the first heat exchange member and the fixed beam is improved, the amount of heat or cold transferred to the fixed beam by the first heat exchange member is reduced, the temperature difference between the fixed beam and the abutted peripheral battery cells is reduced, the consistency of the peripheral battery cells and the internal battery cells in a heat exchange environment is improved, the temperature difference between the peripheral battery cells and the internal battery cells is reduced, and the reliability of the battery is improved.

In some embodiments, a second concave part is formed in the wall of the box, and the second concave part forms at least part of the avoiding space; the part, penetrating through the avoiding space, of the first heat exchange member is arranged in the second concave part; and the expansion beam is attached to the part, except the second concave part, of the wall of the box; or, the expansion beam and the part, except the second concave part, of the wall of the box are arranged at an interval.

In the above technical solution, the fixed beam is arranged to be attached to the part, except the second concave part, of the wall of the box; for the fixed beam and the wall of the box, the fixed beam and the wall of the box are arranged at an interval at a penetrating position of the first heat exchange member, namely the fixed beam and the second concave part are arranged at an interval, so that the heat insulation between the fixed beam and the first heat exchange member is realized while the first heat exchange member is avoided; the fixed beam and the wall of the box are attached at the position without the first heat exchange member penetrated, namely the fixed beam and the wall of the box are not attached, thus the matching area of the fixed beam and the box is increased, and the mounting reliability of the fixed beam is improved; the fixed beam and the part, except the second concave part, of the wall of the box are arranged at an interval, so that the interval between the whole fixed beam and the first heat exchange member is further increased, the heat resistance between the whole fixed beam and the first heat exchange member is improved, the amount of heat or cold transferred to the fixed beam by the first heat exchange member is reduced, and the energy utilization rate of the first heat exchange member is improved.

In some embodiments, the battery further includes a heat insulation member which includes a first heat insulation part; and the first heat insulation part is arranged between the wall surface of the fixed beam corresponding to the avoiding space and the first heat exchange member.

In the above technical solution, the first heat insulation part is located between the wall surface of the fixed beam corresponding to the avoiding channels and the first heat exchange member, thus the first heat insulation part corresponds to the second concave part, and the heat resistance between the fixed beam and the first heat exchange member is further increased by the heat insulation member.

In some embodiments, the heat insulation member further includes a second heat insulation part which is arranged between the part, except the second concave part, of the wall of the box and the fixed beam.

In the above technical solution, the second heat insulation part is arranged between the part, except the second concave part, of the wall of the box and the fixed beam, the heat insulation member is conveniently clamped between the box and the fixed beam, the heat insulation member can be reliably mounted by means of the fixation of the fixed beam and the box, thus the heat insulation member conveniently provides a relatively flat matching surface for connecting the box with the fixed beam, meanwhile, the depth of the second concave part is reduced, and the molding convenience of the second concave part is improved.

In some embodiments, a first fixing member is further arranged on the fixed beam, and at least part of the first fixing member is located in the fixed beam; and the battery further includes a second fixing member, and the second fixing member penetrates through the box, the second heat insulation part, and the fixed beam and is connected to the first fixing member.

In the above technical solution, at least part of the first fixing member is located in the fixed beam, and the second fixing member penetrates through the box, the second heat insulation part, and the fixed beam and is connected to the first fixing member, so that the fixation of the box, the heat insulation member, and the fixed beam is realized by a simple fixing mode, and meanwhile, the heat insulation member can be reliably mounted; and moreover, the second fixing member can be mounted towards the fixed beam along the heat insulation member, so that an enough operation space is provided in the assembling process of the second fixing member, and the assembling convenience is improved. In addition, a second fixing member penetrates through a second heat insulation part, thus the second fixing member and the heat exchange tube are arranged at an interval, and the arrangement of the second fixing member does not influence the first heat exchange member.

In some embodiments, the first heat exchange member includes at least one heat exchange tube; and the heat exchange tubes are flat tubes or harmonica-shaped tubes.

In the above technical solution, the heat exchange tubes are arranged to be the flat tubes or the harmonica-shaped tubes, so that the space occupied by the heat exchange tubes is saved, moreover, the heat exchange between the sides of the heat exchange tubes in a thickness direction and the battery cells is facilitated, and the battery is balanced in volume energy density and heat management. For example, the heat exchange tubes can be extruded and molded, and a thickness of each heat exchange tube can be as small as about 0.7 mm; in related technologies, a structure of a water cooling plate is adopted, the water cooling plate generally includes two plate bodies which are stacked, the two plate bodies are welded and fixed and define the flow channel, so that the thickness of the water cooling plate is generally large and can be more than 2.4 mm; therefore, by means of above arrangement in the present application, the cost of the first heat exchange member can be reduced, moreover, the space occupied by the first heat exchange member is saved, and the improvement of the battery energy density can be realized while the first heat exchange member is arranged in the box.

In some embodiments, the first heat exchange member includes at least one heat exchange tube which is constructed to be a first heat exchange tube; the first heat exchange tube includes a first heat exchange section and a second heat exchange section; the second heat exchange section is bent to form a U-shaped area; and the first heat exchange section is bent and arranged in the U-shaped area and is connected to the second heat exchange section in a bent way.

In the above technical solution, the second heat exchange section is bent to form the U-shaped area, and the first heat exchange section is arranged in the U-shaped area in a bent way; when the first heat exchange tubes exchange heat with the plurality of battery cells, the U-shaped area formed by the second heat exchange section at the periphery can be opposite to the peripheral battery cell, the first heat exchange section in the U-shaped area is opposite to the internal battery cell, thus the first heat exchange tube can be make up an internal and external temperature difference caused by heat exchange between the peripheral battery cell and an environment, the heat exchange effects of the peripheral battery cell and the internal battery cell tend to be consistent, thereby improving the temperature uniformity of the battery, and prolonging the service life of the battery to a certain extent.

In some embodiments, the first heat exchange section includes a plurality of first heat exchange parts and first bending parts, the plurality of first heat exchange parts are arranged at intervals along the first direction, each first heat exchange part extends along a second direction, each first bending part is in an arc shape and is connected between two adjacent first heat exchange parts in a bent way, and thus the plurality of first heat exchange parts are sequentially connected; and an included angle is formed between the second direction and the first direction.

In the above technical solution, on one hand, the plurality of first heat exchange parts are arranged, so that a heat exchange area of the first heat exchange section can be increased, furthermore, the heat exchange area of the first heat exchange tubes can be increased, thereby improving the heat exchange effects of the first heat exchange tubes; and on the other hand, the internal battery cells are wrapped by the external battery cells, the temperature difference between the internal battery cells is not large, and thus, the overall heat exchange effect can be ensured on the premise of ensuring small temperature difference between the internal battery cells and the external battery cells by the plurality of first heat exchange parts.

In some embodiments, the second heat exchange section includes a second heat exchange part, a third heat exchange part, and a fourth heat exchange part; the second heat exchange part extends along a peripheral edge of a first side of the first heat exchange section; the third heat exchange part is connected between the second heat exchange part and the first heat exchange section and extends along a peripheral edge of a second side of the first heat exchange section; a first end of the third heat exchange part is connected to the second heat exchange part by an included angle; a second end of the third heat exchange part is connected to the first heat exchange section by an included angle; the fourth heat exchange part is in communication with the second heat exchange part and is connected to the second heat exchange part by an included angle; and the fourth heat exchange part extends along a peripheral edge of a third side of the first heat exchange section.

In the above embodiment, the second heat exchange part, the third heat exchange part, and the fourth heat exchange part are respectively arranged on three sides of the first heat exchange section, so that the second heat exchange section can encircle the first heat exchange section, the arrangement compactness of the first heat exchange tubes can be improved, the structure miniaturization of the first heat exchange tubes is realized, and the volume energy density of the battery is improved; and moreover, the structures of the first heat exchange tubes can be simplified, and the processing and production of the first heat exchange assembly are facilitated.

In some embodiments, the first heat exchange section includes the plurality of first heat exchange parts which are sequentially bent and connected in the first direction; the second heat exchange part is located on one side of the plurality of first heat exchange parts in the first direction, the third heat exchange part is located on one side of the plurality of first heat exchange parts in the second direction, and the first direction and the second direction are arranged by an included angle; the first end of the third heat exchange part is connected to one end of the second heat exchange part in the second direction, and the second end of the third heat exchange part is connected to one, which is farthest from the second heat exchange part, of the plurality of first heat exchange parts in the first direction; the fourth heat exchange part is located on the other side of the plurality of first heat exchange parts in the second direction; one end of the fourth heat exchange part is connected to one end of the second heat exchange part deviating from the third heat exchange part, and the other end of the fourth heat exchange part extends in the first direction towards a direction deviating from the second heat exchange part; or, the second heat exchange part is located on one side of the plurality of first heat exchange parts in the second direction, the third heat exchange part is located on one side of the plurality of first heat exchange parts in the first direction, and the first direction and the second direction are arranged by an included angle; and the first end of the third heat exchange part is connected to one end of the second heat exchange part in the first direction, and the second end of the third heat exchange part is connected to one, which is closest to the third heat exchange part, of the plurality of first heat exchange parts in the first direction; the fourth heat exchange part is located on the other side of the plurality of first heat exchange parts in the first direction; and one end of the fourth heat exchange part is connected to one end of the second heat exchange part deviating from the third heat exchange part, and the other end of the fourth heat exchange part extends in the second direction towards the direction deviating from the second heat exchange part.

In the above embodiment, the plurality of first heat exchange parts are sequentially connected in the first direction in the bent way, the second heat exchange part is arranged on one side of the plurality of first heat exchange parts in the first direction/the second direction, the third heat exchange part is arranged on one side of the plurality of first heat exchange parts in the second direction/the first direction, the fourth heat exchange part is arranged on the other side of the plurality of first heat exchange parts in the second direction/the second direction, therefore, a position relationship among the second heat exchange part, the third heat exchange part, and the fourth heat exchange part to the first heat exchange parts is limited, a layout of the first heat exchange tube is further limited, the structures of the first heat exchange tubes are simplified, and the convenience for processing and manufacturing is ensured.

In some embodiments, the second heat exchange section also includes a fifth heat exchange part; and the fifth heat exchange part extends along a peripheral edge of a fourth side of the first heat exchange section, and seals at least part of an opening of the U-shaped area formed by the second heat exchange part, the third heat exchange part, and the fourth heat exchange part.

In the above technical solution, by arranging the fifth heat exchange part, the second heat exchange section can perform heat exchange on the peripheral edges of the four sides of an assembly that is formed by all the battery cells, thus, the peripheral edges of the four sides of the assembly that is formed by all the battery cells can be subjected to heat exchange by the second heat exchange section of one first heat exchange tube, the heat exchange effect of the peripheral edges of the four sides of the battery is improved, and the temperature uniformity of the battery is improved.

In some embodiments, the first heat exchange member further includes second heat exchange tubes; the second heat exchange tubes and the first heat exchange tubes are arranged on the same side of the battery cells; at least part of the second heat exchange tubes are arranged in the U-shaped areas of the first heat exchange tubes in a bent way; and the second heat exchange tubes and the first heat exchange tubes have the same or different bending structures.

In the above technical solution, by arranging the second heat exchange tubes, the diversity of the heat exchange flow channels of the first heat exchange member can be increased, so that the arrangement of the heat exchange flow channels is more flexible, the heat exchange effect of the first heat exchange member can be further improved, and the temperature uniformity of the battery is improved.

In some embodiments, the second heat exchange tubes include U-shaped areas having the same structure as the first heat exchange tubes, and at least part of the first heat exchange tubes are arranged in the U-shaped areas of the second heat exchange tubes.

In the above technical solution, at least part of the first heat exchange tubes are arranged in the U-shaped areas of the second heat exchange tubes, thus the first heat exchange tubes and the second heat exchange tubes can be arranged in a mutually winding way, the winding mode of the plurality of heat exchange tubes can be arranged according to the heat exchange demands of each part of the battery assembly, furthermore, the heat exchange effect of the first heat exchange member is further improved, and the temperature uniformity of the battery is improved.

In some embodiments, each second heat exchange tube includes a third heat exchange section and a fourth heat exchange section which are connected in a bent way, the third heat exchange section and the fourth heat exchange section are respectively bent to form U-shaped areas, the third heat exchange section is arranged in the U-shaped area of the fourth heat exchange section, and at least one part of the first heat exchange section of each first heat exchange tube is arranged in the U-shaped area of the third heat exchange section.

In the above technical solution, at least part of the first heat exchange sections of the first heat exchange tubes are arranged in the U-shaped areas of the third heat exchange sections, at least part of the first heat exchange sections of the first heat exchange tubes are also arranged in the U-shaped areas of the fourth heat exchange sections, thus the winding arrangement of the first heat exchange tubes and the second heat exchange tubes is conveniently simplified on the premise that the first heat exchange tube and the second heat exchange tube are arranged in the mutually winding way, moreover, the heat exchange effect is further improved, and the temperature uniformity of the battery is improved.

In some embodiments, each second heat exchange tube also includes a fifth heat exchange section; the fifth heat exchange section includes a plurality of fifth heat exchange parts and second bending parts; the plurality of fifth heat exchange parts are arranged at intervals along a first direction; each fifth heat exchange part extends along a second direction; each second bending part is in an arc shape and is connected between two adjacent fifth heat exchange parts in a bent way, so that the plurality of fifth heat exchange parts are sequentially connected; the second direction and the first direction are arranged by an included angle; the fifth heat exchange sections are arranged between the third heat exchange sections and the fourth heat exchange sections, and/or, the fifth heat exchange sections are arranged between the third heat exchange sections and the corresponding ports.

In the above technical solution, by arranging the fifth heat exchange sections, the heat exchange area of the second heat exchange tubes is further increased, thus the heat exchange effect of the second heat exchange tubes is improved, and moreover, the temperature control to the internal battery cell is facilitated; and the arrangement of the fifth heat exchange sections does not affect the mutual winding between the first heat exchange tubes and the second heat exchange tubes.

In some embodiments, the first heat exchange member further includes a third heat exchange tube, and at least part of the third heat exchange tube is arranged in the U-shaped area of each second heat exchange tube in a bent way.

In the above technical solution, at least part of the third heat exchange tubes are arranged in the U-shaped areas of the second heat exchange tubes in a bent way, so that good temperature control to the internal battery cells is further achieved, the temperature distribution in the whole battery is improved, and the temperature uniformity of the battery is improved.

In some embodiments, the fixed beam is constructed to be the first expansion beam and includes a beam body which defines a cavity, and a reinforcement partition plate which is arranged in the cavity and is provided with a plurality of connecting parts arranged at intervals; the plurality of connecting parts include a first connecting part and a second connecting part, the first connecting part and the second connecting part are respectively connected to two opposite side walls of the beam body so that the cavity is divided to a plurality of chambers by the reinforcement partition plate; and the first connecting part and the second connecting part are arranged in a staggered way.

In the above technical solution, the first expansion beam includes the beam body and the reinforcement partition plate, the reinforcement partition plate is arranged in the cavity and divides the cavity of the beam body into the plurality of chambers, so that the reinforcement partition plate has certain support and reinforcement effects on two opposite sides of the beam body, the structural strength, bearing capability and structural stability of the first expansion beam can be favorably improved, and the use reliability of the first expansion beam is improved.

In some embodiments, the beam body includes a first plate body and a second plate body which are oppositely arranged; the first plate body and the second plate body are connected and jointly define a cavity; the reinforcement partition plate is arranged between the first plate body and the second plate body and is provided with a third connecting part; and the third connecting part is clamped between the first plate body and the second plate body and is connected to the first plate body and the second plate body.

In the above technical solution, the beam body includes the first plate body and the second plate body, and the reinforcement partition plate is arranged between the first plate body and the second plate body, thus the reinforcement partition plate is connected to the first plate body through the first connecting part and the third connecting part and is also connected to the second plate body through the second connecting part and the third connecting part; and the expansion beam is simple in structure and convenient to assemble and has good structural stability.

In some embodiments, the battery further includes a second expansion beam which is arranged at an interval with the first expansion beam, the battery cells are arranged between the first expansion beam and the second expansion beam, a third fixing member is arranged in the cavity of the first expansion beam, and a fourth fixing member is arranged in the cavity of the second expansion beam; and the battery further includes a pull rope, and the pull rope penetrates through the corresponding cavity and is connected to the third fixing member and the fourth fixing member.

In the above technical solution, the pull rope is connected to the third fixing member and the fourth fixing member, so that when the battery cells between the first expansion beam and the second expansion beam are expanded and deformed, the pull rope can apply acting force to the first expansion beam and the second expansion beam to resist the expansion force of the battery cells; and moreover, the third fixing member and the fourth fixing member are arranged in the cavities of the corresponding expansion beams, so even if at least one of the third fixing member and the fourth fixing member is in failure connection with the corresponding expansion beam, the at least one of the third fixing member and the fourth fixing member can be limited in the cavity of the corresponding expansion beam, thus the risk that the at least one of the third fixing member and the fourth fixing member is separated from the corresponding expansion beam to cause failure of the pull rope is reduced.

In some embodiments, the box includes a first box body, the first box body is an integrated punch forming member and includes a bottom wall and an enclosure, the enclosure is arranged around the bottom wall, the fixed beam is connected to the bottom wall and the enclosure, and the first heat exchange member is arranged on at least one of the bottom wall and the enclosure.

In the above technical solution, the first box body including the bottom wall and the enclosure is arranged to be the integrated punch forming part, thus, the first box body is convenient to mold, the cost of the first box body is favorably reduced, and the first box body has high structural strength; and meanwhile, the sealing between the bottom wall and the enclosure is achieved by the structure of the first box body, the sealing performance of the bottom of the first box body is improved, so that a plurality of connecting members (such as bolts) for achieving sealing of the bottom of the first box body in the box can be saved, the connection process for the bottom wall and the enclosure is saved, and the assembling efficiency of the box is favorably improved.

In some embodiments, the box is provided with a top wall, the bottom wall and the enclosure, the enclosure is arranged between the top wall and the bottom wall, and the first heat exchange member is arranged on at least one of the top wall, the bottom wall and the enclosure.

In the above technical solution, the first heat exchange member is arranged on at least one of the top wall, the bottom wall and the enclosure, the number and the arrangement position of the first heat exchange member can be flexibly set according to actual demand, thus diversified design of the battery is conveniently achieved, and actual differentiation demand can be met.

In some embodiments, the fixed beam is constructed to be the first expansion beam and is abutted against the battery cells, the first heat exchange member is arranged on the top wall, and the first heat exchange member on the top wall is connected to the fixed beam.

In the above technical solution, the first heat exchange member arranged on the top wall is connected to the fixed beam, so that the first heat exchange member plays a certain role in restraining the fixed beam, and the bearing capability of the fixed beam is favorably improved.

In some embodiments, the battery also includes at least one of a second heat exchange member and a third heat exchange member; at least one of the second heat exchange member and the third heat exchange member is used for exchanging heat with the battery cells; the second heat exchange member is attached to the outside of the box; and the third heat exchange member is arranged between two adjacent battery cells.

In the above technical solution, the battery includes at least one of the second heat exchange member and the third heat exchange member, so that the temperature control capability of the heat exchange assembly on the battery cells is favorably improved, the heat management performance of the battery is improved, and meanwhile, temperature control on the battery cells is conveniently achieved by different heat transfer paths according to different heat exchange demands of the battery cells.

In a second aspect, the embodiment of the present application provides the electrical apparatus which includes the above battery.

In the above technical solution, the battery is adopted, which can improve the use reliability of the electrical apparatus.

### BRIEF DESCRIPTION OF THE DRAWINGS

These and other aspects and advantages of embodiments of the present application will become apparent and more readily appreciated from the following descriptions made with reference to the drawings. Where:
FIG. 1 is a schematic structural view of a vehicle according to some embodiments of the present application;
FIG. 2 is a structural explosion diagram of a battery provided by some embodiments of the present application;
FIG. 3 is a local schematic diagram of a battery provided by some embodiments of the present application;
FIG. 4 is another schematic diagram of a battery shown in FIG. 3;
FIG. 5 is a cross-sectional view along an E-E line in FIG. 4;
FIG. 6 is a cross-sectional view along an F-F line in FIG. 4;
FIG. 7 is a cross-sectional view along a G-G line in FIG. 4;
FIG. 8 is a schematic diagram of an assembling process of a first heat exchange member at a sectional position along a D-D line in FIG. 4;
FIG. 9 is a partial enlarged view of an assembling process of a first heat exchange member in FIG. 8;
FIG. 10 is a partial sectional view of a box provided by some embodiments of the present application;
FIG. 11 is a local schematic diagram of a battery provided by some embodiments of the present application;
FIG. 12 is a front view of a bearing member shown in FIG. 11;
FIG. 13 is a top view of a bearing member shown in FIG. 12;
FIG. 14 is a sectional view of an H-H line in FIG. 12;
FIG. 15 is a side view of a bearing member shown in FIG. 12;
FIG. 16 is a local schematic diagram of a battery provided by some embodiments of the present application;
FIG. 17 is an exploded view of a battery shown in FIG. 16;
FIG. 18 is a cross-sectional view of a battery shown in FIG. 16;
FIG. 19 is an enlarged view of a part A as circled in FIG. 18;
FIG. 20 is a local schematic diagram of a battery provided by some embodiments of the present application;
FIG. 21 is a sectional view along a B-B line in FIG. 20;
FIG. 22 is an enlarged view of a part C as circled in FIG. 21;
FIG. 23 is a schematic diagram of a first heat exchange member provided by some embodiments of the present application;
FIG. 24 is a schematic diagram of a first heat exchange member provided by some embodiments of the present application;
FIG. 25 is a schematic diagram of a first heat exchange member provided by some embodiments of the present application;
FIG. 26 is a schematic diagram of a first heat exchange member provided by some embodiments of the present application;
FIG. 27 is a schematic diagram of a first heat exchange member provided by some embodiments of the present application;
FIG. 28 is a local schematic diagram of a battery provided by some embodiments of the present application; and
FIG. 29 is a schematic diagram of a third heat exchange member and a battery cell provided by some embodiments of the present application;

### DETAILED DESCRIPTION

In order to make the objects, technical solutions and advantages of embodiments of the present application clearer, the technical solutions in the embodiments of the present application will be clearly described below with reference to the drawings for the embodiments of the present application. Apparently, the described embodiments are some of, rather than all of, the embodiments of the present application. All other embodiments obtained by those of ordinary skill in the art based on the embodiments in the present application without any creative effort shall fall within the scope of protection of the present application.

Unless otherwise defined, all technical and scientific terms used in the present application have the same meanings as those commonly understood by those skilled in the art to which the present application belongs. The terms used in the specification of the present application are merely for the purpose of describing specific embodiments, but are not intended to limit the present application. The terms "include" and "have" and any variations thereof in the specification and the claims of the present application as well as the above description of the drawings are intended to cover non-exclusive inclusions. The terms "first," "second," and the like in the specification and the claims of the present application as well as the above drawings are used to distinguish different objects, rather than to describe a specific order or primary-secondary relationship.

Reference in the present application to an "embodiment" means that a particular feature, structure, or characteristic described in connection with the embodiment can be included in at least one embodiment of the present application. The appearances of the phrase in various places in the specification neither necessarily refer to a same embodiment, nor are independent or alternative embodiments mutually exclusive with other embodiments.

In the present application, the term "and/or" is only an association relationship for describing associated objects, indicating that three relationships may exist. For example, A and/or B may represent three situations: A exists alone, both A and B exist, and B exists alone. In addition, the character "/" in the present application generally means that the associated objects before and after it are in an "or" relationship.

In the embodiments of the present application, the same reference numerals denote the same components, and for the sake of brevity, detailed descriptions of the same components are omitted in different embodiments. It is to be understood that the thickness, length, width and other dimensions of various components in the embodiments of the present application shown in the accompanying drawings, as well as the overall thickness, length, width and other dimensions of an integrated apparatus, are for illustrative purposes only, and should not constitute any limitation to the present application.

The term "a plurality of" in the present application refers to more than two inclusive.

In the present application, the battery cell may include a lithium-ion secondary battery, a lithium-ion primary battery, a lithium-sulfur battery, a sodium-lithium-ion battery, a sodium-ion battery or a magnesium-ion battery, etc., which are not limited in these embodiments of the present application. The battery cell may be in a cylindrical shape, a flat shape, a cuboid shape or another shape, which is also not limited in the embodiments of the present application. Battery cells are generally divided into three kinds according to packaging manners: cylindrical battery cells, square battery cells, and pouch cells. The embodiments of the present application do not limit this.

A battery mentioned in the embodiments of the present application refers to a single physical module including a plurality of battery cells to provide a higher voltage and capacity. For example, the battery mentioned in the present application may be a battery module, a battery pack, or the like. The battery module generally includes a plurality of battery cells. The battery generally includes a box for packaging a plurality of battery cells or a plurality of battery modules, and the box can prevent liquid or other foreign matters from influencing charging or discharging of the battery cells; and certainly, the battery also can not include the box.

By way of example, each battery cell generally includes a shell, a cell assembly, and an electrolyte solution; the shell is configured to accommodate the battery cell assembly and the electrolyte solution; and at least one positive electrode post terminal and at least one negative electrode post terminal are arranged on the shell. The battery cell assembly includes one or more electrode assemblies, and each electrode assembly is formed by stacking or winding a positive electrode plate, a negative electrode plate, and a separator.

The positive electrode plate usually includes a positive electrode current collector and a positive electrode active material layer. The positive electrode active material layer is coated on the positive electrode current collector directly or indirectly. The positive electrode current collector not coated with the positive electrode active material layer protrudes out of the positive electrode current collector coated with the positive electrode active material layer, and the positive electrode current collector not coated with the positive electrode active material layer serves as a positive tab. A plurality of positive tabs are stacked together and are electrically connected to the positive electrode terminal post. For example, the plurality of stacked positive tabs can be directly welded to the positive electrode terminal post to form an electrical connection. Alternatively, the cell assembly may further include a positive electrode adapter plate. The plurality of stacked positive tabs are welded to one end of the positive electrode adapter plate, and the other end of the positive electrode adapter plate is welded to the positive electrode terminal post, to form an electrical connection between the positive tabs and the positive electrode terminal post.

The negative electrode plate includes a negative electrode current collector and a negative electrode active material layer. The negative electrode active material layer is coated on the surface of the negative electrode current collector. The negative electrode current collector not coated with the negative electrode active material layer protrudes out of the negative electrode current collector coated with the negative electrode active material layer, and the negative electrode current collector not coated with the negative electrode active material layer serves as a negative tab. A plurality of negative tabs are stacked together and are electrically connected to the negative electrode terminal post. For example, the plurality of stacked negative tabs can be directly welded to the negative electrode terminal post to form an electrical connection. Alternatively, the cell assembly may further include a negative electrode adapter plate. The plurality of stacked negative tabs are welded to one end of the negative electrode adapter plate, and the other end of the negative electrode adapter plate is welded to the negative electrode terminal post, to form an electrical connection between the negative tabs and the negative electrode terminal post. A material of the separator is not limited, and may be polypropylene, polyethylene, or the like.

In recent years, new energy vehicles have made significant advancements. In the field of electric vehicles, batteries, as the sources of power for electric vehicles, play an irreplaceable important role. The batteries, as a core part of a new energy automobile, have relatively high requirements on reliability.

In the related technology, the battery includes a plurality of battery cells, the temperature of the battery cells is generally regulated and controlled by heat exchange members, and heat exchange media are generally introduced into the heat exchange members; however, the risk of leakage of the heat exchange media is easily caused at connector positions of the heat exchange members, and the leaked heat exchange media easily cause a certain influence on the battery cells, influencing the performance of the battery.

In view of above, in order to improve the reliability of the battery, the battery provided includes a box, a fixed beam, the battery cells and a first heat exchange member; the fixed beam is arranged in the box and divides an internal space of the box into a first chamber and a second chamber; an avoiding space communicating with the first chamber and the second chamber is formed in the fixed beam and/or the box; the battery cells are arranged in the box and are located in the first chamber; the first heat exchange member is arranged in the box and is located between the battery cells and the box; at least one heat exchange flow channel is formed in the first heat exchange member that includes a heat exchange part and a connecting part; the heat exchange part is located in the first chamber and is used for exchanging heat with the battery cells; a port of the heat exchange flow channel is formed in the connecting part; and the connecting part penetrates through the avoiding space from the heat exchange part and extends to the second chamber, so that the port of the heat exchange flow channel is located in the second chamber.

In the above technical solution, the avoiding space is formed in the fixed beam and the connecting part penetrates through the avoiding space from the heat exchange part and extends to the second chamber, so as to locate the port of the heat exchange flow channel in the second chamber, therefore, the assembling of the first heat exchange member and the fixed beam is facilitated, the connecting part of the first heat exchange member can extend to the second chamber without greatly bending around the fixed beam, and the structure of the first heat exchange member is simplified; moreover, the avoiding space is arranged, thus the port of the heat exchange flow channel can be located in the second chamber, namely, the port of the heat exchange flow channel and the battery cell are separated by the fixed beam so as to be located in different chambers, the box provides a proper arrangement space for communication of the first heat exchange member and other components; and meanwhile, even if a heat exchange medium leaks at the port position of the first heat exchange member, the leaked heat exchange medium does not easily flow to the position of the battery cell at the first time, thus the influence of the leakage of the heat exchange medium at the port position of the first heat exchange member on the battery cell is reduced, and the use reliability of the battery is improved.

An embodiment of the present application provides an electrical device that uses the disclosed battery as a power source, and the electrical device may be but not limited to a mobile phone, a tablet personal computer, a laptop computer, an electric toy, an electric tool, a battery car, an electric vehicle, a ship, a spacecraft, and the like. The electric toys can include stationary or mobile electric toys, such as game consoles, electric toy cars, electric toy ships, and electric toy planes. The spacecraft can include airplanes, rockets, space shuttles, and spacecraft, etc. The electric tools include metal-cutting electric tools, grinding electric tools, assembly electric tools, and electric tools for railways, such as electric drills, electric grinders, electric wrenches, electric screwdrivers, electric hammers, impact drills, concrete vibrators, and electric planers.

In the following embodiments, for the sake of convenience, a vehicle is used as an example of the electrical apparatus to describe and the structure of the electrical apparatus and battery in present application in detail.

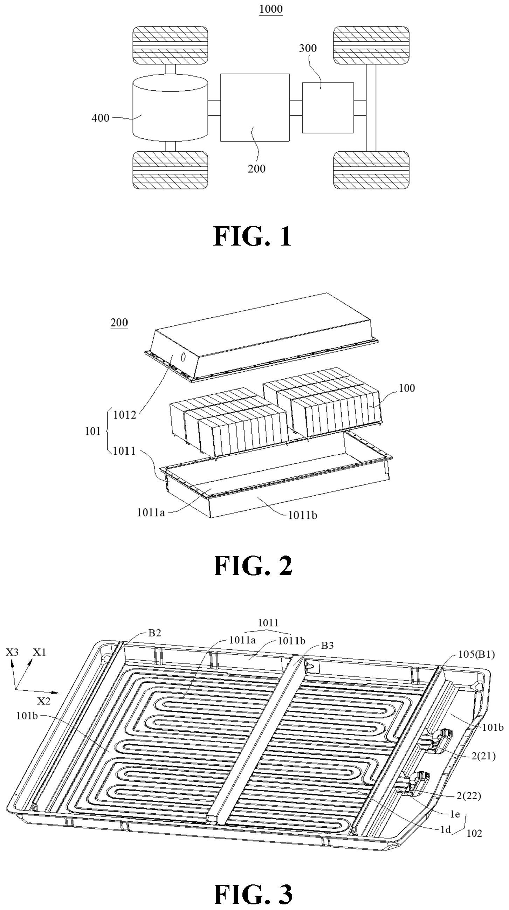

With reference to FIG. 1, FIG. 1 is a schematic structural diagram of a vehicle serving as an electrical apparatus 1000 provided by some embodiments of the present application. The vehicle may be a fuel vehicle, a gas vehicle, or a new energy vehicle, and the new energy vehicle may be a battery electric vehicle, a hybrid electric vehicle, an extended range vehicle, or the like. A battery 200 is arranged in the vehicle. The battery 200 may be arranged at a bottom or head or tail of the vehicle. The battery 200 may be configured to supply power the vehicle. For example, the battery 200 may be used as an operating power source of the vehicle. The vehicle may further include a controller 300 and a motor 400. The controller 300 is configured to control the battery 200 to supply power to the motor 400, for example, to meet a demand for working power during starting, navigation, and driving of the vehicle. In some embodiments of the present application, the battery 200 may be used not only as an operating power source of the vehicle, but also as a driving power source of the vehicle, replacing or partially replacing fuel or natural gas to provide driving power for the vehicle.

Referring to FIG. 2, FIG. 2 is an exploded structural view of a battery cell 100 used in a battery 200 according to some embodiments of the present application. The battery 200 includes a box 101 and a plurality of battery cells 100, and the battery cells 100 are accommodated in the box 101. The box 101 is configured to provide an assembling space for the battery cells, and the box 101 can be of various structures. In some embodiments, the box 101 may include a first box body 1011 and a second box body 1012 which are mutually covered and jointly define an accommodating space used for accommodating a battery cell. The second box body 1012 can be of a hollow structure with one end opened; the first box body 1011 can be of a plate-shaped structure, and covers the open side of the second box body 1012, so that the first box body 1011 and the second box body 1012 jointly define the accommodating space; or, each of the first box body 1011 and the second box body 1012 can also be of a hollow structure with one side opened, as shown in FIG. 2; and the open side of the first box body 1011 covers the open side of the second box body 1012. Definitely, the box 101 formed by the first box body 1011 and the second box body 1012 can be in various shapes, such as a cylinder or a cuboid.

In the battery 200, the plurality of battery cells 100 can be connected in series or in parallel or in series-parallel, and the series-parallel connection refers to that the plurality of battery cells 100 are connected in series and in parallel. The plurality of battery cells 100 can be directly connected in series or in parallel or in series-parallel, and then the whole body formed by the plurality of battery cells 100 is accommodated in the box body 101; or, the battery 200 can also be that the plurality of battery cells 100 are connected in series or in parallel or in series-parallel to obtain a battery module form, and then a plurality of battery modules are connected in series or in parallel or in series-parallel to form the whole body that is accommodated in the box 101. The battery 200 can also include other structures, for example, the battery 200 can also include a busbar for realizing electric welding among the plurality of battery cells 100.

With reference to FIG.3, any two of a first direction X1, a second direction X2, and a third direction X3 intersect, and further, any two of the first direction X1, the second direction X2, and the third direction X3 are vertical to each other.

With reference to FIG. 3 to FIG. 5, in the embodiment of the present application, the battery 200 includes a box 101, a fixed beam 105, and battery cells 100; the fixed beam 105 is arranged in the box 101 and divides an internal space of the box 101 into a first chamber 101a and a second chamber 101b; and the battery cells 100 are arranged in the box 101 and are located in the first chamber 101a. The battery cells 100 are arranged at the side of the fixed beam 105 deviating from the second chamber 101b, the battery cells 100 are not needed to be arranged in the second chamber 101b, thus a certain arrangement space is conveniently provided for other components, and for example, the second chamber 101b can be used for arranging a management system, a high-voltage box and the like of the battery 200.

With reference to FIG. 3, the battery 200 further includes a first heat exchange member 102; the first heat exchange member 102 is arranged in the box 101 and is located between the battery cells 100 and the box 101; at least one heat exchange flow channel 10 is formed in the first heat exchange member 102; the first heat exchange member 102 includes a heat exchange part 1d and a connecting part 1e; the heat exchange part 1d is located in the first chamber 101a and is used for exchanging heat with the battery cells 100; and ports 11 of the heat exchange flow channels 10 are formed in the connecting part 1e.

Each heat exchange flow channel 10 is provided with two ports 11, the connecting part 1e is corresponding to a plurality of ports 11, and one of the two ports 11 of each heat exchange flow channel 10 is used for liquid intake, and the other one is used for liquid outlet. For example, for a single heat exchange flow channel 10, a heat exchange medium flows into the heat exchange flow channel 10 from one port 11 of the heat exchange flow channel 10 and exchanges heat with the battery cells 100 when flowing through the flow channel in the heat exchange part 1d, thus the temperature of the battery cells 100 is regulated, and the heat exchange medium after heat exchange is discharged from the other port 11 of the heat exchange flow channel 10; and the form of the heat exchange medium is not specifically limited and can be a gas state, a liquid state or a gas-liquid mixed state.

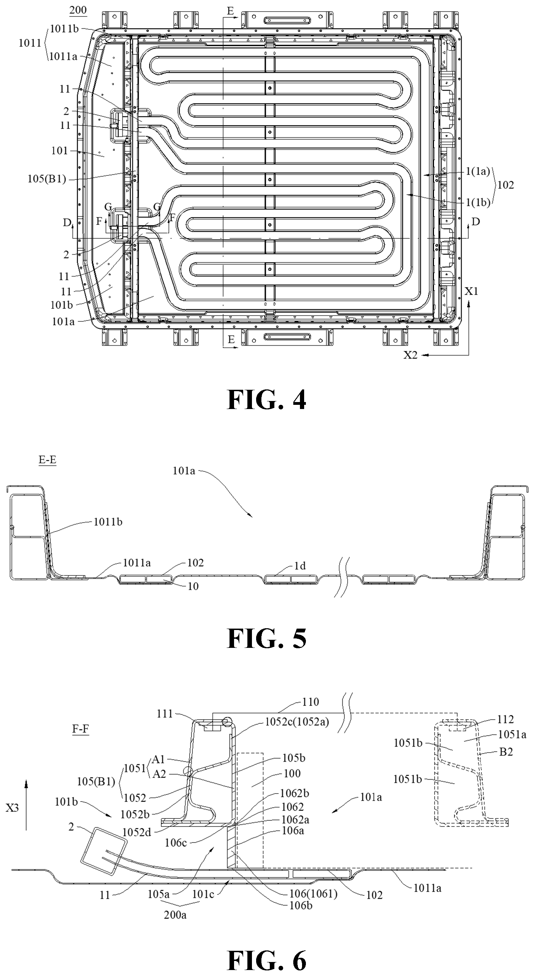

With reference to FIG. 4 and FIG. 6, an avoiding space 200a are formed in the fixed beam 105 and/or the box 101 and are in communication with the first chamber 101a and the second chamber 101b; the side of the avoiding space 200a facing the first chamber 101a is opened, and the side of the avoiding space 200a facing the second chamber 101b is opened; the connecting part 1e penetrates through the avoiding space 200a from the heat exchange part 1d and extends to the second chamber 101b, so that the ports 11 of the heat exchange flow channels 10 are located in the second chamber 101b; and therefore, the ports 11 of the heat exchange flow channels 10 can be separated from all battery cells 100 by the fixed beam 105.

It is to be understood that the avoiding space 200a can be independently defined by the fixed beam 105, or can be independently defined by the box 101, or can be formed by the fixed beam 105 and the box 101 in matching. For example, when the avoiding space 200a is independently defined by the fixed beam 105, the specific position of the avoiding space 200a can be set according to actual requirements, for example, the side of the avoiding space 200a facing the first heat exchange member 102 is opened, the wall of the box 101 can block the opened side of the avoiding space 200a, and for another example, the avoiding space 200a is completely separated from the wall of the box 101 corresponding to the first heat exchange member 102; and for yet another example, when the avoiding space 200a is independently defined by the box 101, the wall, provided with the first heat exchange member 102, of the box 101 can form a second concave part 101c described in the following, so as to define the avoiding space 200a; and the fixed beam 105 can be arranged on the opened side of the avoiding space 200a, but not limited thereto.

In the above technical solution, the avoiding space 200a is formed in the fixed beam 105 and the connecting part 1e penetrates through the avoiding space 200a from the heat exchange part 1d and extends to the second chamber 101b, so as to locate the port 11 of the heat exchange flow channel 10 in the second chamber 101b, therefore, the assembling of the first heat exchange member 102 and the fixed beam 105 is facilitated, the connecting part 1e of the first heat exchange member 102 can extend to the second chamber 101b without greatly bending around the fixed beam 105, and the structure of the first heat exchange member 102 is simplified; moreover, the avoiding space 200a is arranged, thus the port 11 of the heat exchange flow channel 10 can be located in the second chamber 101b, namely, the port 11 of the heat exchange flow channel 10 and the battery cells 100 are separated by the fixed beam 105 so as to be located in different chambers, the box 101 provides a proper arrangement space for communication of the first heat exchange member 102 and other components; and meanwhile, even if a heat exchange medium leaks at the port 11 position of the first heat exchange member 102, the leaked heat exchange medium does not easily flow to the position of the battery cells 100 at the first time, thus the influence of the leakage of the heat exchange medium at the port 11 position of the first heat exchange member 102 on the battery cells 100 is reduced, and the use reliability of the battery 200 is improved.

In addition, in the embodiment of the present application, the first heat exchange member 102 and any one of a second heat exchange member 103 and a third heat exchange member 104 described below can be configured to be only used for cooling the battery cells 100, or, only used for heating the battery cells 100, or, cooling and heating the battery cells 100. Two ports 11 of a heat exchange flow channel 10 are a first port 11a and a second port 11b respectively; when the first port 11a is used for liquid intake, the second port 11b is used for liquid output, or, when the second port 11b is used for liquid intake, the first port 11a is used for liquid output; for the single heat exchange flow channel 10, the heat exchange flow channel 10 is configured as that one of the two ports 11 is always used for liquid intake and the other one is always used for liquid output; or each port 11 can be switched between liquid intake and liquid output.

It is to be noted that in the embodiment of the present application, the connecting part 1e penetrates through the avoiding space 200a from the heat exchange part 1d and extends to the second chamber 101b, which can be understood as follows: 1, the connecting part 1e can extend to the second chamber 101b from the first chamber 101a through the avoiding space 200a; and 2, the avoiding space 200a is only used for accommodating and avoiding a part of the connecting part 1e, and does not allow the connecting part 1e to extend to the second chamber 101b from the first chamber 101a. For the first solution, the requirement on the assembly sequence of the battery 200 is relatively low, for example, the box 101 and the fixed beam 105 can be assembled, and then the first heat exchange member 102 is mounted on the box 101, or the box 101 and the first heat exchange member 102 are assembled, and then the fixed beam 105 is mounted on the box 101; and for the second solution, the box 101 and the first heat exchange member 102 can be assembled, and then the fixed beam 105 is mounted on the box 101.

In the embodiment of the present application, the cross section shape of the avoiding space 200a is not specifically limited, and the cross section of the avoiding space 200a is perpendicular to the direction from the first chamber 101a to the second chamber 101b (for example, the cross section of the avoiding space 200a is perpendicular to a second direction X2 in FIG. 3); for example, a first concave part 105a is formed in the fixed beam 105, the first concave part 105a defines at least part of the avoiding space 200a; the first heat exchange member 102 is arranged on the wall of the box 101, the cross section shape of the first concave part 105a is a trapezoid, the trapezoid has a top edge, a bottom edge, and two waist edges connected to the top edge and the bottom edge, and an included angle between each waist edge and the top edge is an obtuse angle; the side of the first concave part 105a facing the wall of the box 101 corresponds to the bottom edge of the trapezoid; therefore, it is needed to process the top edge and the waist edges of the trapezoid on the fixed beam 105 in the forming process of the first concave part 105a; the included angle between the waist edges and the top edge is an obtuse angle, thus the forming of the first concave part 105a is facilitated, and particularly, when the structural part of the first concave part 105a corresponding to the fixed beam 105 includes at least one component and each component is an integrally punched forming member, the processing of the first concave part 105a is facilitated.

In some embodiments, the first chamber 101a can also be provided with other components, besides the battery cells 100. For example, the fixed beam 105 is constructed to be a first expansion beam B1, a second expansion beam B2 can also be arranged in the first chamber 101a, and all the battery cells 100 are clamped between the first expansion beam B1 and the second expansion beam B2; for another example, the fixed beam 105 is constructed to be the first expansion beam B1, the second expansion beam B2 and a third expansion beam B3 can also be arranged in the first chamber 101a, the third expansion beam B3 is located between the first expansion beam B1 and the second expansion beam B2, the battery cells 100 are arranged between the first expansion beam B1 and the third expansion beam B3, and the battery cells 100 are also arranged between the second expansion beam B2 and the third expansion beam B3.

It is to be noted that the fixed beam 105 can be constructed to be the expansion beam or other beam structures except the expansion beam in the box 101, such as a separation beam.

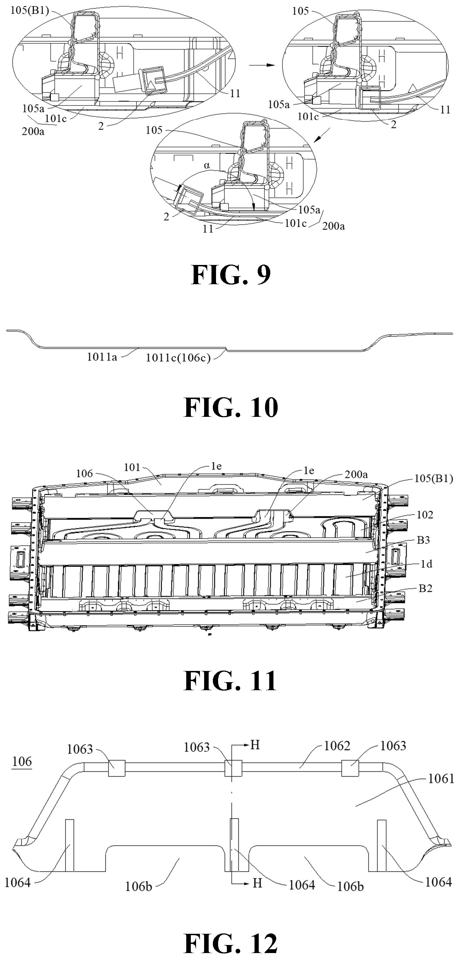

With reference to FIG. 6 and FIG. 9, in some embodiments, the fixed beam 105 is provided with a first concave part 105a, and/or, a wall of the box 101 is provided with a second concave part 101 c, and the first concave part 105a and/or the second concave part 101c are/is constructed to be the avoiding space 200a. When the fixed beam 105 is provided with the first concave part 105a, the first concave part 105a constructs at least part of the avoiding space 200 a; and when the wall of the box 101 is provided with the second concave part 101c, the second concave part 101c constructs at least part of the avoiding space 200a.

By way of example, the first heat exchange member 102 is arranged on the bottom wall 1011a of the box 101: the first concave part 105a which is upwards sunken is formed in the bottom of the fixed beam 105, and the side of the first concave part 105a facing the bottom wall 1011a of the box 101 is opened; and/or, the second concave part 101c which is downwards sunken is formed in the bottom wall 1011a of the box 101, and the top side of the second concave part 101c is opened. In other examples, the first heat exchange member 102 is arranged on the top wall of the box 101, the first concave part 105a is formed in the top of the first concave part 105a and is downwards sunken, and the side of the first concave part 105a facing the box 101 is opened; and the first heat exchange member 102 can also be arranged on an enclosure 1011b of the box 101, and the enclosure 1011b is arranged around the bottom wall 1011a and is connected between the bottom wall 1011a and the top wall of the box 101.

In the above technical solution, the first concave part 105a and/or a second concave part 101c are/is arranged to form the avoiding space 200a, and the avoiding space 200a is arranged between the box 101 and the fixed beam 105, thus the connecting part 1e that penetrates through the avoiding space 200a can be arranged closer to the box 101 and corresponds to the wall of the first heat exchange member 102, which is conducive to reducing the distance from the connecting part 1e to the heat exchange part 1d in a normal direction of the wall of the box 101, moreover, the connecting part 1e and the heat exchange part 1d are even favorably prevented from being bent at a connection position, the structure of the first heat exchange member 102 is simplified, and the processing is convenient.

It is to be understood that when the avoiding space 200a is constructed by the first concave part 105a and the second concave part 101c, a larger space is conveniently provided for arrangement of the connecting part 1e; for the battery 200, when the box 101 and the fixed beam 105 are arranged, and then the first heat exchange member 102 is arranged on the box 101, a larger penetrating space can be provided for the assembling of the connecting part 1e between the box 101 and the fixed beam 105, thus the connecting part 1e is conveniently and rapidly aligned to the avoiding space 200a between the box 101 and the beam, and the assembling convenience of the first connection piece is favorably improved; and moreover, the size of at least one of the first concave part 105a and the second concave part 101c can be set to be smaller, thus the weakening effect of the first concave part 105a on the fixed beam 105 is favorably reduced, and/or, the formation difficulty of the second concave part 101c is reduced. Moreover, with the second concave part 101c, the sealing performance of the structure of the box 101 cannot be affected.

It is to be noted that the terms "top", "bottom", "up", "down", and other directional or positional relationships described here are based on the orientations or positional relationships shown in the accompanying drawings, they are used merely to facilitate the description of this application and to simplify the description, and they do not indicate or imply that the apparatus or components must have a specific orientation or be constructed and operated in a particular orientation, therefore, they should not be construed as limiting the present application. For example, in the embodiment shown in FIG. 2, the box 101 includes a first box body 1011 and a second box body 1012; the second box body 1012 is arranged at the top of the first box body 1011; a bottom wall 1011a of the box 101 can be formed on the first box body 1011; and a top wall of the box 101 can be formed on the second box body 1012. In actual use, the battery 200 can be positively arranged, the second box body 1012 is arranged at the top of the first box body 1011; or the battery 200 can be reversely arranged, and the second box body 1012 is arranged at the bottom of the first box body 1011.

With reference to FIG. 3 and FIG. 6, in some embodiments, the avoiding space 200a is configured to allow the connecting part 1e to pass through.

In the above technical solution, the avoiding space 200a is arranged to allow the connecting part 1e to pass through, namely, the avoiding space 200a allows the connecting part 1e to pass through, the connecting part 1e can extend to the second chamber 101b from the first chamber 101a through the avoiding space 200a, and when assembling the battery 200, an assembling mode of "assembling the box 101 and the fixed beam 105 and then mounting the first heat exchange member 102 on the box 101" can be selected; and this assembling mode is particularly applicable to arrangement of "after assembling the fixed beam 105 and the box 101, performing electrophoresis on the fixed beam and the box to form a protection film and then mounting the first heat exchange member 102", thereby improving the assembling convenience.

It is to be understood that when the material of the fixed beam 105 has certain corrosion resistance, the requirement for the assembling sequence of the box 101, the fixed beam 105, and the first heat exchange member 102 is low, the box 101 and the fixed beam 105 can be assembled, and then the first heat exchange member 102 is mounted on the box 101; or the box 101 and the first heat exchange member 102 can be assembled, and then the fixed beam 105 is mounted on the box 101; and when the material of the fixed beam 105 has poor corrosion resistance, the box 101 and the fixed beam 105 can be assembled, electrophoresis is performed on the fixed beam and the box, then a first mounting member is mounted on the box 101.

With reference to FIG. 6 to FIG. 9, in some embodiments, the part (hereinafter referred to as a first part) of the first heat exchange member 102 located in the first chamber 101a and the part (hereinafter referred to as a second part) located in the second chamber 101b are connected at an obtuse angle, that is, a bent connecting included angle α between the part of the first heat exchange member 102 located in the first chamber 101a and the part of the first heat exchange member 102 located in the second chamber 101b is an obtuse angle.

By way of example, the heat exchange part 1d of the first heat exchange member 102 can be constructed to be the first part, and a part of the connecting part 1e of the first heat exchange member 102 can be constructed to be the second part; or, a part of the connecting part 1e and the heat exchange part 1d are constructed to be the first part together, and the other part of the connecting part 1e can be constructed to be the second part.

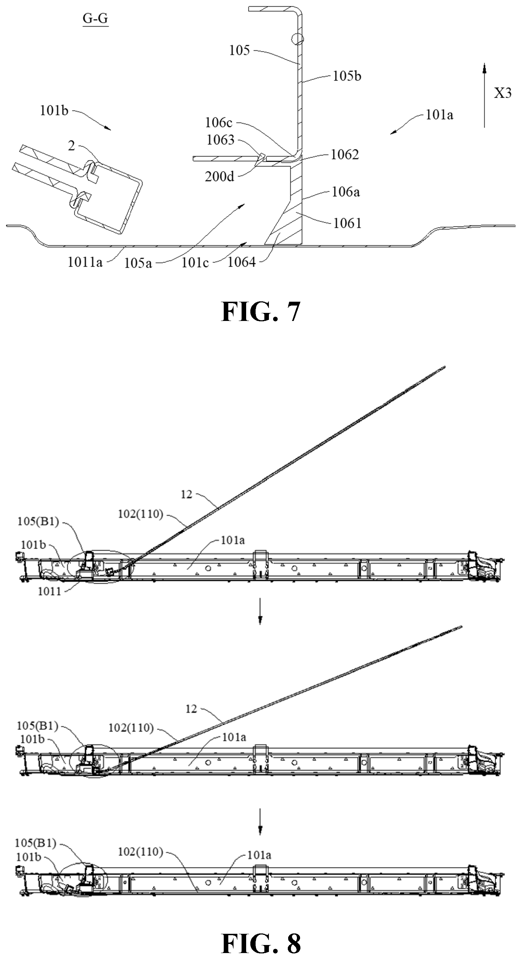

In the above technical solution, the parts of the first heat exchange member 102 located on two opposite sides of the fixed beam 105 are connected at the obtuse angle, thus the first part can be aligned to the avoiding space 200a firstly during the assembling process of the first heat exchange member 102, at the moment, the second part is approximately inclined, the inclination angle of the second part gradually decreases along with penetration of the first part until the first part penetrates through the avoiding space 200a to finish penetration of the first heat exchange member 102, therefore, the heat exchange part 1d of the first heat exchange member 102 can be attached to a corresponding wall of the box 101 at the moment, the penetration of the first heat exchange member 102 is facilitated, and the mounting convenience of the first heat exchange member 102 is improved; moreover, the assembling mode is particularly applicable to a condition that the heat exchange part 1d occupies larger space on the corresponding wall of the box 101, for example, the heat exchange part 1d is constructed as that the length of the first heat exchange member 102 is larger than or equal to that of the first chamber 101a in a direction (for example, the direction X2 in FIG. 8, the width direction of the fixed beam 105) from the first chamber 101a to the second chamber 101b, the first heat exchange member 102 cannot be directly arranged on the corresponding wall in the normal direction of the corresponding wall of the box 101 at the moment, the assembling mode in the above solution can be facilitated, smooth mounting of the first heat exchange member 102 is realized, and meanwhile, the heat exchange area of the heat exchange part 1d is increased.

Definitely, in the above solution, the battery 200 can be assembled in other ways, for example, the box 101 and the first heat exchange member 102 are assembled, and then the fixed beam 105 is mounted on the box 101.

In addition, in other embodiments of the present application, the part of the first heat exchange member 102 located in the first chamber 101a and the part located in the second chamber 101b can also be connected at a straight angle, that is, the included angle α is the straight angle, as shown in the figure.

With reference to FIG. 3, FIG. 4, and FIG. 6, in some embodiments, the battery 200 further includes a current collector 2, the current collector 2 is in communication with a port 11 of the connecting part 1e and is located in the second chamber 101b.

In the above technical solution, the current collector 2 is in communication with the ports 11, thus heat exchange media flow to heat exchange flow channels 10 through the current collector 2, and/or, the heat exchange media after heat exchange in the heat exchange flow channels 10 flow into the current collector 2 through the ports 11, thereby facilitating circular flowing of the heat exchange media; the current collector 2 is located in the second chamber 101b, so the communication positions of the current collector 2 and other components except the first heat exchange member 102 are also located in the second chamber 101b, therefore, even if the heat exchange media leak at the communication positions of the current collector 2 and other components, the heat exchange media which leak cannot easily flow to the first chamber 101a with the battery cells 100 at the first time, the influence of leakage of the heat exchange media at the current collector 2 on the battery cells 100 is reduced, and the use reliability of the battery 200 is improved.

With reference to FIG. 6, FIG. 8, and FIG. 9, in some embodiments, the avoiding space 200a is configured to allow the current collector 2 to pass through.

For example, after the fixed beam 105 and the box 101 are assembled, the first heat exchange member 102 and the current collector 2 are connected and assembled to the box 101, and the current collector 2 can move to the first chamber 101a from the first chamber 101a through the avoiding space 200a.

In the above technical solution, the avoiding space 200a is configured to allow the current collector 2 to pass through, the current collector 2 can move from the first chamber 101a to the second chamber 101b through the avoiding space 200a, thus an assembling mode of "assembling the box 101 and the fixed beam 105, and assembling the first heat exchange member 102 and the current collector 2, and then assembling the assembled first heat exchange member 102 and the current collector 2 to the box 101" can be selected during assembling the battery 200; and this assembling mode is particularly applicable to arrangement of "after assembling the fixed beam 105 and the box 101, performing electrophoresis on the fixed beam and the box to form the protection film and then mounting the first heat exchange member 102", which achieving the assembling convenience and protecting capability of the battery 200 at the same time.

It is to be understood that generally, on a plane perpendicular to the direction from the first chamber 101a to the second chamber 101b, an orthographic projection of the connection part 1e is arranged an outer contour range of the orthographic projection of the current collector 2, thus if the current collector 2 can pass through the avoiding space 200a between the box 101 and the fixed beam 105, the connection part 1e also can pass through the avoiding space 200a.

In some examples, the fixed beam 105 is provided with the first concave part 105a, the avoiding space 200a is formed in the first concave part 105a, the current collector 2 is allowed to pass through the first concave part 105a; or, the box 101 is provided with the second concave part 101c, the avoiding space 200a is formed in the second concave part 101c, the current collector 2 is allowed to pass through the second concave part 101c; or, the avoiding space 200a is formed by the first concave part 105a of the fixed beam 105 and the second concave part 101c of the box 101, and the current collector 2 can pass through a space formed by matching of the first concave part 105a and the second concave part 101c.

With reference to FIG. 3 and FIG. 4, in some embodiments, the connecting part 1e is provided with at least two ports 11; the current collector 2, the connecting part 1e, and the avoiding space 200a are in one-to-one correspondence; and the current collector 2 corresponds to at least two of the ports 11 of the first heat exchange member 102. It is to be understood that for a single current collector 2, the corresponding ports 11 can belong to the same heat exchange flow channel 10 and can also belong to different heat exchange flow channels 10.

The first heat exchange member 102 can include one or more connecting parts 1e, and a plurality of corresponding ports 11 of the single connecting part 1e can belong to the same heat exchange flow channel 10 and can also belong to different heat exchange flow channels 10.

The current collector 2 is in communication with and correspond to the plurality of ports 11 of the connecting part 1e, at the moment, the plurality of ports 11 corresponding to the current collector 2 can be used for liquid intake or liquid output, and the plurality of ports 11 corresponding to the current collector 2 can belong to different heat exchange flow channels 10 respectively; or, the current collector 2 divides the plurality of corresponding ports 11 of the connecting part 1e into a plurality of independent flow channels, at the moment, at least one of the plurality of ports 11 corresponding to the current collector 2 is used for liquid intake and at least the other one is used for liquid output, and the plurality of ports 11 corresponding to the current collector 2 can belong to the same heat exchange flow channel 10 and can also belong to different heat exchange flow channels 10.

It is to be understood that when the current collector 2 divides the corresponding ports 11 of the connecting part 1e into the independent flow channels, the current collector 2 defines the independent flow channels, and each flow channel can be correspondingly in communication with at least one port 11; by way of example, the current collector 2 defines two independent flow channels, namely a first flow channel and a second flow channel, the first flow channel is in communication with all the ports 11 used for liquid intake in the at least two ports 11, and the second flow channel is in communication with all the flow channels used for liquid output in the at least two ports 11; definitely, three flow channels can be defined in the current collector 2, in which, two flow channels are used for implementing liquid intake of the corresponding ports 11, and the rest flow channel is used for implementing liquid output of the corresponding ports 11.

In the above technical solution, the current collector 2 corresponds to the avoiding space 200a one by one, and the current collector 2 corresponds to the at least two ports 11, thus the avoiding space 200a can correspond to the at least two ports 11 on the premise of achieving liquid intake and liquid output of the heat exchange flow channels 10 by the current collector 2; and therefore, the quantity of the avoiding space 200a is favorably reduced, the processing procedure of the fixed beam 105 is simplified, and the processing of the fixed beam 105 is facilitated.

It is to be understood that when the current collector 2 corresponds to the avoiding space 200a one by one, the number, the arrangement spacing and the like of the current collectors 2 and the avoiding spaces 200a can be matched, thus the sum of the formation size of all the avoiding spaces 200a can be reduce on the premise of realizing smooth assembling of the current collectors 2, and the weakening effect on the fixed beam 105 caused by formation of the avoiding spaces 200a is reduced, and/or, the processing complexity degree on the box 101 caused by the formation of the avoiding spaces 200a is reduced.

With reference to FIG. 3, FIG. 4, and FIG. 17, in some embodiments, a plurality of heat exchange flow channels 10 are provided, two ports 11 of each heat exchange flow channel 10 are a first port 11a and a second port 11b respectively, the first port 11a is used for liquid intake, and the second port 11b is used for liquid output.

Two current collectors 2 are provided and are a first current collector 21 and a second current collector 22 respectively; first ports 11a of all the heat exchange flow channels 10 are in communication with the first current collector 21, the second ports 11b of all the heat exchange flow channels 10 are in communication with the second current collector 22, one of the first current collector 21 and the second current collector 22 is used for liquid intake, the other one is used for liquid output; and it is not needed to arrange a plurality of separated flow channels in each current collector 2, so that the structures of the current collectors 2 are simplified; and meanwhile, two ends of all heat exchange flow channels 10 are in communication with the first current collector 21 and the second current collector 22 respectively, so that the number of the current collectors 2 can be reduced to a certain extent.

Or, one current collector 2 is provided and has two flow channels which are separated and independently arranged; the first ports 11a of all heat exchange flow channels 10 are in communication with one flow channel, the second ports 11b of all the heat exchange flow channels 10 are in communication with the other flow channel, and therefore medium circulation in all the heat exchange flow channels 10 is achieved through one current collector 2, the number of the current collectors 2 is reduced, the number of the avoiding spaces 200a can be reduced, the processing difficulty is reduced, and the processing procedures are saved.

Definitely, in other embodiments, one heat exchange flow channel 10 can be provided, at the moment, one or two current collectors 2 can be provided, the specific arrangement is the same as the above solution, and will not be listed here.

In the above technical scheme, whether there is one or two collectors 2, it is convenient to circulate the media in all the heat exchange flow channels 10 through a small number of current collectors 2, the number of the avoiding spaces 200a can be reduced, the processing difficulty is reduced, and the processing procedures are saved.

With reference to FIG. 5, FIG. 6, and FIG. 11, in some embodiments, the fixed beam 105 is constructed to be a first expansion beam B1 and is provided with a first matching surface 105b abutting against the battery cells 100, and at the moment, the fixed beam 105 is configured to bear the expansion forces of the battery cells 100; the battery 200 further includes a bearing member 106, the bearing member 106 is arranged in the avoiding space 200a and is provided with a second matching surface 106a that is abutted against the battery cells 100; the first matching surface 105b is flush with the second matching surface 106a, for example, the first matching surface 105b and the second matching surface 106a can be located on the same plane; the bearing member 106 is provided with a notch 106b for avoiding the connecting part 1e; and the notch 106b penetrates through a peripheral side of the bearing member 106.

It is to be understood that the first matching surface 105b can make direct contact with the battery cells 100, or, the first matching surface 105b abuts against the battery cells 100 indirectly; similarly, the second matching surface 106a can make direct contact with the battery cells 100, or, the second matching surface 106a abuts against the battery cells 100 indirectly. One or more notches 106b can be formed in the bearing member 106, for example, the first heat exchange member 102 includes at least one heat exchange tube 1, one heat exchange flow channel 10 is defined in the first heat tube 1, the two ports 11 are formed in two end portions of the first heat tube 1, and the notches 106b are used for avoiding one or more end portions; and when the notches 106b are used for avoiding a plurality of end portions, the plurality of end portions can belong to the same heat exchange tube 1 and can also belong to different heat exchange tubes 1.

In the above technical solution, the bearing member 106 is arranged in the avoiding space 200a, and the second matching surface 106a of the bearing member 106 is flush with the first matching surface 105b of the fixed beam 105, thus the bearing member 106 and the fixed beam 105 can bear an expansion force of the battery cells 100 together, which is conducive to reducing the deformation difference of the battery cells 100 at the avoiding space 200a positions and other positions staggered with a first avoiding space 200a, reducing the risk of lithium precipitation that is easily caused by excessively large deformation difference of the battery cells 100 at different positions, reducing the risk of shell breakage and electrolyte leakage caused by non-uniform stress of the battery cells 100, and improving the use reliability of the battery 200; and moreover, the notch 106 penetrates through the peripheral side of the bearing member 106, the notch 106b can be used for avoiding the corresponding connecting part 1e, the bearing member 106 is also conveniently arranged in the avoiding space 200a after the first heat exchange member 102 and the fixed beam 105 are arranged, and therefore, the bearing member 106 is successfully arranged.

It is to be understood that the bearing member 106 can be respectively matched with the box 101 and the fixed beam 105 when the avoiding space 200a is located between the box 101 and the fixed beam 105.

With reference to FIG. 6 and FIG. 10, in some embodiments, a stop part 106c in abutting fit with the bearing member 106 is formed on at least one of the fixed beam 105 and the box 101 so as to limit the movement of the bearing member 106 in a direction from the first chamber 101b to the first chamber 101a. Similarly, it is to be understood that the stop part 106c is in direct contact fit with the bearing member 106, or the stop part 106c is in indirect abutting fit with the bearing member 106.

In the above technical solution, the stop part 106c is formed on at least one of the fixed beam 105 and the box 101 to limit the movement of the bearing member 106 in the direction from the first chamber 101a to the second chamber 101b, so that the reliable limitation to the bearing member 106 in the width direction (such as the second direction X2 in FIG. 3) of the fixed beam 105 is realized, meanwhile, the stop part 106c can resist the expansion force applied by the battery cells 100 to the bearing member 106, the bearing capacity of the bearing member 106 is favorably improved, the bearing member 106 stably bears the expansion force of the battery cells 100, and the probability that the bearing member 106 moves towards the second chamber 101b by the battery cells 100 is reduced; and if at least one of the fixed beam 105 and the box 101 is also fixedly connected to the bearing member 106 in other modes, such as at least one of the fixed beam 105 and the box 101 is bonded with the bearing member 106; and the above solution is favorable for reducing the acting force borne by at least one of the fixed beam 105 and the box 101 in other connection modes with the bearing member 106, and the arrangement reliability and stability of the bearing member 106 are favorably improved.

With reference to FIG. 6 and FIG. 10, in some embodiments, the stop part 106c is formed at the avoiding space 200a position on the side of the fixed beam 105 facing the first chamber 101a, namely, the stop part 106c is formed at the end, facing the first chamber 101a, of the part of the fixed beam 105 corresponding to the avoiding space 200a, for example, when the fixed beam 105 is provided with the first concave part 105a, the stop part 106c is formed at one end of the first concave part 105a facing the first chamber 101a; and/or, when the box 101 is provided with the second concave part 101c, the stop part 106c is formed at the end, facing the first chamber 101a, of the part of the fixed beam 105 corresponding to the second concave part 101c; and/or, a stop step 1011c that protrudes towards the fixed beam 105 is formed on the wall, provided with the first heat exchange member 102, of the box 101, and the stop step 1011c forms the stop part 106c.

In the above technical solution, the stop part 106c is formed at the position of an avoiding space 200a on the side of a fixed beam 105 facing the first chamber 101a, so that the stop part 106c is conveniently defined by the structure of the fixed beam 105 to achieve limitation to the bearing member 106, additional independent arrangement is not needed, and the structure of the fixed beam 105 is favorably simplified; moreover, the stop part 106c is arranged at the side of the fixed beam 105 facing the first chamber 101a, which is conveniently matched with the mounting mode of the bearing member 106 "matched with the avoiding space 200a along the direction from the first chamber 101a to the second chamber 101b", the stop part 106c cannot interfere with assembling of the bearing member 106, and the assembling convenience is favorably improved; the stop step 1011c protruding towards the fixed beam 105 is formed on the wall of the box 101, the stop step 1011c forms the stop part 106c, so that the stop part 106c is conveniently defined by the structure of the box 101 to achieve limitation to the bearing member 106, additional independent arrangement is not needed, the structure of the box 101 is favorably simplified, and moreover, the sealing performance of the structure of the box 101 cannot be affected by the stop step 1011c.

By way of example, the first concave part 105a of the fixed beam 105 is constructed to be at least part of the avoiding space 200a, the stop part 106c is formed at the end of the first concave part 105a facing the first chamber 101a, thus the matching area of the fixed beam 105 and the bearing member 106 is favorably expanded, and the arrangement reliability and the bearing capability of the bearing member 106 are further improved; and/or, the second concave part 101c is formed on the wall of the box 101 provided with a first heat exchange member 102, and the stop step 1011c is formed on the groove wall of the second concave part 101c.

With reference to FIG. 6, in some embodiments, on a cross section of the fixed beam 105, the stop part 106c on the fixed beam 105 is formed into an arc-shaped structure, and a cross section of the fixed beam 105 is vertical to a length direction of the fixed beam 105 (such as the first direction X1 in FIG. 3).

In the above technical solution, the stop part 106c arranged on the fixed beam 105 on the cross section of the fixed beam 105 forms the arc-shaped structure, so that the stop part 106c can limit the movement of the bearing member 106 and the part of the bearing member 106 matched with the stop part 106c can be avoided to a certain extent; moreover, the stop part 106c is located on the side of the fixed beam 105 facing the first chamber 101a, the situation that the bearing member 106 is easily protruded out of the first matching surface 105b towards the first chamber 101a due to matching with the stop part 106c is reduced, and the second matching surface 106a is flush with the first matching surface 105b. In addition, when the part of the fixed beam 105 corresponding to the stop part 106c is an integrally molded bent plate, the stop part 106c can be located at a bent position of the plate, so that the stop part 106c can be directly molded in a bent plate molding process, and furthermore, machining procedures of the fixed beam 105 are saved, the machining difficulty is reduced and the production efficiency is improved.

With reference to FIG. 6 and FIG. 7, in some embodiments, the bearing member 106 includes a plate body part 1061 and a matching part 1062; the second matching surface 106a is formed on the surface of one side of the plate body part 1061 in the thickness direction; the second matching surface 106a is located on the side of the plate body part 1061 facing the first chamber 101; the notch 106b penetrates through two sides of the plate body part 1061 in the thickness direction; the matching part 1062 is formed at the outer edge of the plate body part 1061 and is in abutting fit with the fixed beam 105 to limit the movement of the bearing member 106 along the direction from the first chamber 101a to the second chamber 101b, for example, the matching part 1062 is in abutting fit with the stop part 106c on the fixed beam 105.

In the above technical solution, the bearing member 106 includes the plate body part 1061 and the matching part 1062, the plate body part 1061 is convenient to provide a relatively large-area and relatively flat second matching surface 106a, thus the shielding capability of the bearing member 106 on the avoiding space 200a is improved; the bearing member 106 can be limited by the matching part 1062, the bearing member 106 is reliably mounted, so that the bearing member 106 has a certain capability of bearing expansion force of the battery cells 100, and meanwhile, the bearing member 106 is simple in structure and is convenient to implement; and moreover, the matching part 1062 is in abutting fit with the fixed beam 105, if the fixed beam 105 is subjected to certain deformation by the battery cells 100 to cause that the first matching surface 105b deviates from an original position and/or an original posture, the matching part 1062 is convenient to adapt to deformation of the fixed beam 105 and the second matching surface 106a of the bearing member 106 is adaptively adjusted with the change of the first matching surface 105b, and therefore, the second matching surface 106a and the first matching surface 105b are always flush or are very small in dislocation to a certain extent.

It is to be understood that when the bearing member 106 includes the plate body part 1061 and the matching part 1062, and the stop part 106c is also formed on the box 101, the plate body part 1061 can be in abutting fit with the stop part 106c on the box 101; and definitely, if the bearing member 106 also includes a support part 1064, the stop part 106c on the box 101 can be in abutting fit with the support part 1064.

With reference to FIG. 6 and FIG. 7, in some embodiments, the matching part 1062 is provided with a first surface 1062a and a second surface 1062b, the first surface 1062a is an arc surface sunken towards the second surface 1062b, and the first surface 1062a is matched with the fixed beam 105; the second surface 1062b is connected to the first surface 1062a, and is flush with the second matching surface 106a, the second surface 1062b and the second matching surface 106a can be on the same plane.

In the above technical solution, the first surface 1062a of the matching part 1062 is in abutting fit with the fixed beam 105, limitation fit between the bearing member 106 and the fixed beam 105 is conveniently achieved due to arc-shaped arrangement of the first surface 1062a, moreover, the second surface 1062b is conveniently prevented from protruding out of the second matching surface 106a towards the first chamber 101a, and the matching between the second matching surface 106a and the battery cells 100 cannot be affected; and definitely, the second surface 1062b also can be in abutting fit with the battery cells 100.

By way of example, the first surface 1062a of the matching part 1062 is in abutting fit with the stop part 106c of the fixed beam 105; and on the cross section of the fixed beam 105, the first surface 1062a and the stop part 106c both form an arc shape.

With reference to FIG. 7, FIG. 14, and FIG. 15, in some embodiments, at least one clamping hole 200d is formed in the fixed beam 105, the bearing member 106 also includes at least one clamping hook part 1063, the clamping hook part 1063 is formed at an outer edge of a plate body part 1061 and is located on the side of the plate body part 1061 deviating from the second matching surface 106a, the clamping hook part 1063 is clamped in the corresponding clamping hole 200d, and the clamping hook part 1063 and the matching part 1062 can be located on the same side of the plate body part 1061 and are both located on the side of the plate body part 1061 facing the fixed beam 105.

By way of example, the first heat exchange member 102 is arranged on the bottom wall 1011a of the box 101, the fixed beam 105 is arranged on the upper side of the bottom wall 1011a of the box 101, the clamping hole 200d is formed in the part of the fixed beam 105 corresponding to the avoiding space 200a, and a part of the clamping hook part 1063 upwards extends into the clamping hole 200d.

In the above technical solution, the clamping hook part 1063 of the bearing member 106 is clamped in the clamping hole 200d in the fixed beam 105, the bearing member 106 can conveniently move in a direction from the second chamber 101b to the first chamber 101a, thus the mounting reliability of the bearing member 106 is further improved, and the problem that the bearing member 106 is easy to deviate from a passage towards the first chamber 101a along the second chamber 101b during the assembly process of the battery 200 is solved, for example, pre-limitation of the bearing member 106 can be realized, and the assembling efficiency of the battery 200 is further improved.

In some examples, for a single clamping hole 200d, the clamping hole 200d can correspond to one or more clamping hook parts 1063, and the number of the clamping holes 200d can be equal to or unequal to that of the clamping hook parts 1063. By way of example, a plurality of clamping hook parts 1063 are arranged at intervals in the length direction of the fixed beam 105, thus improving the pre-limiting reliability to the bearing member 106.

In some examples, the clamping hook parts 1063 are constructed to be elastic clamping hook parts 1063, each clamping hook part 1063 including a cantilever part and a hook part; the cantilever parts extend in the direction from the first chamber 101a to the second chamber 101b, one end of each cantilever part is connected to the plate body part 1061, the hook parts are arranged at the other ends of the cantilever parts, the bearing member 106 is matched with the avoiding space 200a in the direction from the first chamber 101a to the second chamber 101b in the assembling process, the clamping hook parts 1063 are extruded by the fixed beam 105 to deform, and the bearing member 106 continues to move towards the second chamber 101b till the clamping hook parts 1063 are clamped in the clamping holes 200d.

With reference to FIG. 7, FIG. 14, and FIG. 15, in some embodiments, the bearing member 106 further includes at least one support part 1064, the support parts 1064 are arranged on the side of the plate body part 1061 deviating from the second matching surface 106a, the support parts 1064 are arranged to avoid the notch 106b and are in abutting fit with the box 101.

The support parts 1064 are arranged to avoid the notch 106b, which can be understood as that in the thickness direction of the plate body part 1061, the orthographic projections of the support parts 1064 are out of the outer contour of the orthographic projection of the wall of the notch 106b.

In the above technical solution, the support part 1064 is arranged, so that the plate body part 1061 is conveniently reinforced, the structural strength of the bearing member 106 is improved, and the support part 1064 cannot influence the abutting fit between the plate body part 1061 and the battery cells 100; the support part 1064 is in abutting fit with the box 101, thus the acting force applied by the battery cells 100 and applied to the bearing member 106 is conveniently dispersed to the box 101 through the support part 1064, and the mounting reliability and the bearing capacity of the bearing member 106 are further improved; the bearing member 106 is matched with the fixed beam 105 and the box 101 by the matching part 1062 and the support part 1064, so that the whole plate body part 1061 can be supported and limited in a relatively balanced manner; and moreover, the support part 1064 is arranged to avoid the notch 106b, so that the arrangement of the support part 1064 cannot interfere with a connecting part 1e, and the bearing member 106 is conveniently assembled.

In some examples, the support parts 1064 can be constructed as that the support parts 1064 are in abutting fit with the box 101 in the direction from the first chamber 101a to the second chamber 101b, and/or, the support parts 1064 are in abutting fit with the box 101 in the thickness direction (for example, a third direction X3 in FIG. 7) of the first heat exchange member 102, namely, the normal direction to which the wall of the box 101 is provided with the first heat exchange member 102; for example, in combination with FIG. 7 and FIG. 10, the first heat exchange member 102 is arranged on the bottom wall 1011a of the box 101, the fixed beam 105 is arranged on the upper side of the bottom wall 1011a of the box 101, the first chamber 101a and the second chamber 101b are sequentially arranged along the third direction X3, the support parts 1064 can be in abutting fit with the bottom wall 1011a of the box 101 in the second direction X2 (for example, the support parts 1064 are in abutting fit with the stop step 1011c on the box 101), and/or, the support parts 1064 are in abutting fit with the bottom wall 1011a of the box 101 in the third direction X3.

By way of example, a plurality of support parts 1064 are provided, and at least one support part 1064 is arranged at each of two sides of each notch 106b in the length direction (such as the first direction X1 in FIG. 1) of the fixed beam 105.

With reference to FIG. 7, FIG. 11, FIG. 14 and FIG. 15, in some embodiments, the width of the support part 1064 in the thickness direction of the plate body part 1061 increases in a direction from the matching part 1062 to the first heat exchange member 102, the width of the end of the wall the support part 1064 facing the box 101 and provided with the first heat exchange member 102 is maximum, and the width of the end of the support part 1064 facing the matching part 1062 is minimum.

By way of example, the first heat exchange member 102 is arranged between the bottom wall 1011a of the box 101 and the battery cells 100, the fixed beam 105 is arranged at the upper side of the bottom wall 1011a, the width of the support part 1064 in the thickness direction of the plate body part 1061 increases from top to bottom, for example, the support part 1064 is approximately formed to be a triangular plate-shaped structure.

In the above technical solution, the width of the support part 1064 in the thickness direction of the plate body increases in the direction from the matching part 1062 to the first heat exchange member 102, thus the abutting fit area of the support part 1064 and the box 101 is conveniently increased by a relatively small material quantity, the matching reliability of the support part 1064 and the box 101 is improved, and the cost and the bearing reliability are simultaneously considered.

By way of example, when the bearing member 106 includes the plate body part 1061, the matching part 1062, the clamping hook part 1063, and the support part 1064, the matching part 1062 and the clamping hook part 1063 are arranged on the same side of the plate body part 1061, the clamping hook part 1063 and the support part 1064 can be arranged on two opposite sides of the plate body part 1061, therefore, the bearing member 106 can be limited in the width direction of the fixed beam 105, meanwhile, the bearing member 106 also can be limited to rotate, thus improving the stability of the bearing member 106 abutting against the battery cells 100.

In some embodiments, the bearing member 106 is arranged between the first heat exchange member 102 and the fixed beam 105, so that the first heat exchange member 102 and the fixed beam 105 are separated by the bearing member 106, and at the moment, the side of the notch 106b facing the wall of the box 101 provided with the first heat exchange member 102 is open. A heat conductivity coefficient of the bearing member 106 is less than that of the fixed beam 105; and/or, the bearing member 106 and the first heat exchange member 102 are arranged at an interval.

By way of example, the first heat exchange member 102 is arranged on the bottom wall 1011a of the box 101, the fixed beam 105 is arranged on the upper side of the bottom wall 1011a of the box 101, the bearing member 106 is arranged in the avoiding space 200a, the lower side of the notch 106b is open, the connecting part 1e is arranged in the notch 106b in a penetrating manner, and the bearing member 106 can separate the connecting part 1e from the fixed beam 105.

In the above technical solution, the bearing member 106 is arranged between the first heat exchange member 102 and the fixed beam 105, meanwhile, the heat conductivity coefficient of the bearing member 106 is lower than that of the fixed beam 105, and/or, the bearing member 106 and the first heat exchange member 102 are spaced, so that the heat resistance between the first heat exchange member 102 and the fixed beam 105 is increased, the heat exchange amount between the expansion beam and the first heat exchange member 102 is reduced, the proportion of heat or cold transferred to the battery cells 100 by the first heat exchange member 102 is increased to a certain extent, and the heat management performance is improved; and in addition, when the bearing member 106 and the first heat exchange member 102 are spaced, the risk of interference between the bearing member 106 and the first heat exchange member 102 can be reduced during assembling of the bearing member 106, and the mounting convenience of the bearing member 106 is improved.

In some embodiments, the strength of the material of the bearing member 106 is at least 0.8 time that of the material of the fixed beam 105. For example, the strength of the material of the bearing member 106106 is 0.8 time, 0.85 time, 0.9 time, 1 time and the like of the material of the fixed beam 105.

In some examples, the bearing member 106 and the fixed beam 105 can be made of the same or different materials; for example, the fixed beam 105 is a metal member, and the bearing member 106 is a plastic member, but not limited thereto.

In the above technical solution, the strength of the material of the bearing member 106 is set to be at least 0.8 time of the strength of the material of the fixed beam 105, so that the bearing member 106 has good bearing capacity, and can bear the expansion force of the battery cells 100 reliably and stably.

With reference to FIG. 6, in some embodiments, the first heat exchange member 102 is arranged on the bottom wall 1011a of the box 101, and the end of the second matching surface 106a facing the first heat exchange member 102 is flush with the ends of the battery cells 100 facing the first heat exchange member 102, or, the end of the second matching surface 106a facing the first heat exchange assembly 102 is arranged adjacent to the first heat exchange member 102 compared with the ends of the battery cells 100 facing the first heat exchange member 102.

Therefore, when the first heat exchange member 102 is arranged on the lower side of the battery cells 100, the lower end of the second matching surface 106a is flush with the lower end of the battery cells 100, or, the lower end of the second matching surface 106a is located on the lower side of the lower end of the battery cells 100.

In the above technical solution, the end of the second matching surface 106a facing the first heat exchange member 102 is flush with the ends of the battery cells 100 facing the first heat exchange member 102, or, the end of the second matching surface 106a facing the first heat exchange member 102 is arranged adjacent to the first heat exchange member 102 compared with the ends of the battery cells 100 facing the first heat exchange member 102, so that the whole surfaces of the battery cells 100 facing the fixed beam 105 can be supported, the stress uniformity of the battery cells 100 during expansion deformation can be improved, the problems of lithium precipitation, liquid leakage and the like caused by non-uniform stress are solved, and the use reliability of the battery 200 is improved.

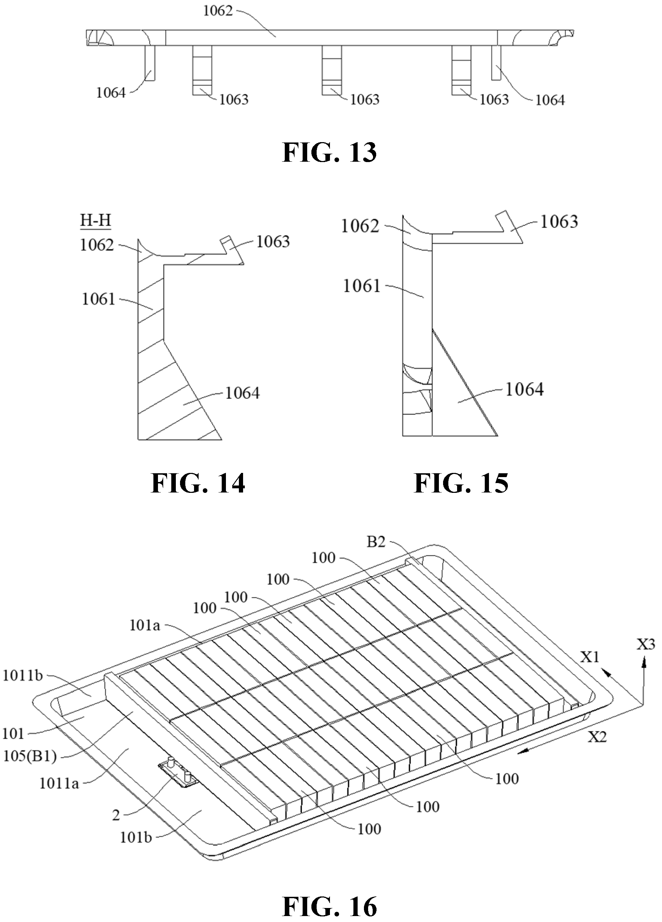

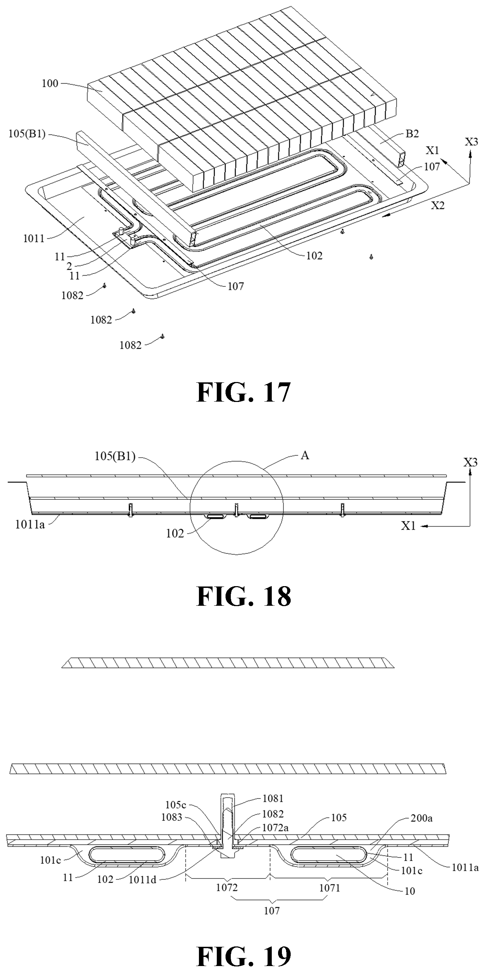

With reference to FIG. 16 and FIG. 17, in some embodiments, the fixed beam 105 is constructed to be the first expansion beam B1, and the fixed beam 105 and the first heat exchange member 102 are arranged at an interval, so that the heat insulation between the first heat exchange member 102 and the fixed beam 105 is realized. Therefore, the fixed beam 105 and the heat exchange part 1d are arranged at an interval, the surface of the fixed beam 105 facing the first chamber 101a and the heat exchange part 1d are arranged at an interval, and meanwhile, the fixed beam 105 and the connecting part 1e are arranged at an interval, so that the wall surface of the avoiding space 200a and the connecting part 1e are arranged at an interval.

Generally, when a plurality of battery cells 100 are provided, the peripheral battery cells 100 encircle the internal battery cells 100; the heat exchange area of the peripheral battery cells 100 is usually greater than that of the internal battery cells 100, so that there is a certain difference in the temperature of the peripheral battery cells 100 and the internal battery cells 100; in related technologies, heat exchange members for heat exchange with the battery cells 100 and the expansion beam are not subjected to heat insulation, so that heat exchange can be performed between the heat exchange members and the expansion beam to a certain extent, the temperature of the expansion beam is greatly influenced by the heat exchange members, the temperature of the expansion beam is lower than that of the peripheral battery cells 100 when the heat exchange members cool the battery cells 100, and the temperature of the expansion beam is higher than that of the peripheral battery cells 100 when the heat exchange members heat the battery cells 100, and at the moment, the temperature difference between the peripheral battery cells 100 and the internal battery cells 100 is further increased.

Therefore, in the above technical, the heat insulation between the first heat exchange member 102 and the fixed beam 105 is implemented, so that the heat resistance between the first heat exchange member 102 and the fixed beam 105 is improved, the heat or cold transferred to the fixed beam 105 by the first heat exchange member 102 is reduced, the temperature difference between the fixed beam 105 and the abutted peripheral battery cells 100 is reduced, the consistency of the peripheral battery cells 100 and the internal battery cells 100 in a heat exchange environment is improved, the temperature difference between the peripheral battery cells 100 and the internal battery cells 100 is reduced; and the reliability of the battery 200 is improved.

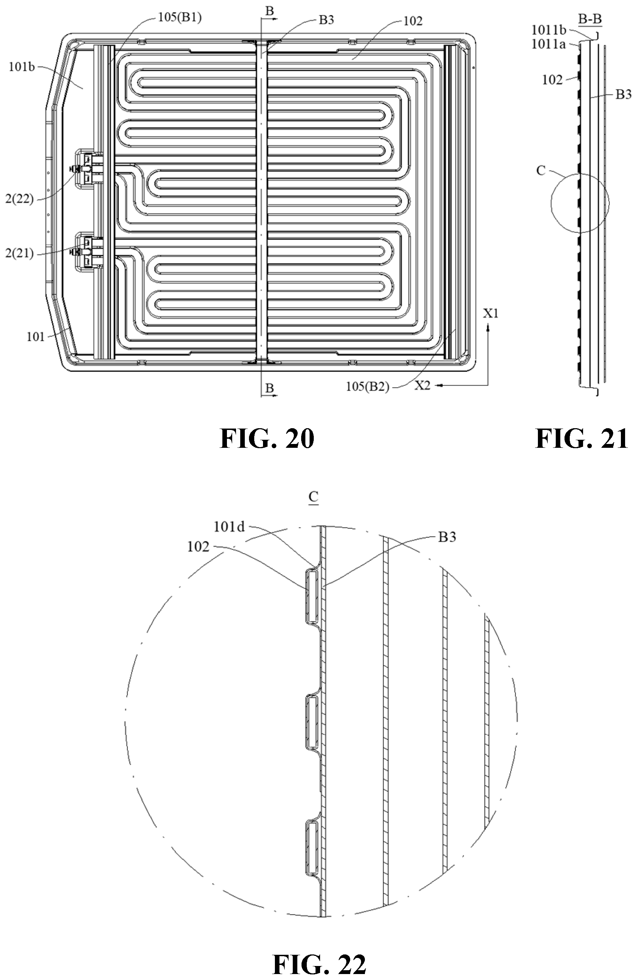

With reference to FIG. 19 and FIG. 22, in some embodiments, the second concave part 101c is formed in the wall of the box 101 and is constructed to be at least part of the avoiding space 200a, and the part of the first heat exchange member 102 penetrating the avoiding space 200a is arranged in the second concave part 101c. The fixed beam 105 is attached to the part, except the second concave part 101c, of the wall of the box 101; or, the fixed beam 105 and the part, except the second concave part 101c, of the wall of the box 101 are arranged at intervals.

In the above technical solution, the fixed beam 105 is arranged to be attached to the part, except the second concave part 101c, of the wall of the box 101; for the fixed beam 105 and the abovementioned wall of the box 101, the fixed beam 105 and the wall of the box 101 are spaced at the penetrating position of the first heat exchange member 102, in other words, the fixed beam 105 and the second concave part 101c are spaced, and therefore heat insulation between the fixed beam 105 and the first heat exchange member 102 is achieved while the first heat exchange member 102 is avoided; the fixed beam 105 and the wall of the box 101 are attached at the position in which the first heat exchange member 102 does not penetrate, namely, the fixed beam 105 and the wall of the box 101 are not attached, thus the matching area of the fixed beam 105 and the box 101 can be increased conveniently, and the mounting reliability of the fixed beam 105 can be improved; the fixed beam 105 and the part, except the second concave part 101c, of the wall of the box 101 are spaced, and therefore the interval between the whole fixed beam 105 and the first heat exchange member 102 can be further increased, the heat resistance between the whole fixed beam 105 and the first heat exchange member 102 can be improved conveniently, the heat or cold transferred to the fixed beam 105 by the first heat exchange member 102 can be reduced, and the energy utilization rate of the first heat exchange member 102 can be improved conveniently.

With reference to FIG. 17 to FIG. 19, in some embodiments, the battery 200 further includes a heat insulation member 107; the heat insulation member 107 includes a first heat insulation part 1071; and the first heat insulation part 1071 is arranged between the wall surface of the fixed beam 105 corresponding to the avoiding space 200a and the connecting part 1e so as to fill at least part of a gap between the wall surface of the fixed beam 105 corresponding to the avoiding space 200a and the connecting part 1e.

In the above technical solution, the first heat insulation part 1071 is arranged between the wall surface of the fixed beam corresponding to the avoiding channel and the first heat exchange member 102, and therefore the first heat insulation part 1071 corresponds to the second concave part 101c so as to further increase the heat resistance between the fixed beam 105 and the first heat exchange member 102 by the heat insulation member 107.

With reference to FIG. 17 and FIG. 19, in some embodiments, the heat insulation member 107 further includes a second heat insulation part 1072 which is arranged between the part, except second concave parts 101c, of the wall of the box 101 and the fixed beam 105.

It is to be understood that the first concave part 101c can be used for accommodating the connecting part 1e of the first heat exchange member 102. By way of example, a plurality of second concave parts 101c which are arranged at intervals are formed at the position of the box 101 corresponding to the avoiding space 200a; each second concave part 101a accommodates one end portion of the heat exchange tubes 1; and a plurality of first heat insulation parts 1071 and a plurality of second heat insulation parts 1072 are provided and are alternatively arranged one by one along the length direction of the fixed beam 105.

In the above solution, the second heat insulation parts 1072 are arranged between the part, except the second concave parts 101c, of the wall of the box 101 and the fixed beam 105, so that the heat insulation member 107 is conveniently clamped between the box 101 and the fixed beam 105, and the reliable mounting of the heat insulation member 107 is conveniently realized by fixing the fixed beam 105 and the box 101, and furthermore, the heat insulation member 107 can conveniently provide a relatively flat matching surface for connection of the box 101 and the fixed beam 105; and moreover, the depth of the second concave parts 101c is easy to reduce, and the molding convenience of the second concave parts 101c is improved.

With reference to FIG. 19, in some embodiments, a first fixing member 1081 is further arranged on the fixed beam 105, and at least part of the first fixing member 1081 is located in the fixed beam 105; the battery 200 further includes a second fixing member 1082, and the second fixing member 1082 is arranged on the box 101, the second heat insulation part 1072, and the fixed beam 105 in a penetrating mode; and the second fixing member 1082 is connected to the first fixing member 1081.

In the above technical solution, at least part of the first fixing member 1081 is located in the fixed beam 105, and the second fixing member 1082 is arranged on the box 101, the second heat insulation part 1072, and the fixed beam 105 in a penetrating mode and is connected to the first fixing member 1081, so that the box 101, the heat insulation member 107, and the fixed beam 105 are fixed in a simple mode, and moreover, the heat insulation member 107 is reliably mounted; and meanwhile, the second fixing member 1082 can be mounted towards the fixed beam 105 along the heat insulation member 107, so that enough operation space is provided in the assembling process of the second fixing member 1082, and the assembling convenience is improved. In addition, the second fixing member 1082 is arranged on the second heat insulation part 1072 in a penetrating mode, thus the second fixing member 1082 and the first heat exchange member 102 are arranged at an interval, and the arrangement of the second fixing member 1082 does not influence the first heat exchange member 102.

By way of example, the first fixing member 1081 is a rivet nut, the second fixing member 1082 is a threaded fastener such as a bolt, a first mounting hole is formed in the box 101, a second mounting hole is formed in the second heat insulation part 1072, a third mounting hole is formed in the fixed beam 105, a head part of the first fixing member 1081 is matched in the second mounting hole, the first fixing member 1081 is arranged in the third mounting hole in a penetrating way so as to locally extend into the fixed beam 105, the second fixing member 1082 is arranged in the first mounting hole in a penetrating way and is in threaded matching with part of the first fixing member 1081 and even the part in the fixed beam 105, so that this part of the first fixing member 1081 is deformed to be riveted onto the fixed beam 105, and meanwhile, the first fixing member 1081 and the second fixing member 1082 are in threaded connection; and it is to be understood that the hole position of the box 101 is sealed by a corresponding means, including, but not limited to, arranging a gasket 1083 between the head part of the second fixing member 1082 and the box 101.

It is to be understood that the embodiment of heat insulation arrangement of the first expansion beam B1 in the present application is applicable to other expansion beams of the battery 200. For example, the battery 200 further includes a second expansion beam B2 which is arranged in the first chamber 101a; all battery cells 100 are clamped between the first expansion beam B1 and the second expansion beam B2, and the first heat exchange member 102 and the second expansion beam B2 are arranged at an interval in the direction from the first chamber 101a to the second chamber 101b, so that the whole first heat exchange member 102 is arranged at an interval on one side of the second expansion beam B2 facing the second chamber 101b; for another example, the battery 200 further includes the second expansion beam B2 and a third expansion beam B3; the second expansion beam B2 and the third expansion beam B3 are both arranged in the first chamber 101a; the third expansion beam B3 is located between the first expansion beam B1 and the second expansion beam B2; the battery cells 100 are arranged between the first expansion beam B1 and the third expansion beam B3; the battery cells 100 are also arranged between the second expansion beam B2 and the third expansion beam B3; a part of the first heat exchange member 102 is arranged at each of two opposite sides of the third expansion beam B3, at the moment, an avoiding channel can be formed between the third expansion beam B3 and the box 101; and the avoiding channel is in communication with the two opposite sides of the third expansion beam B3, for example, a third concave part 101d is formed in the box 101, and/or, a fourth concave part is formed in the third expansion beam B3; the third concave part 101d and/or the fourth concave part form/forms the avoiding channel; the first heat exchange member 102 penetrates through the avoiding channel; and the part of the first heat exchange member 102 penetrating through the avoiding channel and the third expansion beam B3 are arranged at an interval, so that the heat insulation between the first heat exchange member 102 and the third expansion beam B3 is realized.

In some examples, the way of heat insulation between the first heat exchange member 102 and the third expansion beam B3 is the same as or different from the way of heat insulation between the first heat exchange member 102 and the fixed beam 105. By way of example, the third concave part 101d is formed in the wall of the box 101 and is constructed to be at least part of the avoiding channel; and the part of the first heat exchange member 102 penetrating through the avoiding channel is arranged in the third concave part 101d. The third expansion beam B3 is fitted with the part, except the third concave part 101d, of the wall of the box 101; or, the third expansion beam B3 and the part, except the third concave part 101d, of the wall of the box 101 are arranged at an interval.

With reference to FIG. 19, in some embodiments, the first heat exchange member 102 includes at least one heat exchange tube 1; the heat exchange flow channels 10 are defined in the heat exchange tubes 1; the heat exchange tubes 1 are flat tubes or harmonica-shaped tubes, at the moment, on the cross sections of the heat exchange tubes 1, the thickness of the heat exchange tubes 1 is smaller than the width, and the cross section of the heat exchange tubes 1 is vertical to the central axes of the heat exchange tubes 1.

In the above technical solution, the heat exchange tubes 1 are arranged to be the flat tubes or the harmonica-shaped tubes, so that the space occupied by the heat exchange tubes is saved, moreover, the heat exchange between the sides of the heat exchange tubes 1 in the thickness direction and the battery cells 100 is facilitated, and the battery 200 is balanced in volume energy density and heat management. For example, the heat exchange tubes 1 can be extruded and molded, and a thickness of each heat exchange tube 1 can be as small as about 0.7 mm; in related technologies, a structure of a water cooling plate is adopted, the water cooling plate generally includes two plate bodies which are stacked, the two plate bodies are welded and fixed and define the flow channel, and the thickness of the water cooling plate is generally large and can be more than 2.4 mm; therefore, by means of above arrangement in the present application, the cost of the first heat exchange member 102 can be reduced, moreover, the space occupied by the first heat exchange member 102 is saved, and the improvement of the battery 200 energy density can be realized while the first heat exchange member 102 is arranged in the box 101.

In the embodiment of the present application, the harmonica-shaped tubes can be understood as that at least one separation structure is additionally arranged in the flat tubes to separate the internal space of the flat tubes into a plurality of flow channels, and two ends of each flow channel are respectively in communication with a liquid intake end and a liquid output end of the corresponding heat exchange tube 1. The plurality of flow channels can be arranged at intervals along the width direction of the flat tubes; or, the plurality of flow channels can be arranged in a multi-row and multi-rank way along the width direction and the thickness direction of the flat tubes.

It is to be understood that when the heat exchange tubes 1 are the flat tube or harmonica-shaped tubes, and if the heat exchange tubes 1 are arranged in the avoiding space 200a between the fixed beam 105 and the box 101 in a penetrating manner, the structures of the heat exchange tubes 1 are beneficial to reduction of the height of the avoiding space 200a in the thickness direction of the heat exchange tubes 1, reduction of the forming difficulty of the avoiding space 200a, and/or, reduction of weakening to the corresponding structure.

Definitely, in other embodiments, the heat exchange tubes 1 can also be tubes in other shapes such as circular tubes.

In some embodiments, the first heat exchange member 102 includes a plurality of heat exchange tubes 1, the plurality of heat exchange tubes 1 are arranged at intervals along the first direction, or, the plurality of heat exchange tubes 1 are wound with one another, and the plurality of heat exchange tubes 1 can be arranged in parallel.

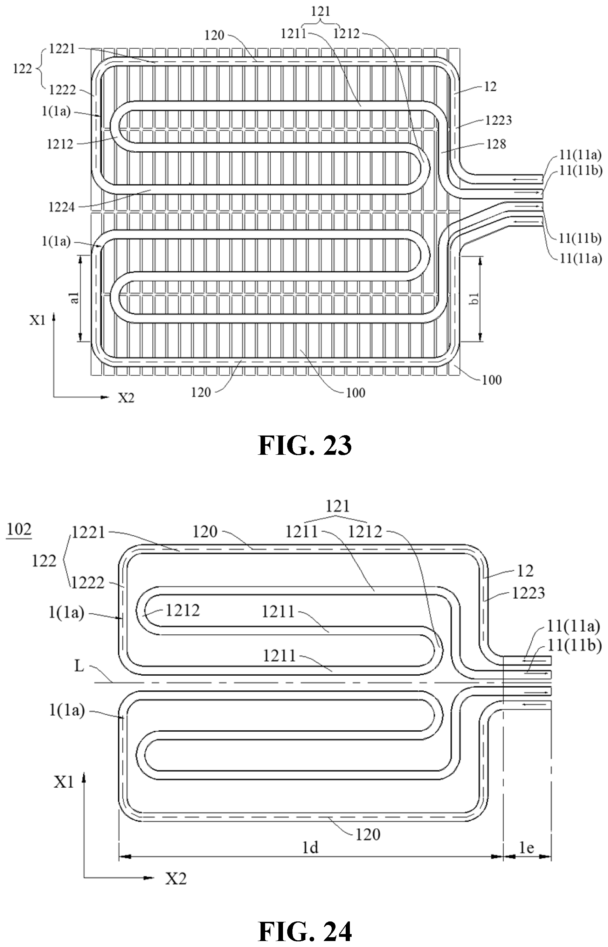

With reference to FIG. 23, FIG. 25, and FIG. 27, in some embodiments, the first heat exchange member 102 includes at least one heat exchange tube 1, the heat exchange flow channel 10 is defined by the heat exchange tube 1, two ports of the heat exchange flow channel 10 are respectively located at two ends of the heat exchange tube 1 in the length direction, and the at least one heat exchange tube 1 is constructed to be the first heat exchange tube 1a, namely, at least one of all heat exchange tubes 1 of the first heat exchange member 102 is constructed to be the first heat exchange tube 1a. The first heat exchange tube 1a includes a first heat exchange section 121 and a second heat exchange section 122, the second heat exchange section 122 is bent to form a U-shaped area 120, the first heat exchange section 121 is arranged in the U-shaped area 120 in a bent manner, and the first heat exchange section 121 is connected to the second heat exchange section 122 in a bent manner. The first heat exchange section 121 and the second heat exchange section 122 of the first heat exchange tube 1a can participate in defining the heat exchange part 1d.

Specifically, the battery 200 can include a plurality of battery cells 100, and the first heat exchange tubes 1a are configured to exchange heat with the plurality of battery cells 100 of the battery 200, so that the temperature of the battery 200 can be limited within a reliable operation temperature, and reliable operation of the battery 200 is achieved.

That "the second heat exchange sections 122 are bent to form U-shaped areas 120, the first heat exchange sections 121 are bent and arranged in the U-shaped areas 120" refers to that the second heat exchange sections 122 are arranged at the circumferential periphery of the first heat exchange sections 121 and can be arranged on at least three sides of the first heat exchange sections 121 in the circumferential direction, and the second heat exchange sections 122 can be arranged closer to the peripheral edge in position of the battery 200 than the first heat exchange sections 121.

The second heat exchange sections 122 are bent to form the U-shaped areas 120, namely, the second heat exchange sections 122 at least locally extend along a U-shaped line in a direction from one end of each second heat exchange section 122 to the other end, so as to form the U-shaped areas 120.

The first heat exchange sections 121 are bent in the U-shaped areas 120, namely, the first heat exchange sections 121 are arranged in a space encircled by the second heat exchange sections 122, and the first heat exchange sections 121 extend along a non-straight line on the inner sides of the second heat exchange sections 122 and have at least one bending position.

It is to be noted that in the embodiment, only the first heat exchange sections 121 are limited to be bent and arranged in the U-shaped areas 120 and the bending forms of the first heat exchange sections 121 are not limited, namely, the specific bending forms of the first heat exchange sections 121 can be designed according to the heat exchange demand of the battery 200. For example, the first heat exchange sections 121 can extend along the length direction (namely, the first direction X1 shown in FIG. 3) of the battery cells 100, are bent towards the width direction (namely, the second direction X2 shown in FIG. 3) of the battery cells 100 after extending to a certain length, and then continue to extend along the length direction of the battery cells 200 and are bent along the width direction, or the first heat exchange sections 121 can extend along the width direction of the battery cells 100, are bent towards the length direction of the battery cells 100 after extending to a certain length, and then continue to extend along the width direction of the battery cells 100 and are bent along the length direction.

The first heat exchange sections 121 and the second heat exchange sections 122 are connected in a bent way, namely, one end of each first heat exchange sections 121 is connected to one end of the corresponding second heat exchange sections 122, and the connection position of the first heat exchange sections 121 and the second heat exchange sections 122 is of a bent nonlinear structure, for example, the connection position of the first heat exchange sections 121 and the second heat exchange sections 122 can be bent into an arc section.

By way of example, one port of the heat exchange flow channels 10 can be formed at the end of each first heat exchange section 121 deviating from the corresponding second heat exchange section 122, and another port of the heat exchange flow channels 10 can be formed at the end of each second heat exchange section 122 deviating from the other first heat exchange section 121, therefore, when the first heat exchange tubes 1a perform heat exchange, heat exchange media can flow from the first heat exchange sections 121 to the second heat exchange sections 122, and can also flow from the second heat exchange sections 122 to the first heat exchange sections 121.

It is to be understood that the temperature of the heat exchange media gradually changes while flowing in the first heat exchange tubes 1a, thus the heat exchange effect gradually degrades. For example, when the first heat exchange tubes 1a are configured to perform cooling and heat dissipation on the battery cells 100, the heat in the battery cells 100 is gradually transferred to the heat exchange media, so that the temperature of the heat exchange media gradually increase while flowing along the first heat exchange tubes 1a, the temperature difference to the battery cells 100 is gradually reduced, and the heat exchange efficiency is gradually reduced; and when the first heat exchange tubes 1a are configured to heat to increase the temperature of the battery cells 100, the heat in the heat exchange media is gradually transferred to the battery cells 100, so that the temperature of the heat exchange media gradually decreases while flowing along the first heat exchange tubes 1a, the temperature difference to the battery cells 100 is gradually reduced, and the heat exchange efficiency is gradually reduced.

In the embodiment, when the first heat exchange tubes 1a are configured to perform heat dissipation and cooling on the plurality of battery cells 100, the heat exchange media can also flow to the second heat exchange sections 122 from the first heat exchange sections 121, and can also flow to the first heat exchange sections 121 from the second heat exchange sections 122. When the heat exchange media also flow to the second heat exchange sections 122 from the first heat exchange sections 121, the battery cell 100 in the middle (namely the internal battery cell 100 on the peripheral inner side) can be cooled, and then the battery cells 100 at the peripheral edge position are cooled; the heat dissipation condition of the battery cells 100 at the peripheral edge position is better than that of the battery cell 100 at the inner part, so the heat exchange media with relatively low temperature at the first heat exchange sections 121 can better meet the heat dissipation requirement of the battery cell 100 in the middle; and moreover, the battery cells 100 at the peripheral edge position can directly and naturally dissipate heat to the external environment; and when the temperature of the heat exchange media of the second heat exchange sections 122 is slightly high, the heat dissipation requirement of the battery cells 100 at the peripheral edge position can still be met, so that the cooling effects of the battery cells 100 at the peripheral edge position and the battery cell 100 in the middle are roughly consistent, the temperature of the battery cells 100 at the peripheral edge position is relatively consistent to the temperature of the battery cell 100 in the middle after cooling and heat dissipation, and the temperature distribution in the battery 200 is more uniform.

When the first heat exchange tubes 1a heat to increase the temperature of the plurality of battery cells 100, the heat exchange media can also flow from the first heat exchange sections 121 to the second heat exchange sections 122, and can also flow from the second heat exchange sections 122 to the first heat exchange sections 121. By way of example, when the heat exchange media flow from the second heat exchange sections 122 to the first heat exchange sections 121, the peripheral battery cells 100 can be heated, and then the heat exchange media cool the battery cell 100 in the middle; since the peripheral battery cells 100 dissipate more heat to the external environment, the temperature of the battery cells 100 at the periphery of the battery 200 is easier to decrease; the heat exchange media heat the battery cells 100 at the periphery of the battery 200 first, and the heat exchange media with higher temperature can make up the heat lost by the battery cells 100 due to heat dissipation to the external environment while increasing the temperature of the peripheral battery cells 100, thereby meeting the heating needs; the contact area between the battery cell 100 in the middle and the external environment is small, so the heat loss is small; and the heat exchange media with lower temperature flowing in the first heat exchange sections 121 can well meet the heating needs in cooperation with the heat generated by the battery cells 100, so that the heating effects of the peripheral battery cells 100 and the battery cell 100 in the middle of the battery assembly are basically consistent, the temperature of the peripheral battery cells 100 is consistent with the temperature of the battery cell 100 in the middle, and the temperature distribution in the battery 200 is more uniform.

In the above embodiment, the second heat exchange sections 122 are bent to form the U-shaped areas 120, and the first heat exchange sections 121 are arranged in the U-shaped areas 120 in a bent way; when the first heat exchange tubes 1a exchange heat with the plurality of battery cells 100, the U-shaped areas 120 formed by the second heat exchange sections 122 at the periphery can be opposite to the peripheral battery cells 100, the first heat exchange sections 121 in the U-shaped areas 120 are opposite to the internal battery cell 100, so that the first heat exchange tubes 1a can be make up an internal and external temperature difference caused by heat exchange between the peripheral battery cells 100 and the environment, the heat exchange effects of the peripheral battery cells 100 and the internal battery cell 100 tend to be consistent, the temperature uniformity of the battery 200 is improved, and the service life of the battery 200 can be prolonged to a certain extent.

In some examples, the second heat exchange sections 122 can be arranged on the outermost sides of the first heat exchange tubes 1a in the circumferential direction, namely, the second heat exchange sections 122 form the flow channels at the outermost periphery of the first heat exchange tubes 1a, thus, the second heat exchange sections 122 can be configured to exchange heat with the battery cells 100 on the peripheral edges, the temperature difference between the peripheral battery cells 100 and the internal battery cell 100 caused by heat exchange to the environment is improved, and the temperature uniformity of the battery cells 100 at the circumferential periphery of the battery 200 is improved.

In some examples, the first heat exchange sections 121 and the second heat exchange sections 122 are bent in the same plane, the first heat exchange tubes 1a can be configured to exchange heat with the plurality of battery cells 100 in the same plane, thus, the structures of the first heat exchange tubes 1a can be simplified, the production difficulty of the first heat exchange tubes 1a is reduced, moreover, the space occupied by the first heat exchange tubes 1a also can be reduced, and the volume energy density of the battery 200 is improved.

In some examples, as shown in FIG. 24, the plurality of heat exchange tubes 1 are arranged at intervals along the first direction, and two heat exchange tubes 1 located at two ends in the first direction are the first heat exchange tubes 1 first heat exchange flow channels 10; and the two first heat exchange flow channels 10 are symmetrically arranged about the center line L of the first heat exchange member 102 extending along the second direction. It is to be understood that the second heat exchange sections 122 of the first heat exchange tubes 1a are arranged at the peripheral edge positions, so that the uniformity of internal and external temperatures of the battery assembly can be improved; and therefore, the two heat exchange tubes 1 located at the two ends in the first direction are formed to be the first heat exchange tubes 1a, so that the temperature uniformity of the battery cells 100 at the two ends of the battery assembly in the first direction can be improved, and the temperature uniformity of the whole battery assembly is realized. Therefore, by the two symmetrically arranged first heat exchange tubes 1, liquid can be charged from two sides at the same time, the liquid intake flow is increased, the length of a single heat exchange flow channel is shortened, the pressure drop in the single heat exchange flow channel is reduced, and the heat exchange efficiency can be improved.

Further, the medium flowing directions of the two heat exchange tubes 1 located at the two ends in the first direction and inlets and outlets at the two ends are symmetrically arranged, so that the two first heat exchange tubes 1a can synchronously exchange heat with the two ends of the battery assembly in the first direction, and the temperature uniformity effect is improved.

Definitely, in other embodiments, the plurality of heat exchange tubes 1 can be asymmetric about the center line of the first heat exchange member 102 in the second direction.

With reference to FIG. 23, in some embodiments, the first heat exchange sections 121 include a plurality of first heat exchange parts 1211 and first bending parts 1212; the plurality of first heat exchange parts 1211 are arranged at intervals along the first direction, each first heat exchange part 1211 extends along the second direction; and each first bending part 1212 is connected between two adjacent first heat exchange parts 1211 in a bent way, so that the plurality of first heat exchange parts 1211 can be sequentially connected; and the second direction and the first direction are arranged by an included angle.

It is to be noted that the first heat exchange parts 1211 can be diversified in shape, for example, the first heat exchange parts 1211 can be in a linear shape or a curve shape or the like. The plurality of first heat exchange parts 1211 are sequentially bent and connected, and thus the first heat exchange sections 121 can form heat exchange flow channels in an S shape or an n shape or a V shape or the like. The first bending parts 1212 can be in an arc shape or a broken line shape or the like. That "the second direction and the first direction are arranged by an included angle" refers to that the first direction and the second direction can be arranged vertically or can be arranged in a crossed and non-vertical mode, for example, the first direction and the second direction can be arranged at an angle of 30°, 60°, 80°, 120°, 150°, or 170°. For example, as shown in FIG. 3, the first direction is the length direction of battery cells 100, the second direction is the thickness direction of the battery cells 100, therefore, the plurality of first heat exchange parts 1211 are bent and connected to form the S-shaped heat exchange flow channel for heat exchange on the plurality of battery cells 100.

In the above embodiment, on one hand, by arranging the plurality of first heat exchange parts 1211, the heat exchange area of the first heat exchange sections 121 can be increased, then the heat exchange area of the first heat exchange tubes 1a can be increased, and thus the heat exchange effect of the first heat exchange tubes 1a can be improved; and on the other hand, because the internal battery cells 100 are wrapped by the external battery cells 100, the temperature difference between the internal battery cells 100 is not large, so that the overall heat exchange effect can be guaranteed on the premise that the small temperature difference between the internal battery cells 100 and the external battery cells 100 is guaranteed by the plurality of first heat exchange parts 1211.

It is to be understood that the first bending part 1212 is arc-shaped, and a certain included angle is formed between fluid flowing directions of two ends of the first bending part 1212, so that the first bending parts 1212 can change the flowing direction of the fluid, furthermore, two connected first heat exchange parts 1211 can be arranged in a preset area in an extending manner, thereby increasing the heat exchange area of the first heat exchange sections 121, and improving the heat exchange efficiency of the first heat exchange sections 121. Moreover, the first bending parts 1212 are arc-shaped, and the arc shape can reduce the flowing resistance of the fluid and reduce the pressure drop, so that the flowing rate of the fluid can be increased, and the heat exchange efficiency of the first heat exchange sections 121 is further improved. Moreover, the first heat exchange tubes 1a can be more compact in structure and smaller in occupied space size, and the miniaturization design of the battery 200 is facilitated.

By way of example, the first bending parts 1212 are semi-arc-shaped, which is conducive to connecting the two first heat exchange parts 1211 which are parallel to each other and are arranged at an interval, improving the design diversity of the heat exchange flow channel 10, and improving the adaptability of the first heat exchange tubes 1a to the plurality of battery cells 100; and the structure is simple, and the production is facilitated. Definitely, the bending angles of the first bending parts 1212 can be adjusted according to requirements, for example, 150° or 135°.

In addition, the number of the first bending parts 1212 can be one, two, three, or more, and the first bending parts 1212 can enable the first heat exchange tubes 1a to be arranged in a circuitous manner, so that the heat exchange area of the first heat exchange tubes 1a is increased, and the heat exchange efficiency is improved.

With reference to FIG. 23, in some embodiments, the second heat exchange sections 122 include second heat exchange parts 1221, third heat exchange parts 1222, and fourth heat exchange parts 1223; the second heat exchange parts 1221 extend along the peripheral edges of the first sides of the first heat exchange sections 121; the third heat exchange parts 1222 are connected between the second heat exchange parts 1221 and the first heat exchange sections 121 and extend along the peripheral edges of the second sides of the first heat exchange sections 121; first ends of the third heat exchange parts 1222 are connected to the second heat exchange parts 1221 by an included angle, and second ends of the third heat exchange parts 1222 are connected to the first heat exchange sections 121 by an included angle; the fourth heat exchange parts 1223 are in communication with the second heat exchange parts 1221, and the fourth heat exchange parts 1223 are connected to the second heat exchange parts 1221 by an included angle; and the fourth heat exchange parts 1223 extend along the peripheral edges of the third sides of the first heat exchange sections 121.

It is to be understood that the fourth heat exchange parts 1223 are connected to the ends of the second heat exchange parts 1221 deviating from the third heat exchange parts 1222; the fourth heat exchange parts 1223, the second heat exchange parts 1221, and the third heat exchange parts 1222 are sequentially connected to form the U-shaped areas 120; and the first heat exchange sections 121 are arranged in the U-shaped areas 120 and are connected to the ends of the third heat exchange parts 1222 deviating from the second heat exchange parts 1221.

The first ends of the third heat exchange parts 1222 are connected to the second heat exchange parts 1221 by an included angle, namely, the third heat exchange parts 1222 are connected to the second heat exchange parts 1221; the third heat exchange parts 1222 and the second heat exchange parts 1221 are not collinear and not parallel, and are arranged at an angle greater than 0° and smaller than 180°. For example, the third heat exchange parts 1222 are connected to the second heat exchange parts 1221 by the included angle of 30°, 45°, 60°, 90°, 120°, 135°, 150° and the like.

The second ends of the third heat exchange parts 1222 are connected to the first heat exchange sections 121 by an included angle, namely, the second ends of the third heat exchange parts 1222 are connected to the second heat exchange parts 1221, and the second ends of the third heat exchange parts 1222 are connected to the first heat exchange sections 121 by an angle greater than 0° and smaller than 180°. For example, the second ends of the third heat exchange parts 1222 are connected to the first heat exchange sections 121 by an included angle of 30°, 45°, 60°, 90°, 120°, 135°, 150° and the like.

The fourth heat exchange parts 1223 are in communication with the second heat exchange parts 1221 and are connected to the second heat exchange parts 1221 by an included angle, namely, the fourth heat exchange parts 1223 are connected to the second heat exchange parts 1221 and are arranged by an angle greater than 0° and less than 180°. For example, the fourth heat exchange parts 1223 are connected to the second heat exchange parts 1221 by the included angle of 30°, 45°, 60°, 90°, 120°, 135°, 150° and the like.

It is to be noted that in the embodiment, the second heat exchange sections 122 are limited to be arranged on three sides of the first heat exchange sections 121 in the circumferential direction, and the second heat exchange parts 1221, the third heat exchange parts 1222, and the fourth heat exchange parts 1223 are not limited to be arranged at specific positions relative to the first heat exchange sections 121 respectively, so that the specific positions of the second heat exchange parts 1221, the third heat exchange parts 1222, and the fourth heat exchange parts 1223 can be designed according to actual conditions, for example, if the second heat exchange parts 1221 can be arranged on the sides of the first heat exchange sections 121 in the first direction, the third heat exchange parts 1222 and the fourth heat exchange parts 1223 are arranged on two sides of the first heat exchange sections 121 in the second direction respectively; and if the second heat exchange parts 1221 are arranged on the sides of the first heat exchange sections 121 in the second direction, the third heat exchange parts 1222 and the fourth heat exchange parts 1223 are arranged on two sides of the first heat exchange sections 121 in the first direction respectively.

In the above embodiment, the second heat exchange parts 1221, the third heat exchange parts 1222, and the fourth heat exchange parts 1223 are arranged on three sides of the first heat exchange sections 121 respectively, so that the second heat exchange sections 122 can encircle the first heat exchange sections 121, the arrangement compactness of the first heat exchange tubes 1a can be improved, the structure miniaturization of the first heat exchange tubes 1a is realized, furthermore, the volume energy density of the battery 200 is improved; and moreover, the structures of the first heat exchange tubes 1a can be simplified, and the processing and production of the first heat exchange member 102 are facilitated.

With reference to FIG. 23, in some embodiments, the first heat exchange sections 121 can include a plurality of first heat exchange parts 1211 which are sequentially connected in a bent way in the first direction. The second heat exchange parts 1221 are located on one of the plurality of first heat exchange parts 1211 in the first direction; the third heat exchange part 1222 is positioned on one side of the plurality of first heat exchange parts 1211 in the second direction; the first direction and the second direction are arranged by an included angle; the first ends of the third heat exchange parts 1222 are connected to the ends of the second heat exchange parts 1221 in the second direction, and the second ends of the third heat exchange parts 1222 are connected to one, which is farthest from the second heat exchange part 1221, of the plurality of first heat exchange parts 1211 in the first direction; the fourth heat exchange parts 1223 are positioned on the other side of the plurality of first heat exchange parts 1211 in the second direction; and one end of each fourth heat exchange part 1223 is connected to the end of corresponding second heat exchange part 1221 deviating from the third heat exchange part 1222, and the other end of each fourth heat exchange part 1223 extends in the first direction deviating from the corresponding second heat exchange part 1221.

The plurality of first heat exchange parts 1211 are sequentially connected in the bent way in the first direction, namely, the plurality of first heat exchange parts 1211 are sequentially arranged in the first direction; and in the first direction, every two adjacent and connected first heat exchange parts 1211 are connected in the bent way. The first heat exchange parts 1211 can extend along a straight line parallel to the second direction, can also extend along a straight line that forms an angle in the second direction, and can also extend along a curve and/or a broken line in the second direction.

It is to be understood that the fourth heat exchange parts 1223, the second heat exchange parts 1221, the third heat exchange parts 1222, and the first heat exchange part 1211 farthest from the second heat exchange parts 1221 are sequentially connected, and the plurality of first heat exchange parts 1211 are arranged at intervals in the first direction and are sequentially connected in a bent mode. Therefore, the heat exchange media can sequentially flow through the fourth heat exchange parts 1223, the second heat exchange parts 1221, and the third heat exchange parts 1222 and then enter the first heat exchange sections 121; and in the first heat exchange sections 121, the media firstly pass through the first heat exchange part 1211 that is farthest from the second heat exchange parts 1221 and finally flow to the first heat exchange part 1211 that is closest to the second heat exchange part 1221; or, the heat exchange media can firstly flow into the first heat exchange sections 121, and in the first heat exchange sections 121, the fluid firstly flows through the first heat exchange part 1211 that is closest to the second heat exchange parts 1221, flows out of the first heat exchange part 1211 that is farthest from the second heat exchange parts 1221, then flows to the third heat exchange parts 1222, and then sequentially flows through the second heat exchange parts 1221 and the fourth heat exchange parts 1223 by the third heat exchange parts 1222.

By taking the first heat exchange tubes 1a deviating from an origin of coordinates in the first direction in FIG. 23 as an example, the first heat exchange parts 1211 extend linearly in the second direction, the plurality of first heat exchange parts 1211 are arranged at intervals in the first direction; the second heat exchange parts 1221 are arranged on the sides, deviating from the origin of coordinates, of the plurality of first heat exchange parts 1211 in the first direction and extend linearly in the second direction, and are configured to exchange heat with the sides, deviating from the origin of coordinates, of the plurality of battery cells 100 in the first direction; the third heat exchange parts 1222 are arranged on the sides, close to the origin of coordinates, of the plurality of first heat exchange parts 1211 in the second direction and extend linearly in the first direction, and are configured to exchange heat with the sides, close to the origin of coordinates, of the plurality of battery cells 100 in the second direction; and the fourth heat exchange parts 1223 are arranged on the sides, deviating from the origin of coordinates, of the plurality of first heat exchange parts 1211 in the second direction and extend linearly in the first direction, and can be configured to exchange heat with the sides, deviating from the origin of coordinates, of the plurality of battery cells 100 in the second direction.

In the above embodiment, the plurality of first heat exchange parts 1211 are sequentially bent and connected in the first direction, the second heat exchange parts 1221 are located on the sides of the plurality of first heat exchange parts 1211 in the first direction, the third heat exchange parts 1222 are located on one of the plurality of first heat exchange parts 1211 in the second direction, and the fourth heat exchange parts 1223 are located on the other side of the plurality of first heat exchange parts 1211 in the second direction, therefore, the position relationship of the second heat exchange parts 1221, the third heat exchange parts 1222, the fourth heat exchange parts 1223, and the first heat exchange parts 1211 is limited, the layout of the first heat exchange tubes 1a is further limited, the structures of the first heat exchange tubes 1a are simplified, and machining and manufacturing are facilitated.

By way of example, the third heat exchange parts 1222 and the fourth heat exchange parts 1223 extend in the first direction, and the first heat exchange parts 1211 and the second heat exchange parts 1221 extend in the second direction, thus the first heat exchange tubes 1a can be arranged in a circuitous manner, the production difficulty of the first heat exchange tubes 1a can be reduced, and the production cost of the first heat exchange member 102 is reduced. Further, the third heat exchange parts 1222 and the fourth heat exchange parts 1223 can linearly extend in the first direction, and the first heat exchange parts 1211 and the second heat exchange parts 1221 can linearly extend in the second direction. The linear structure is simple, production is convenient, arrangement is convenient, and therefore, the production complexity and the production cost of the first heat exchange flow channel 10 can be further reduced.

In some examples, as shown in FIG. 23, the third heat exchange parts 1222 and the fourth heat exchange parts 1223 are arranged in an extending manner along the first direction; in the first direction, the length b1 of the fourth heat exchange parts 1223 is smaller than or equal to the length a1 of the third heat exchange parts 1222. When the length b1 of the fourth heat exchange parts 1223 is equal to the length a1 of the third heat exchange parts 1222, the fourth heat exchange parts 1223, the second heat exchange parts 1221, and the third heat exchange parts 1222 are connected in sequence to form a standard U-shaped flow channel; two ends of the U-shaped areas 120 have similar size, so that the temperature difference of the battery cells 100 at two ends in the second direction is easy to control and the temperature uniformity is improved; and when the length b1 of the fourth heat exchange parts 1223 is smaller than the length a1 of the third heat exchange parts 1222, other flow channel sections of the first heat exchange tubes 1a, other heat exchange flow channels or other parts can be avoided, and furthermore, the layout of the first heat exchange tubes 1a is easy to realize and the structure is compact.

With reference to FIG. 23, in some embodiments, the fourth heat exchange parts 1223 extend along the first direction and extend to the position close to one, which is farthest away from the second heat exchange part 1221, of the plurality of first heat exchange parts 1211. Specifically, the fourth heat exchange parts 1223 extend along the first direction; one end of each fourth heat exchange part 1223 is connected to the corresponding second heat exchange part 1221 and the other end of each fourth heat exchange part 1223 extends to a position close to one, which is farthest away from the corresponding second heat exchange part 1221, in the plurality of first heat exchange parts 1211, namely, the other end of each fourth heat exchange part 1223 extends to be flush with the first heat exchange part 1211 which is farthest away from the corresponding second heat exchange part 1221, or, the other end of each fourth heat exchange part 1223 extends to be close to the first heat exchange part 1211 which is farthest away from the corresponding second heat exchange part 1221, or, the other end of each fourth heat exchange part 1223 extends to exceed the first heat exchange part 1211 which is farthest away from the corresponding second heat exchange part 1221.

Therefore, the length of the fourth heat exchange parts 1223 can be increased so as to increase the heat exchange area of the fourth heat exchange parts 1223, thus the heat exchange effect of the first heat exchange member 102 is further improved and the layout of the first heat exchange tubes 1a is also easy to realize.

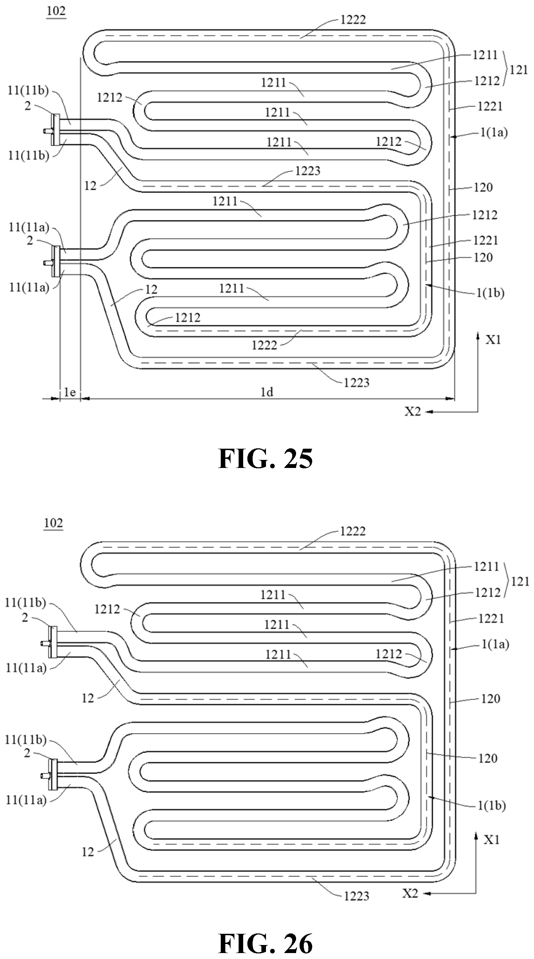

With reference to FIG. 25, in some embodiments, the first heat exchange sections 121 can include a plurality of first heat exchange parts 1211 which are sequentially connected in a bent way in the first direction; the second heat exchange parts 1221 are located on the sides of the plurality of first heat exchange parts 1211 along the second direction, the third heat exchange parts 1222 are located on one of the plurality of first heat exchange parts 1211 along the first direction, and the first direction and the second direction are arranged by an included angle; the first ends of the third heat exchange parts 1222 are connected to the ends of the second heat exchange parts 1221 along the first direction, the second ends of the third heat exchange parts 1222 are connected to the one, which is closest to the third heat exchange part 1222, of the plurality of first heat exchange parts 1211 along the first direction, and the fourth heat exchange part 1223 is located on the other side of the plurality of first heat exchange parts 1211 along the first direction; and one end of each fourth heat exchange part 1223 is connected to one end of the corresponding second heat exchange part 1221 deviating from the third heat exchange part 1222, and the other end of each fourth heat exchange part 1223 extends towards a direction deviating from the second heat exchange part 1221 along the second direction.

The plurality of first heat exchange parts 1211 are sequentially connected in the bent way in the first direction, namely, the plurality of first heat exchange parts 1211 are sequentially arranged in the first direction; and in the first direction, every two adjacent and connected first heat exchange parts 1211 are connected in the bent way. The first heat exchange parts 1211 can extend along a straight line parallel to the second direction, can also extend along a straight line that forms an angle in the second direction, and can also extend along a curve and/or a broken line in the second direction.

It is to be understood that the fourth heat exchange parts 1223, the second heat exchange parts 1221, the third heat exchange parts 1222, and the first heat exchange part 1211 that is closest to the third heat exchange parts 1222 are sequentially connected, and the plurality of first heat exchange parts 1211 are arranged at intervals in the first direction and are sequentially connected in a bent way. Therefore, the heat exchange media can sequentially flow through the fourth heat exchange parts 1223, the second heat exchange parts 1221, and the third heat exchange parts 1222, and then enter the first heat exchange sections 121; and in the first heat exchange sections 121, the fluid firstly flows through the first heat exchange part 1211 that is closest to the third heat exchange parts 1222 and finally flows to the first heat exchange part 1211 that is farthest away from the third heat exchange part 1222; or, the heat exchange media can firstly flow into the first heat exchange sections 121; in the first heat exchange sections 121, the media firstly flow through the first heat exchange part 1211 that is farthest away from the third heat exchange part 1222, flow out of the first heat exchange part 1211 that is closest to the third heat exchange part 1222, then flow to the third heat exchange parts 1222 and finally sequentially flow through the second heat exchange parts 1221 and the fourth heat exchange parts 1223 by the third heat exchange parts 1222.

In the above embodiment, the second heat exchange parts 1221 are arranged on one side of the plurality of first heat exchange parts 1211 in the second direction, the third heat exchange parts 1222 are arranged on one side of the plurality of first heat exchange parts 1211 in the first direction, the fourth heat exchange parts 1223 are arranged on the other side of the plurality of first heat exchange parts 1211 in the first direction, and thus the layout of another first heat exchange tubes 1a is limited, the diversity of the first heat exchange tubes 1a can be increased, the heat exchange requirements of different batteries 200 are met, the structures of the first heat exchange tubes 1a are simplified, and machining and manufacturing are facilitated.

By way of example, as shown in FIG. 25, the first heat exchange parts 1211, the third heat exchange parts 1222, and the fourth heat exchange parts 1223 extend in the second direction, and the second heat exchange parts 1221 extend in the first direction. Further, the first heat exchange parts 1211, the third heat exchange parts 1222, and the fourth heat exchange parts 1223 extend linearly in the second direction, and the second heat exchange parts 1221 extend linearly in the first direction. The linear structure is simple, production is convenient, arrangement is convenient, and therefore, the production complexity and the production cost of the first heat exchange flow channel 10 can be further reduced.

By way of example, the second heat exchange parts 1221 and the third heat exchange parts 1222 are in transition connection through an arc-shaped bending part, and the third heat exchange parts 1222 and the first heat exchange parts 1211 are in transition connection by an arc-shaped bending part, so that the flowing direction of the heat exchange media is changed, and the second heat exchange sections 122 extend in a preset area and exchange heat with the battery cells 100. Moreover, the arc-shaped bending parts can reduce the flowing resistance of the fluid and reduce the pressure drop, and therefore the flowing rate of the heat exchange media can be increased, and the heat exchange efficiency is further improved. In some examples, the arc-shaped bending part between the second heat exchange parts 1221 and the third heat exchange parts 1222 and the arc-shaped bending part between the third heat exchange parts 1222 and the first heat exchange parts 1211 are each in a quarter-arc shape, and therefore after the fluid passes through the arc-shaped bending parts, the flowing direction of the fluid is changed to be vertical to the original flowing direction from the original flowing direction; and moreover, the flowing resistance of the fluid can be reduced through the arc shape, the fluid can flow smoothly in the arc-shaped bending parts, and a situation that the heat exchange efficiency is reduced due to slow medium flowing is effectively prevented.

With reference to FIG. 23, in some embodiments, the second heat exchange sections 122 further include fifth heat exchange parts 1224; the fifth heat exchange parts 1224 extend along the peripheral edges of the fourth sides of the first heat exchange sections 121, and seal at least part of an opening of the U-shaped area 120 formed by the second heat exchange parts 121, the third heat exchange parts 122, and the fourth heat exchange parts 125; and one first heat exchange part 1211 can extend along the peripheral edges of the fourth sides of the first heat exchange sections 121.

It is to be understood that the fifth heat exchange parts 1224 can seal part of the opening of the U-shaped area 120 and can also completely seal the opening of the U-shaped area 120, so that the second heat exchange sections 122 can basically cover the peripheral edge position of the battery 200 and exchange heat with the peripheral edge, the second heat exchange sections 122 can exchange heat with all the or most of the peripheral edges of the battery assembly; and therefore, the structures of the first heat exchange tubes 1a can be arranged according to an actual arrangement mode or heat exchange requirements of the plurality of battery cells 100, thus the heat exchange structure is optimized, and the heat exchange efficiency is improved.

In the above embodiment, by arranging the fifth heat exchange parts 1224, the second heat exchange sections 122 can exchange heat with the peripheral edges of the four sides of the assembly formed by all the battery cells 100, and the peripheral edges of the four sides of the assembly formed by the plurality of battery cells 100 can be subjected to heat exchange by the second heat exchange section 12 of one first heat exchange tube 1a, thereby improving the heat exchange effect of the peripheral edges of the four sides of the battery 200 and improving the temperature uniformity of the battery 200.

In some examples, the fifth heat exchange parts 1224 and the first heat exchange parts 1221 are oppositely arranged, the fifth heat exchange parts 1224 extend in the second direction and are connected between the second ends of the third heat exchange parts 1222 and the first heat exchange sections 111; the fifth heat exchange parts 1224 and the third heat exchange parts 1222 are connected at an included angle; and the fifth heat exchange parts 1224 and the first heat exchange sections 111 are connected at an included angle.

It is to be noted that in the embodiment of the present application, that "the fifth heat exchange parts 1224 and the third heat exchange parts 1222 are connected at an included angle" and that "the fifth heat exchange parts 1224 and the first heat exchange sections 111 are connected at an included angle" refer to that the two corresponding parts are connected and are arranged at an angle greater than 0° and smaller than or equal to 180°; and obviously, the second heat exchange parts 1222 and the second heat exchange parts 1221 are arranged at an angle greater than 0° and smaller than 180°, and the fourth heat exchange parts 1223 and the second heat exchange parts 1221 are arranged at an angle greater than 0° and smaller than 180°.

In some embodiments, the first heat exchange sections 121 are connected to the downstream of the second heat exchange sections 122 in the medium flowing direction, that is, the heat exchange media flow through the second heat exchange sections 122 and then flow into the first heat exchange sections 121, in which, the second heat exchange sections 122 are arranged around the first heat exchange sections 121 in the circumferential direction; when the first heat exchange tubes 1a exchange heat with the battery cells 100, because the peripheral temperature of the assembly (hereinafter referred to as the battery assembly) formed by all the battery cells 100 is high in heat dissipation speed, especially under the low-temperature heating condition, the high-temperature heat exchange media start to exchange heat from the second heat exchange sections 122, the first heat exchange tubes 1a can preferentially exchange heat on the outer side of the battery assembly in the circumferential direction, then the internal and external temperature difference of the battery assembly can be improved, and the service life of the battery 200 is prolonged to a certain extent.

In some embodiments, the first heat exchange member 102 is configured as that when heating the battery cells 100, the first connecting sections 121 are connected to the downstream of the second heat exchange sections 122 in the medium flowing direction; and when cooling the battery cells 100, the first heat exchange sections 121 are connected to the upstream of the second heat exchange sections 122 in the medium flowing direction.

Specifically, when heating the battery assembly of the battery 200, the temperature of the heat exchange media flowing in the first heat exchange member 102 is higher than the operation temperature of the battery 200, the first exchange member 102 heats the battery assembly, the high-temperature heat exchange media flow into the second heat exchange sections 122 and then flow to the first heat exchange sections 121, and the temperature of the heat exchange media flowing in the second heat exchange sections 122 is higher than the temperature of the heat exchange media flowing in the first heat exchange sections 121.

The high-temperature media firstly enter the second heat exchange sections 122 at the periphery of the first heat exchange tubes 1a, and the second heat exchange sections 122 can heat the battery cells 100 at the periphery of the battery assembly; and after the heat exchange media enter the first heat exchange sections 121, the battery cell 100 in the middle of the battery assembly can be cooled. The battery cells 100 at the periphery of the battery assembly radiate more heat to an external environment, so the temperature of the battery cells 100 at the periphery of the battery assembly greatly decreases; the heat exchange media firstly heat the battery cells 100 at the periphery of the battery assembly, and the heat exchange media with a relatively high temperature can be make up the heat lost by the battery cells 100 due to the heat radiation to the external environment while raising the temperature of the battery cells 100 at the periphery, so that the heating requirements are met; the contact area between the battery cell 100 in the middle of the battery assembly and the external environment is small, so the heat loss is small; the heat exchange media with relatively low temperature flowing in the first heat exchange sections 121 can be matched with the heat generated by the battery cells 100 to meet the heating requirements very well, so that the heating effects of the battery cells 100 at the periphery of the battery assembly and the battery cell 100 in the middle of the battery assembly are basically consistent, and furthermore, the temperature of the battery cells 100 at the periphery of the battery assembly is consistent with the temperature of the battery cell 100 in the middle of the battery assembly after heating to increase the temperature, and thus the temperature distribution in the battery 200 is more uniform.

When cooling the battery assembly of the battery 200, the temperature of the heat exchange media flowing in the first heat exchange member 102 is lower than the operation temperature of the battery 200 and the first heat exchange member 102 is configured to cool the battery 200; and the heat exchange media flow to the second heat exchange sections 122 from the first heat exchange sections 121, and the temperature of the heat exchange media flowing in the first heat exchange sections 121 is lower than the temperature of the heat exchange media in the second heat exchange sections 122.

When cooling to decrease the temperature of the battery 200, the heat exchange media flow from the first heat exchange sections 121 to the second heat exchange sections 122, namely, the heat exchange media flow from the middle part of the battery assembly to the edge position of the battery assembly and exchange heat. The heat dissipation condition of the battery cells 100 at the peripheral edge position of the battery 200 is better than that of the internal battery cell 100, so that the heat exchange media with relatively low temperature of the first heat exchange sections 121 can better meet the heat dissipation requirement of the battery cell 100 in the middle of the battery assembly; moreover, the battery cells 100 at the peripheral edge position of the battery assembly can directly and naturally dissipate heat to the external environment, so the heat dissipation requirement of the peripheral battery cells 100 can still be met even if the temperature of the heat exchange media of the second heat exchange sections 122 is slightly high, and furthermore, the cooling effects of the battery cells 100 at the peripheral edge position of the battery assembly and the battery cell 100 in the middle of the battery assembly are roughly consistent; and the temperature of the battery cells 100 at the peripheral edge position of the battery assembly is consistent with the battery cell 100 in the middle of the battery assembly after cooling and heat dissipation, therefore, the internal and external temperature difference of the battery assembly is reduced, and the temperature distribution in the battery 200 is more uniform.

With reference to FIG. 25 to FIG. 27, in some embodiments, the first heat exchange member 102 also includes second heat exchange tubes 1b; the second heat exchange tubes 1b and the first heat exchange tubes 1a are arranged on the same side of the battery cells 100; at least part of the second heat exchange tubes 1b are arranged in the U-shaped areas 120 of the first heat exchange tubes 1a in a bent manner, namely, part of the second heat exchange tubes 1b are arranged in the U-shaped areas 120 of the first heat exchange tubes 1a in a bent manner, or, the second heat exchange tubes 1b are completely arranged in the U-shaped areas 120 of the first heat exchange tubes 1a in a bent manner; and the second heat exchange tubes 1b and the first heat exchange tubes 1a have the same or different bending structures.

For example, when the second heat exchange tubes 1b and the first heat exchange tubes 1a have the same bending structures, the second heat exchange tubes 1b can include the U-shaped areas 120 which are the same as the first heat exchange tubes 1a in structure; the second heat exchange tubes 1b also include a plurality of first heat exchange parts, second heat exchange parts, third heat exchange parts, and fourth heat exchange parts; the fourth heat exchange parts, the second heat exchange parts, and the third heat exchange parts of the second heat exchange tubes 1b are sequentially connected to form a U-shaped structure in a bent manner; the plurality of first heat exchange parts of the second heat exchange tubes 1b are arranged in the U-shaped areas 120 of the second heat exchange tubes 1b; the plurality of first heat exchange parts are arranged at intervals and are sequentially connected in a bent manner; and the first heat exchange parts, the second heat exchange parts, the third heat exchange parts, and the fourth heat exchange parts of the second heat exchange tubes 1b are arranged in the U-shaped areas 120 of the first heat exchange tubes 1a.

Definitely, in other examples, the second heat exchange tubes 1b and the first heat exchange tubes 1a have different bending structures.

In the above technical solution, by arranging the second heat exchange tubes 1b, the diversity of the heat exchange flow channels 10 of the first heat exchange member 102 can be increased, the arrangement of the heat exchange flow channels 10 is more flexible, the heat exchange effect of the first heat exchange member 102 is further improved, and the temperature uniformity of the battery 200 is improved.

By way of example, for the second heat exchange tubes 1b, the plurality of first heat exchange parts 1211 are sequentially connected in a bent mode in the first direction, the second heat exchange parts 1221 are located on the sides of the plurality of first heat exchange parts 1211 along the second direction, the third heat exchange parts 1222 are located on one side of the plurality of first heat exchange parts 1211 along the first direction, and the first direction and the second direction are arranged by an included angle; the first ends of the third heat exchange parts 1222 are connected to the ends of the second heat exchange parts 1221 along the first direction, the second ends of the third heat exchange parts 1222 are connected to one, which is closest to the third heat exchange parts 1222, of the plurality of first heat exchange parts 1211 along the first direction, and the fourth heat exchange parts 1223 are located on the other side of the plurality of first heat exchange parts 1211 along the first direction; and one end of each fourth heat exchange part 1223 is connected to the end of the corresponding second heat exchange part 1221 away from the corresponding third heat exchange part 1222, and the other end of each fourth heat exchange part 1223 extends towards a direction away from the corresponding second heat exchange part 1221 along the second direction.

Definitely, in other examples, for the second heat exchange tubes 1b, the plurality of first heat exchange parts 1211 are sequentially connected in a bent mode in the first direction, the second heat exchange parts 1221 are located on the sides of the plurality of first heat exchange parts 1211 along the first direction, the third heat exchange parts 1222 are located on one side of the plurality of first heat exchange parts 1211 along the second direction, and the first direction and the second direction are arranged by an included angle; the first ends of the third heat exchange parts 1222 are connected to the ends of the second heat exchange part 1221 along the second direction, the second ends of the third heat exchange parts 1222 are connected to one, which is closest to the second heat exchange parts 1221, of the plurality of first heat exchange parts 1211 along the first direction, and the fourth heat exchange parts 1223 are located on the other side of the plurality of first heat exchange parts 1211 along the second direction; and one end of each fourth heat exchange part 1223 is connected to the end of the corresponding second heat exchange part 1221 away from the corresponding third heat exchange part 1222, and the other end of each fourth heat exchange part 1223 extends towards a direction away from the corresponding second heat exchange part 1221 along the first direction.

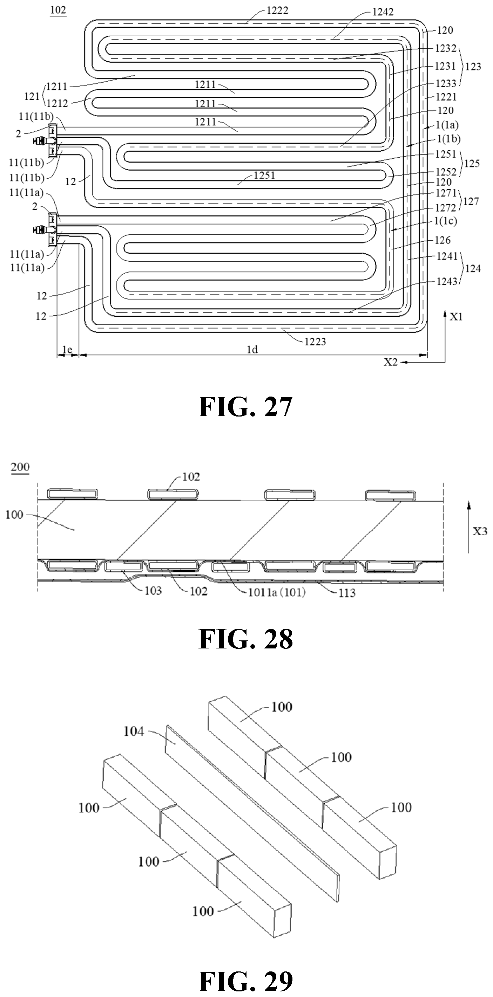

With reference to FIG. 27, in some embodiments, the second heat exchange tubes 1b include the U-shaped areas 120 which have the same structure as the first heat exchange tubes 1a; at least part of the first heat exchange sections 121 of the first heat exchange tubes 1a are arranged in the U-shaped areas 120 of the second heat exchange tubes 1b, part of the first heat exchange sections 121 of the first heat exchange tubes 1a are arranged in the U-shaped areas 120 of the second heat exchange tubes 1b, or, the first heat exchange tubes 121 of the first heat exchange tubes 1a are completely arranged in the U-shaped areas 120 of the second heat exchange tubes 1b.

In the above technical solution, at least part of the first heat exchange sections 121 of the first heat exchange tubes 1a are arranged in the U-shaped areas 120 of the second heat exchange tubes 1b so that the first heat exchange tubes 1a and the second heat exchange tubes 1a are arranged in the mutually winding manner, therefore, a winding manner of the plurality of heat exchange tubes 1 can be arranged according to heat exchange requirements of all the parts of the battery assembly, the heat exchange effect of the first heat exchange member 102 is further increased and the temperature uniformity of the battery 200 is improved.

With reference to FIG. 27, in some embodiments, the second heat exchange tubes 1b include third heat exchange sections 123 and fourth heat exchange sections 124 which are connected in a bent way; the third heat exchange sections 123 and the fourth heat exchange sections 124 are bent to form the U-shaped areas 120 respectively; the third heat exchange sections 123 are arranged in the U-shaped areas 120 of the fourth heat exchange sections 124; and at least part of the first heat exchange sections 121 of the first heat exchange tubes 1a are arranged in the U-shaped areas 120 of the third heat exchange sections 123.

In the embodiment of the present application, the U-shaped areas 120 of the third heat exchange sections 123 and the U-shaped areas 120 of the fourth heat exchange sections 124 can have the same or different opening direction. By way of example, the U-shaped areas 120 of the third heat exchange sections 123 and the U-shaped areas 120 of the fourth heat exchange sections 124 have the same opening direction, three heat exchange parts of the third heat exchange sections 123 and three heat exchange parts of the fourth heat exchange sections 124 can be arranged in parallel respectively, so that the arrangement of the second heat exchange tubes 1b is simplified, and moreover, the avoidance is provided for at least part of the first heat exchange sections 121 of the first heat exchange tubes 1a to extend into the U-shaped areas 120 of the third heat exchange sections 123.

In the above technical solution, at least part of the first heat exchange sections 121 of the first heat exchange tubes 1a are arranged in the U-shaped areas 120 of the third heat exchange sections 123, the at least part of the first heat exchange sections 121 of the first heat exchange tubes 1a are also arranged in the U-shaped areas 120 of the fourth heat exchange sections 124, thus the winding arrangement of the first heat exchange tubes 1a and the second heat exchange tubes 1b is conveniently simplified on the premise that the first heat exchange tubes 1a and the second heat exchange tubes 1b are mutually wound, meanwhile, the heat exchange effect is further improved, and the temperature uniformity of the battery 200 is improved.

By way of example, as shown in FIG. 27, the third heat exchange sections 123 include seventh heat exchange parts 1231, eighth heat exchange parts 1232, and ninth heat exchange parts 1233; the eighth heat exchange parts 1232 and the ninth heat exchange parts 1233 are respectively connected to two ends of the length of the seventh heat exchange parts 1231 in a bent way; the fourth heat exchange sections 124 include tenth heat exchange parts 1241, eleventh heat exchange parts 1242, and twelfth heat exchange parts 1243; and the eleventh heat exchange parts 1242 and the twelfth heat exchange parts 1243 are respectively connected to two ends of the length of the tenth heat exchange parts 1241 in a bent way.

In some examples, the seventh heat exchange parts 1231 and the tenth heat exchange parts 1241 extend in parallel; and the eighth heat exchange parts 1232, the ninth heat exchange parts 1233, the eleventh heat exchange parts 1242, and the twelfth heat exchange parts 1243 extend in parallel; and in other examples, the seventh heat exchange parts 1231 and the tenth heat exchange parts 1241 also can be arranged by an included angle.

With reference to FIG. 27, in some embodiments, the second heat exchange tubes 1b also include fifth heat exchange sections 125; the fifth heat exchange sections 125 include a plurality of sixth heat exchange parts 1251 and second bending parts 1252; the plurality of sixth heat exchange parts 1251 are arranged at intervals along the first direction, and each first heat exchange part 1211 extends along the second direction; the second bending parts 1252 are connected between two adjacent sixth heat exchange parts 1251 in a bent way, so that the plurality of sixth heat exchange parts 1251 are sequentially connected; and the second direction and the first direction are arranged by an included angle.

The fifth heat exchange sections 125 are arranged between the third heat exchange sections 123 and the fourth heat exchange sections 124; and/or, the fifth heat exchange sections 125 are arranged between the third heat exchange sections 123 and corresponding ports 11 (namely the ports 11 corresponding to the ends of the third heat exchange sections 123 deviating from the fourth heat exchange sections 124). Therefore, the fifth heat exchange sections 125 are arranged on at least one of two ends of the third heat exchange sections 123 in the length direction; and the fifth heat exchange sections 125 can be arranged in the U-shaped areas 120 of the fourth heat exchange sections 124 and are located outside the U-shaped areas 120 of the third heat exchange sections 123.

In some examples, the second bending parts 1252 are arc-shaped and a certain included angle is formed between fluid flowing directions of two ends of the second bending parts 1252, so that the second bending parts 1252 can change the flowing direction of fluid, and two connected sixth heat exchange parts 1251 can be arranged in a pre-set area in an extending manner, and furthermore, the heat exchange area of the fifth heat exchange sections 125 can be increased, and the heat exchange efficiency of the fifth heat exchange sections 125 is improved. Moreover, the second bending parts 1252 are arc-shaped and the arc shape can reduce the flowing resistance of the fluid and reduce pressure drop, so that the flowing speed of the fluid can be improved, and the heat exchange efficiency of the fifth heat exchange sections 125 is further improved. Furthermore, the second heat exchange tubes 1b have a more compact structure and occupy a smaller space, so that the miniaturization design of the battery 200 is convenient to realize.

By way of example, the second bending parts 1252 are semi-arc-shaped so that the two sixth heat exchange parts 1251 which are parallel to each other and are arranged at an interval are convenient to connect, the design diversity of the heat exchange flow channel 10 is easy to increase, the adaptability of the second heat exchange tubes 1b to the plurality of battery cells 100 is improved, the structure is simple and the production is convenient to realize. Definitely, the bending angle of the second bending parts 1252 can be adjusted according to requirements, for example, the bending angle can be 150°, or 135°.

In addition, the number of the second bending parts 1252 can be one, two, three or more; and the second bending parts 1252 enable the second heat exchange tube 1b to be arranged in a circuitous manner, so that the heat exchange area of the second heat exchange tubes 1b is convenient to increase and the heat exchange efficiency is improved.

In the above technical solution, by arranging the fifth heat exchange sections 125, the heat exchange area of the second heat exchange tubes 1b is further increased, the heat exchange effect of the second heat exchange tubes 1b is improved, and moreover, the temperature control to the internal battery cells 100 is facilitated; and moreover, the arrangement of the fifth heat exchange sections 125 cannot affect the mutual winding between the first heat exchange tubes 1a and the second heat exchange tubes 1b.

With reference to FIG. 27, in some embodiments, the first heat exchange member 102 also includes third heat exchange tubes 1c; at least part of the third heat exchange tubes 1c are arranged in the U-shaped areas 120 of the second heat exchange tubes 1b in a bent manner; part of the third heat exchange tubes 1c are arranged in the U-shaped areas 120 of the second heat exchange tubes 1b in a bent manner, or, the third heat exchange tubes 1c are completely arranged in the U-shaped areas 120 of the second heat exchange tubes 1b in a bent manner; and at least part of the third heat exchange tubes 1c arranged in the U-shaped areas 120 of the second heat exchange tubes 1b are non-linear.

In the above technical solution, at least part of the third heat exchange tubes 1c are arranged in the U-shaped areas 120 of the second heat exchange tubes 1b in a bent way, so that the good temperature control to the internal battery cells 100 is further achieved, the temperature distribution of the whole battery 200 is improved, and the temperature uniformity of the battery 200 is improved.

It is to be understood that when the second heat exchange tubes 1b include the third heat exchange sections 123 and the fourth heat exchange sections 124 which are connected in a bent manner, the third heat exchange sections 123 and the fourth heat exchange sections 124 are bent to form the U-shaped areas 120 respectively; and at least part of the third heat exchange tubes 1c can be arranged in the U-shaped areas 120 of the third heat exchange sections 123 in a bent manner, and/or, at least part of the third heat exchange tubes 1c can be arranged in the U-shaped areas 120 of the fourth heat exchange sections 124 in a bent manner.

In the embodiment of the present application, the bending arrangement of the part of the third heat exchange tubes 1c arranged in the U-shaped areas 120 of the second heat exchange tubes 1b is not specifically limited, for example, the third heat exchange tubes 1c are approximately S-shaped, but not limited thereto. As shown in FIG. 27, the third heat exchange tubes 1c include the sixth heat exchange sections 126 and the seventh heat exchange sections 127; the sixth heat exchange sections 126 are bent to form the U-shaped areas 120, the seventh heat exchange sections 127 are arranged in the U-shaped areas 120 of the sixth heat exchange sections 126 in a bent way, and the seventh heat exchange sections 127 are connected to the sixth heat exchange sections 126 in a bent way.

In some examples, the seventh heat exchange sections 127 include a plurality of thirteenth heat exchange parts 1271 and third bending parts 1272; the plurality of thirteenth heat exchange parts 1271 are arranged at intervals along the first direction, and each thirteenth heat exchange part 1271 extends along the second direction; and the third bending parts 1272 are arc-shaped and are connected between two adjacent thirteenth heat exchange parts 1271 in a bent way, so that the plurality of thirteenth heat exchange parts 1271 are sequentially connected; definitely, the plurality of thirteenth heat exchange parts 1271 can also be arranged at intervals along the second direction, and each thirteenth heat exchange part 1271 extends along the first direction, but not limited thereto.

With reference to FIG. 6, in some embodiments, the fixed beam 105 is constructed to be the first expansion beam B1, and the fixed beam 105 includes a beam body 1051 and a reinforcement partition plate 1052; a cavity 1051a is defined by the beam body 1051, and the reinforcement partition plate 1052 is arranged in the cavity 1051a; the reinforcement partition plate 1052 is provided with a plurality of connecting parts 1052a which are arranged at intervals, and the plurality of connecting parts 1052a include the first connecting parts 1052b and the second connecting parts 1052c; the first connecting parts 1052b and the second connecting parts 1052c are connected to two opposite side walls of the beam body 1051 correspondingly, so that the cavity 1051a is divided into a plurality of chambers 1051b by the reinforcement partition plate 1052; and the first connecting parts 1052b and the second connecting parts 1052c are arranged in a staggered mode.

For example, the first connecting parts 1052b and the second connecting parts 1052c are connected to the two width side walls of the beam body 1051 correspondingly, and in the height direction of the beam body 1051, the first connecting parts 1052b and the second connecting parts 1052c are arranged in a staggered mode, so that one of every two adjacent connecting parts 1052a is the first connecting part 1052b, and the other one is the second connecting part 1052c.

In the above technical solution, the first expansion beam B1 includes the beam body 1051 and the reinforcement partition plate 1052, the reinforcement partition plate 1052 is arranged in the cavity 1051a and divides the cavity 1051a of the beam body 1051 into the plurality of chambers 1051b, so that the reinforcement partition plate 1052 plays a certain role in supporting and reinforcing the two opposite sides of the beam body 1051, the structural strength, bearing capacity and structural stability of the first expansion beam B1 are improved, and accordingly the use reliability of the first expansion beam B1 is improved.

By way of example, the two sides of the beam body 1051 in the width direction are connected to the reinforcement partition plate 1052, thus the reinforcement partition plate 1052 can support the beam body 1051 in the width direction of the beam body 1051, the supporting direction of the reinforcement partition plate 1052 is basically opposite to the expansion force direction of battery cells 100, and reliable supporting to the battery cells 100 is achieved; and at the moment, each chamber 1051b extends in the length direction of the first expansion beam B1.

With reference to FIG. 6, in some embodiments, the beam body 1051 includes a first plate body A1 and a second plate body A2 which are oppositely arranged, the first plate body A1 and the second plate body A2 are connected and jointly define a cavity 1051a, the reinforcement partition plate 1052 is arranged between the first plate body A1 and the second plate body A2 and is further provided with a third connecting part 1052d, and the third connecting part 1052d is clamped between the first plate body A1 and the second plate body A2 and is connected to the first plate body A1 and the second plate body A2.

By way of example, the first plate body A1, the second plate body A2, and the reinforcement partition plate 1052 extend in the length direction of the first expansion beam B1; the first plate body A1, the reinforcement partition plate 1052, and the second plate body A2 can be stacked in the width direction of the first expansion beam B1, which facilitates the assembling of the first expansion beam B1; meanwhile, the third connecting part 1052d is arranged, thus the connecting reliability of the reinforcement partition plate 1052 and the beam body 1051 can be improved. The first connecting parts 1052b can be connected to the first plate body A1, and the second connecting part 1052c can be connected to the second plate body A2.

In the above technical solution, the beam body 1051 includes the first plate body A1 and the second plate body A2, the reinforcement partition plate 1052 is arranged between the first plate body A1 and the second plate body A2, the reinforcement partition plate 1052 is connected to the first plate body A1 through the first connecting part 1052b and the third connecting part 1052d, and the reinforcement partition plate 1052 is connected to the second plate body A2 through the second connecting part 1052c and the third connecting part 1052d; and the first expansion beam B1 is simple in structure, convenient to assemble and good in structural stability.

With reference to FIG. 6, in some embodiments, the battery 200 further includes the second expansion beam B2 which is arranged at an interval with the first expansion beam B1; the battery cell 100 is arranged between the first expansion beam B1 and the second expansion beam B2; a third fixing member 111 is arranged in the cavity 1051a of the first expansion beam B1, and a fourth fixing member 112 is arranged in the cavity 1051a of the second expansion beam B2; the battery 200 further includes a pull rope 110 which penetrates to the corresponding cavity 1051a; and the pull rope 110 is connected to the third fixing member 111 and the fourth fixing member 112.

In the above technical solution, the pull rope 110 is connected to the third fixing member 111 and the fourth fixing member 112, thus when the battery cell 100 between the first expansion beam B1 and the second expansion beam B2 is expanded and deformed, the pull rope 110 can apply an acting force to the first expansion beam B1 and the second expansion beam B2 to resist the expansion force of the battery cell 100, thereby improving the reliability of the battery 200; and moreover, the third fixing member 111 and the fourth fixing member 112 are arranged in cavities 1051a of the corresponding expansion beams, so that even if the connection between at least one of the third fixing member 111 and the fourth fixing member 112 and the corresponding expansion beam fails, the at least one of the third fixing member 111 and the fourth fixing member 112 can be limited in the cavities 1051a of the corresponding expansion beams, and the risk that the at least one of the third fixing member 111 and the fourth fixing member 112 is separated from the corresponding expansion beams to cause failure of the pull rope 110 is reduced.

In some examples, when the battery 200 includes the first expansion beam B1 and the second expansion beam B2, the avoiding space 200a can be formed between the first expansion beam B1 and the box 101, the first heat exchange member 102 is arranged in the avoiding space 200a in a penetrating mode, and the avoiding space 200a is not formed between the second expansion beam B2 and the box 101.

Definitely, the structural type of the fixed beam 105 is not limited.

With reference to FIG. 3 and FIG. 16, in some embodiments, the box 101 includes a first box body 101, the first box body 101 is an integrally stamped member (for example, the first box body 101 is an integrally stamped member made of a sheet metal), the first box body 101 includes a bottom wall 1011a and an enclosure 1011b, the enclosure 1011b is arranged around the bottom wall 1011a, and the fixed beam 105 is connected to the bottom wall 1011a and the enclosure 1011b. The first heat exchange member 102 is arranged between at least one of the enclosure 1011a and the enclosure 1011b and the battery cell 100, and/or, the first heat exchange member 102 is arranged between the top wall of the box 101 and the battery cells 100.

It is to be understood that the enclosure 1011b can include a plurality of side walls which are sequentially connected end to end, the enclosure 1011b and the bottom wall 1011a can be matched to form an accommodating space, and the accommodating space can form at least part of the internal space of the box 101; and when the first heat exchange assembly 102 is arranged between the enclosure 1011b and the battery cells 100, the first heat exchange member 102 can be arranged between at least one of the plurality of side walls and the battery cells 100.

In the related technologies, the bottom wall 1011a and the enclosure 1011b of the box 101 are split members such as a profile box 101, are connected by a plurality of connecting members to realize sealing between the bottom wall 1011a and the enclosure 1011b, and the number of the connecting members is large and even can reach more than 100, so that the box 101 is tedious to assemble and low in assembling efficiency.

In the above technical solution, the first box body 101 including the bottom wall 1011a and the enclosure 1011b is arranged to be the integrated punch forming member, so that the forming of the first box body 101 is facilitated, the cost of the first box body 101 is reduced, and the first box body 101 has good structural strength; and meanwhile, the sealing between the bottom wall 1011a and the enclosure 1011b is realized by the structure of the first box body 101, so that the sealing performance of the bottom of the first box body 101 is improved, the plurality of connecting members such as bolts for realizing sealing of the bottom of the first box body 101 in the box 101 can be saved, the connecting process of the bottom wall 1011a and the enclosure 1011b is saved, and the assembling efficiency of the box 101 is improved.

With reference to FIG. 3, FIG. 16, and FIG. 28, in some embodiments, the box 101 is provided with the top wall, the bottom wall 1011a, and the enclosure 1011b, the enclosure 1011b is arranged between the top wall and the bottom wall 1011a, and at least one of the top wall, the bottom wall 1011a, and the enclosure 1011b is provided with the first heat exchange member 102.

In the above technical solution, at least one of the top wall, the bottom wall 1011a, and the enclosure 1011b is provided with the first heat exchange member 102, so that the number and arrangement position of the first heat exchange members 102 can be flexibly set according to actual requirements, and diversified design of the battery 200 can be conveniently realized, so that actual differentiation requirements can be better met.

In some embodiments, the fixed beam 105 is constructed to be the first expansion beam B1, and the fixed beam 105 abuts against the battery cells 100; the top wall is provided with the first heat exchange member 102, and the first heat exchange member 102 on the top wall is connected to the fixed beam 105. Therefore, the first heat exchange member 102 on the top wall can play a certain role in restraining the fixed beam 105, so that the bearing capacity of the fixed beam 105 can be improved.

With reference to FIG. 28 and FIG. 29, in some embodiments, the battery 200 further includes at least one of a second heat exchange member 103 and a third heat exchange member 104; the at least one of the second heat exchange member 103 and the third heat exchange member 104 is used for exchanging heat with the battery cells 100; the second heat exchange member 103 is attached to the outside of the box 101; and the third heat exchange member 104 is arranged between two adjacent battery cells 100.

When the battery 200 includes the second heat exchange member 103, the second heat exchange member 103 can be attached to the outer wall of the box 101, so that heat exchange with the battery cell 100 can be realized through the box 101; the second heat exchange member 103 and the battery cells 100 are separated through the box 101, thus the insulation arrangement between the second heat exchange member 103 and the battery cell 100 does not need to be considered, the insulation design of the second heat exchange member 103 can be simplified, the arrangement of the battery 200 can be simplified, and the processing difficulty and the production cost can be reduced; moreover, the second heat exchange member 103 does not occupy the space in the box 101, so that the capacity of the battery 200 cannot be reduced due to the second heat exchange member 103; and/or, when the battery 200 includes the third heat exchange member 104, the third heat exchange member 104 can exchange heat with the adjacent battery cell 100, and therefore, the third heat exchange member 104 can exchange heat with at least two battery cells 100.

In the embodiment of the present application, when the battery 200 includes the second heat exchange member 103, the arrangement position of the second heat exchange member 103 is not specifically limited; for example, the second heat exchange member 103 can be arranged on a lower side of the bottom wall 1011a of the box 101, thus the second heat exchange member 103 can exchange heat with the battery cells 100 in a relatively range, and the temperature regulation effect and the temperature regulation efficiency of the battery cells 100 are improved; and at the moment, a bottom protection plate 113 can be arranged below the second heat exchange member 103, so that the second heat exchange member 103 can be protected more reliably, the risk that the second heat exchange member 103 is collided and damaged is reduced, and the working reliability of the second heat exchange member 103 is improved.

In the above technical solution, the battery 200 includes at least one of the second heat exchange member 103 and the third heat exchange member 104, thus the temperature control capability of the heat exchange member 1020 on the battery cells 100 is improved, the heat management performance of the battery 200 is improved, and meanwhile, the temperature control on the battery cell 100 is conveniently realized by different heat transfer paths according to different heat exchange requirements of the battery cells 100.

In a second aspect, the embodiment of the present application provides an electrical apparatus 1000 which includes the above battery 200, and the battery 200 is configured to provide electric energy.

In the above technical solution, an electrical apparatus 1000 adopts the above battery 200, and thus the use reliability of the electrical apparatus 1000 is improved.

The battery 200 in the embodiment of the present application with reference to the accompanying drawings again.

### Embodiment 1

With reference to FIG. 16 to FIG. 19 and FIG. 23, a battery 200 includes a box 101, a fixed beam 105, and a plurality of battery cells 100; all the battery cells 100 are arranged in the box 101; the battery 200 further includes a first heat exchange member 102; the first heat exchange member 102 and the fixed beam 105 are arranged in the box 101 at an interval, so that heat insulation between the first heat exchange member 102 and the fixed beam 105 is realized; and the first heat exchange member 102 is located between the box 101 and the battery cells 100 and is used for exchanging heat with all the battery cells 100. The box 101 includes a first box body 101 and a second box body 102, the first box body 101 is a sheet metal integrated punch forming member and includes a bottom wall 1011a and an enclosure 1011b, the enclosure 1011b is arranged around the bottom wall 1011a, and the first heat exchange member 102 is located between the bottom wall 1011a and the battery cells 100.

The fixed beam 105 is constructed to be a first expansion beam B1; the battery 200 further includes a second expansion beam B2 which divides the internal space of the box 101 into a first chamber 101a and a second chamber 101b; the second expansion beam B2 is arranged in the first chamber 101a; all the battery cells 100 are arranged in the first chamber 101a and are located between the first expansion beam B1 and the second expansion beam B2; an avoiding channel 200a is formed between the first expansion beam B1 and the box 101; the first heat exchange member 102 is arranged in the corresponding avoiding channel 200a in a penetrating manner, so that the first heat exchange member 102 extends from the first chamber 101a to the second chamber 101b; and the wall surface of the first expansion beam B1 corresponding to the avoiding channel 200a and the first heat exchange member 102 are arranged at an interval. The box 101 is provided with a first concave part 101c, and the second concave part 101c forms at least part of the avoiding channel 200a. Definitely, the first heat exchange member 102 can also be arranged in a plurality of avoiding channels 200a in a penetrating manner.

A heat insulation member 107 is arranged between the first expansion beam B1 and the bottom wall 1011a of the box 101, the heat insulation member 107 is an integrated member and includes a first heat insulation part 1071 and a second heat insulation part 1072, the first heat insulation part 1071 is arranged between the wall surface of the first expansion beam B1 corresponding to the avoiding channel 200a and the first heat exchange member 102, and the second heat insulation part 1072 is arranged between the part, except the part corresponding to the avoiding channel 200a, of the bottom wall 1011a of the box 101 and the first expansion beam B1.

The first heat exchange member 102 includes two heat exchange tubes 1, each heat exchange tube 1 has two end portions, one end portion defines a first port 11a while the other end portion defines a second port 11b; a peripheral side of the first heat exchange member 102 includes two sides which are oppositely arranged along a first direction X1 and two sides which are oppositely arranged along a second direction X2; and a first box body 101 and a second box body 102 are oppositely arranged along a fifth direction X5.

Taking the first direction X1 being a direction from left to right, the second direction X2 being a direction from back to front, and the fifth direction X5 being a direction from bottom to top as an example, the three directions are vertical in pairs:
Two heat exchange tubes 1 of the first heat exchange member 102 are arranged at intervals in a left-right direction, each heat exchange tube 1 is formed by bending a single tube, the heat exchange tubes 1 are bent in an arc shape at the bending positions, each heat exchange tube 1 is a flat tube or a harmonica-shaped tube, and a thickness direction of the heat exchange tubes 1 is the direction X5. Each heat exchange tube 1 further includes a communication section 12 connected between the two end portions, and central axes of at least the communication sections 12 of all the heat exchange tubes 1 are located on the same plane so as to be better matched with the battery cells 100.

Each heat exchange tube 1 is constructed to be the first heat exchange tube 1a, a communication section 12 of the first heat exchange tube 1a includes a first heat exchange section 121 and a second heat exchange section 122, the second heat exchange section 122 is bent to form a U-shaped area 120, the first heat exchange section 121 is arranged in the U-shaped area of the second heat exchange section 122 in a bent way, the first heat exchange section 121 and the second heat exchange section 122 are connected in a bent way. The communication sections 12 of the two heat exchange tubes 1 can be symmetrically arranged about a central line of the first heat exchange member 102 vertical to the left-right direction.

The first heat exchange section 121 includes a plurality of first heat exchange parts 1211 and first bending parts 1212, the plurality of first heat exchange parts 1211 are arranged at intervals along the first direction, each second heat exchange part 1211 linearly extends along the second direction, and each first bending part 1212 is in an arc shape and is connected between two adjacent first heat exchange parts 1211 in a bent way so that the plurality of first heat exchange parts 1211 are sequentially connected.

The second heat exchange section 122 includes a second heat exchange part 1221, a third heat exchange part 1222, a fourth heat exchange part 1223, and a fifth heat exchange part 1224; the second heat exchange part 1221 extends along the right side periphery of the first heat exchange section 121 (the second heat exchange part 1221 extends along the second direction), the third heat exchange part 1222 is connected between the second heat exchange part 1221 and the first heat exchange section 121 and extends along the rear side periphery of the first heat exchange section 121 (the third heat exchange part 1222 extends along the first direction), a first end of the third heat exchange part 1222 is connected to the second heat exchange part 1221 by an included angle of about 90°, a second end of the third heat exchange part 1222 is connected to the first heat exchange section 121 by an included angle of about 90°, the fourth heat exchange part 1223 communicates with the second heat exchange part 1221 and is connected to the second heat exchange part 1221 by an included angle of about 90°, the fourth heat exchange part 1223 extends along the front side periphery of the first heat exchange section 121 (the fourth heat exchange part 1223 extends along the first direction), so that an opening of the U-shaped area 120 formed by the second heat exchange part 1221, the third heat exchange part 1222, and the fourth heat exchange part 1223 is arranged leftwards; the fifth heat exchange part 1224 extends along the left side periphery of the first heat exchange section 121 and seals at least part of the opening of the U-shaped area 120 formed by the second heat exchange part 1221, the third heat exchange part 1222, and the fourth heat exchange part 1223; and one end of the fifth heat exchange part 1224 is connected to the third heat exchange part 1222 in a bent way, and the other end of the fifth heat exchange part 1224 is connected to the first bending part 1212.

Each first heat exchange tube 1a also includes an eighth heat exchange section 128; the first heat exchange section 12 is connected between an eighth heat exchange section 128 and a second heat exchange section 122, and the eighth heat exchange section 128 and a first heat exchange section 121 are roughly connected at an included angle of 90°; and the eighth heat exchange section 128 is connected to one end portion of the heat exchange tubes 1 in a bent way, and the fourth heat exchange part 1223 is connected to the other end portion of the heat exchange tubes 1 in a bent way.

### Embodiment 2

With reference to FIG. 3, FIG. 20 to FIG. 22, and FIG. 11, the structure in this embodiment is approximately the same as that in the Embodiment 1, and the same components are marked in the same accompanying drawings, and the difference is that the first expansion beam B1 is provided with a first concave part 105a, and the first concave part 105a and a second concave part 101c form the avoiding channels 200a; the first heat exchange member 102 further includes current collectors 2 which correspond to the avoiding channels 200a one to one, the current collectors 2 are connected to a plurality of end portions and arranged in the second chamber 101b, the avoiding channels 200a allow the current collectors 2 to pass through, each avoiding space 200a is provided with a bearing member 106, and the bearing members 106 abut against the battery cells 100. The plurality of end portions connected to the current collectors 2 can belong to the same heat exchange tube 1 and can also belong to different heat exchange tubes 1.

The battery 200 further includes a third expansion beam B3 which is arranged between the first expansion beam B1 and the second expansion beam B2 at an interval; a third concave part 101d is formed in the box 101 and forms an avoiding space; the part of the first heat exchange member 102 arranged in the first chamber 101a penetrates through the avoiding space; the third expansion beams B3 and the first heat exchange member 102 are arranged at an interval to achieve heat insulation, and the third expansion beam B3 is attached to the part, except the wall of the third concave part 101d, of the box 101.

Three heat exchange tubes 1 of the first heat exchange member 102 are respectively the first heat exchange tube 1a, the second heat exchange tube 1b, and a third heat exchange tube 1c. The communication section 12 of the first heat exchange tube 1a includes a first heat exchange section 121 and a second heat exchange section 122, the second heat exchange section 122 is bent to form the U-shaped area 120, the first heat exchange section 121 is arranged in the U-shaped area of the second heat exchange section 122 in a bent way, and the first heat exchange section 121 is connected to the second heat exchange section 122 in a bent way; the first heat exchange section 121 includes a plurality of first heat exchange parts 1211 and first bending parts 1212, the plurality of first heat exchange parts 1211 are arranged at intervals along the first direction, each second heat exchange part 1211 linearly extends along the second direction, and each first bending part 1212 is arc-shaped and is connected between two adjacent first heat exchange parts 1211 in a bent way so that the plurality of first heat exchange parts 1211 are sequentially connected; and the second heat exchange section 122 includes a second heat exchange part 1221, a third heat exchange part 1222, and a fourth heat exchange part 1223; the second heat exchange part 1221, the third heat exchange part 1222, and the fourth heat exchange part 1223 form the U-shaped area 120; the second heat exchange part 1221 extends along the first direction; the third heat exchange part 1222 extends along the second direction; and the fourth heat exchange part 1223 extends along the second direction.

At least the communication section 12 of the second heat exchange tube 1a is arranged in the U-shaped area 120 of the first heat exchange tube 1a; for the second heat exchange tube 1a, the communication section 12 includes a third heat exchange section 123, a third heat exchange section 124, and a fifth heat exchange section 125; the third heat exchange section 123 and a fourth heat exchange section 124 are bent to form the U-shaped areas 120 respectively; the third heat exchange section 123 and the fourth heat exchange section 124 are connected in a bent way; the third heat exchange section 123 is arranged in the U-shaped area 120 of the fourth heat exchange section 124; and at least part of the first heat exchange section 121 of the first heat exchange tube 1a is arranged in the U-shaped area 120 of the third heat exchange section 123. Three side edges corresponding to the U-shaped area 120 of the third heat exchange section 123 are correspondingly parallel to three side edges corresponding to the U-shaped area 120 of the fourth heat exchange section 124 respectively. The fifth heat exchange section 125 is connected to the end of the third heat exchange section 123 deviating from the fourth heat exchange section 124, and includes a plurality of sixth heat exchange parts 1251 and a second bending part 1252; the plurality of sixth heat exchange parts 1251 are arranged at intervals along the first direction; each sixth heat exchange part 1251 extends along the second direction; and the second bending part 1252 is arc-shaped and is connected between the two adjacent sixth heat exchange parts 1251 in a bent way, so that the plurality of sixth heat exchange parts 1251 are connected in sequence.

### Embodiment 3

With reference to FIG. 4 and FIG. 25, the structure in this embodiment is approximately the same as that in the Embodiment 1, the same components are marked in the same accompanying drawings, and the difference is only that one of two heat exchange tubes 1 of the first heat exchange member 102 is constructed to be the first heat exchange tube 1a, and the other one is constructed to be the second heat exchange tube 1b; two current collectors 2 are correspondingly formed on the side of the first heat exchange member 102 in the second direction, a first end portion 11a of each heat exchange tube 1 extends to one current collector 2, and a second end portion 11b of each heat exchange tube 1 extends to the other current collector 2.

The communication section 12 of the first heat exchange tube 1a includes a first heat exchange section 121 and a second heat exchange section 122, the second heat exchange section 122 is bent to form the U-shaped area 120, the first heat exchange section 121 is arranged in the U-shaped area of the second heat exchange section 122 in a bent way, and the first heat exchange section 121 is connected to the second heat exchange section 122 in a bent way; the first heat exchange section 121 includes a plurality of first heat exchange parts 1211 and first bending parts 1212, the plurality of first heat exchange parts 1211 are arranged at intervals along the first direction, each second heat exchange part 1211 linearly extends along the second direction, and each first bending part 1212 is arc-shaped and is connected between two adjacent first heat exchange parts 1211 in a bent way so that the plurality of first heat exchange parts 1211 are sequentially connected; and the second heat exchange section 122 includes a second heat exchange part 1221, a third heat exchange part 1222, and a fourth heat exchange part 1223; the second heat exchange part 1221, the third heat exchange part 1222, and the fourth heat exchange part 1223 form the U-shaped area 120; the second heat exchange part 1221 extends along the first direction; the third heat exchange part 1222 extends along the second direction; and the fourth heat exchange part 1223 extends along the second direction.

At least the communication section 12 of the second heat exchange tube 1a is arranged in the U-shaped area 120 of the first heat exchange tube 1a; for the second heat exchange tube 1a, the communication section 12 includes a first heat exchange section 121 and a second heat exchange section 122; the second heat exchange section 122 is bent to form the U-shaped area 120; the first heat exchange section 121 is bent and arranged in the U-shaped area of the second heat exchange section 122; the first heat exchange section 121 and the second heat exchange section 122 are connected in a bent way; the first heat exchange section 121 includes a plurality of first heat exchange parts 1211 and first bending parts 1212; the plurality of first heat exchange parts 1211 are arranged at intervals along the first direction; each second heat exchange part 1211 linearly extends along the second direction; each first bending part 1212 is arc-shaped and is connected between the two adjacent first heat exchange parts 1211 in a bent way, so that the plurality of first heat exchange parts 1211 are connected in sequence; the second heat exchange section 122 includes a second heat exchange part 1221, a third heat exchange part 1222, and a fourth heat exchange part 1223; the second heat exchange part 1221, the third heat exchange part 1222, and the fourth heat exchange part 1223 form the U-shaped area 120; the second heat exchange part 1221 extends along the first direction; the third heat exchange part 1222 extends along the second direction; and the fourth heat exchange part 1223 extends along the second direction.

In addition, it is to be noted that the various specific technical features described in the above specific embodiments can be combined in any suitable way without contradiction. In order to avoid unnecessary repetition, the present application will not separately explain various possible combination methods. In addition, various embodiments of the present application can also be combined arbitrarily, as long as they do not violate the ideas of the present application, they should also be considered as the content disclosed in the present application. That is, without conflict, the embodiments in the present application and the features in the embodiments may be combined with each other.

The foregoing is only a preferred embodiment of the present application and is not intended to limit the present application, which may be subject to various changes and variations for those skilled in the art. Any modification, equivalent replacement, improvement, etc. made within the spirit and principle of the present application shall fall within the scope of protection of the present application.

## Claims

1. A battery, comprising:
a box; and
a fixed beam which is arranged in the box and divides an internal space of the box into a first chamber and a second chamber, the fixed beam and/or the box forming an avoiding space for communicating the first chamber with the second chamber;
a battery cell which is arranged in the box and is located in the first chamber; and
a first heat exchange member which is arranged in the box and is located between the battery cell and the box, forms at least one heat exchange flow channel and comprises a heat exchange part and a connecting part, wherein the heat exchange part is located in the first chamber and configured to exchange heat with the battery cell; the connecting part forms a port of the heat exchange flow channel; and the connecting part penetrates through the avoiding space from the heat exchange part and extends to the second chamber, so as to locate the port of the heat exchange flow channel in the second chamber.

2. The battery according to claim 1, wherein the fixed beam is provided with a first concave part, and/or, a second concave part is formed on a wall of the box, and the first concave part and/or the second concave part form/forms the avoiding space.

3. The battery according to claim 1 or 2, wherein the avoiding space is arranged to allow the connecting part to pass through.

4. The battery according to any one of claims 1 to 3, wherein a part of the first heat exchange member in the first chamber and a part of the first heat exchange member in the second chamber are connected at an obtuse angle.

5. The battery according to any one of claims 1 to 4, further comprising a current collector, wherein the current collector is in communication with the port of the connecting part and is located in the second chamber.

6. The battery according to claim 5, wherein the avoiding space is configured to allow the current collector to pass through.

7. The battery according to claim 5 or 6, wherein the connecting part is provided with at least two ports; the current collector, the connecting part, and the avoiding space is in one-by-one correspondence;
the current collector is in communication with a plurality of ports of the corresponding connecting part, or, the current collector divides the plurality of ports of the corresponding connecting part into a plurality of independent flow channels.

8. The battery according to claim 7, wherein a plurality of heat exchange flow channels are provided, two ports of each heat exchange flow channel are respectively a first port and a second port, the first port is used for liquid intake, and the second port is used for liquid output;
two current collectors are provided and are respectively a first current collector and a second current collector, all first ports are in communication with the first current collector, and all second ports are in communication with the second current collector; or,
one current collector is provided, and the current collector is provided with two flow channels which are separated and independently arranged; all first ports are in communication with one flow channel, and all second ports are in communication with the other flow channel.

9. The battery according to any one of claims 1 to 8, wherein the fixed beam is constructed to be a first expansion beam and is provided with a first matching surface abutting against the battery cells; the battery further comprises:
a bearing member; the bearing member is arranged in the avoiding space and is provided with a second matching surface that is abutted against the battery cells; the first matching surface is flush with the second matching surface; the bearing member is provided with a notch for avoiding the connecting part; and the notch penetrates through a peripheral side of the bearing member.

10. The battery according to claim 9, wherein a stop part that is in abutting fit with the bearing member is formed on at least one of the fixed beam and the box to limit the movement of the bearing member in a direction from the first chamber to the second chamber.

11. The battery according to claim 10, wherein
the stop part is formed at an avoiding channel position on a side of the fixed beam facing the first chamber, and/or,
a stop step that protrudes towards the fixed beam is formed on a wall, provided with the first heat exchange member, of the box and; and the stop step forms the stop part.

12. The battery according to claim 11, wherein on a cross section of the fixed beam, the stop part on the fixed beam forms an arc-shaped structure, and the cross section of the fixed beam is vertical to a length direction of the fixed beam.

13. The battery according to any one of claims 9 to 12, wherein the bearing member comprises:
a plate body part of which a surface of one side in a thickness direction is a second matching surface, the notch penetrating two sides of the plate body part in the thickness direction; and
a matching part which is formed on an outer edge of the plate body part and is in abutting fit with the fixed beam to limit the bearing member to move in a direction from the first chamber to the second chamber.

14. The battery according to claim 13, wherein the matching part is provided with a first surface and a second surface; the first surface is an arc-shaped surface which is sunken towards the second surface and is matched with the fixed beam; and the second surface is connected to the first surface and is flush with the second matching surface.

15. The battery according to any one of claims 13 to 14, wherein at least one clamping hole is formed in the expansion beam; the bearing member further comprises:
at least one clamping hook part; the clamping hook part is formed at the outer edge of the plate body part and is located on the side of the plate body part deviating from the second matching surface; and the clamping hook part is clamped in the corresponding clamping hole.

16. The battery according to any one of claims 13 to 15, wherein the bearing member further comprises:
at least one support part; the support part is arranged on the side of the plate body part deviating from the second matching surface and avoids the notch; and the support part is in butting fit with the box.

17. The battery according to claim 16, wherein a width of the support part in a thickness direction of the plate body part increases from the matching part to the first heat exchange member.

18. The battery according to any one of claims 9 to 17, wherein the bearing member is arranged between the first heat exchange member and the fixed beam, and
a heat conductivity coefficient of the bearing member is less than that of the fixed beam; and/or,
the bearing member and the first heat exchange member are arranged at an interval.

19. The battery according to any one of claims 9 to 18, wherein a strength of a material of the bearing member is at least 0.8 time of a strength of a material of the fixed beam

20. The battery according to any one of claims 9 to 19, wherein the first heat exchange member is arranged on a bottom wall of the box; the end of the second matching surface facing the first heat exchange member is flush with the ends of the battery cells facing the corresponding first heat exchange member, or, the end of the second matching surface facing the first heat exchange member is adjacent to the first heat exchange member relative to the ends of the battery cells facing the corresponding first heat exchange member.

21. The battery according to any one of claims 1 to 20, wherein the fixed beam is constructed to be a first expansion beam; and the fixed beam and the first heat exchange member are arranged at an interval to realize heat insulation between the first heat exchange member and the fixed beam.

22. The battery according to claim 21, wherein a second concave part is formed in the wall of the box, and the second concave part forms at least part of the avoiding space; the part, penetrating through the avoiding space, of the first heat exchange member is arranged in the second concave part; and
the expansion beam is attached to the part, except the second concave part, of the wall of the box; or,
the expansion beam and the part, except the second concave part, of the wall of the box are arranged at an interval.

23. The battery according to claim 22, further comprising:
a heat insulation member comprising a first heat insulation part, wherein the first heat insulation part is arranged between the wall surface of the fixed beam corresponding to the avoiding space and the first heat exchange member.

24. The battery according to claim 23, wherein the heat insulation member further comprises a second heat insulation part which is arranged between the part, except the second concave part, of the wall of the box and the fixed beam.

25. The battery according to claim 24, wherein a first fixing member is further arranged on the fixed beam, and at least part of the first fixing member is located in the fixed beam;
the battery further comprises a second fixing member; the second fixing member is arranged on the box, the second heat insulation part, and the fixed beam in a penetrating mode and is connected to the first fixing member.

26. The battery according to any one of claims 1 to 25, wherein the first heat exchange member comprises at least one heat exchange tube; the heat exchange flow channels are defined in the heat exchange tubes; the heat exchange tubes are flat tubes or harmonica-shaped tubes

27. The battery according to any one of claims 1 to 26, wherein the first heat exchange member comprises at least one heat exchange tube which is constructed to be a first heat exchange tube; the first heat exchange tube comprises a first heat exchange section and a second heat exchange section; the second heat exchange section is bent to form a U-shaped area; and the first heat exchange section is bent and arranged in the U-shaped area and is connected to the second heat exchange section in a bent way.

28. The battery according to claim 27, wherein the first heat exchange section comprises a plurality of first heat exchange parts and first bending parts, the plurality of first heat exchange parts are arranged at intervals along the first direction, each first heat exchange part extends along a second direction, each first bending part is in an arc shape and is connected between two adjacent first heat exchange parts in a bent way, and thus the plurality of first heat exchange parts are sequentially connected; and an included angle is formed between the second direction and the first direction.

29. The battery according to claim 27 or 28, wherein the second heat exchange section comprises a second heat exchange part, a third heat exchange part, and a fourth heat exchange part; the second heat exchange part extends along a peripheral edge of a first side of the first heat exchange section; the third heat exchange part is connected between the second heat exchange part and the first heat exchange section and extends along a peripheral edge of a second side of the first heat exchange section; a first end of the third heat exchange part is connected to the second heat exchange part by an included angle; a second end of the third heat exchange part is connected to the first heat exchange section by an included angle; the fourth heat exchange part is in communication with the second heat exchange part and is connected to the second heat exchange part by an included angle; and the fourth heat exchange part extends along a peripheral edge of a third side of the first heat exchange section.

30. The battery according to claim 29, wherein the first heat exchange section comprises the plurality of first heat exchange parts which are sequentially bent and connected in the first direction;
the second heat exchange part is located on one side of the plurality of first heat exchange parts in the first direction, the third heat exchange part is located on one side of the plurality of first heat exchange parts in the second direction, and the first direction and the second direction are arranged by an included angle; the first end of the third heat exchange part is connected to one end of the second heat exchange part in the second direction, and the second end of the third heat exchange part is connected to one, which is farthest from the second heat exchange part, of the plurality of first heat exchange parts in the first direction; the fourth heat exchange part is located on the other side of the plurality of first heat exchange parts in the second direction; one end of the fourth heat exchange part is connected to one end of the second heat exchange part deviating from the third heat exchange part, and the other end of the fourth heat exchange part extends in the first direction towards a direction deviating from the second heat exchange part; or,
the second heat exchange part is located on one side of the plurality of first heat exchange parts in the second direction, the third heat exchange part is located on one side of the plurality of first heat exchange parts in the first direction, and the first direction and the second direction are arranged by an included angle; and the first end of the third heat exchange part is connected to one end of the second heat exchange part in the first direction, and the second end of the third heat exchange part is connected to one, which is closest to the third heat exchange part, of the plurality of first heat exchange parts in the first direction; the fourth heat exchange part is located on the other side of the plurality of first heat exchange parts in the first direction; and one end of the fourth heat exchange part is connected to one end of the second heat exchange part deviating from the third heat exchange part, and the other end of the fourth heat exchange part extends in the second direction towards the direction deviating from the second heat exchange part.

31. The battery according to claim 30, wherein the second heat exchange section also comprises a fifth heat exchange part; and the fifth heat exchange part extends along a peripheral edge of a fourth side of the first heat exchange section, and seals at least part of an opening of the U-shaped area formed by the second heat exchange part, the third heat exchange part, and the fourth heat exchange part.

32. The battery according to any one of claims 27 to 31, wherein the first heat exchange member further comprises second heat exchange tubes; the second heat exchange tubes and the first heat exchange tubes are arranged on the same side of the battery cells; at least part of the second heat exchange tubes are arranged in the U-shaped areas of the first heat exchange tubes in a bent way; and the second heat exchange tubes and the first heat exchange tubes have the same or different bending structures.

33. The battery according to claim 32, wherein the second heat exchange tubes comprise U-shaped areas having the same structure as the first heat exchange tubes, and at least part of the first heat exchange tubes are arranged in the U-shaped areas of the second heat exchange tubes.

34. The battery according to claim 33, wherein each second heat exchange tube comprises a third heat exchange section and a fourth heat exchange section which are connected in a bent way, the third heat exchange section and the fourth heat exchange section are respectively bent to form U-shaped areas, the third heat exchange section is arranged in the U-shaped area of the fourth heat exchange section, and at least one part of the first heat exchange section of each first heat exchange tube is arranged in the U-shaped area of the third heat exchange section.

35. The battery according to claim 34, wherein each second heat exchange tube also comprises a fifth heat exchange section; the fifth heat exchange section comprises a plurality of fifth heat exchange parts and second bending parts; the plurality of fifth heat exchange parts are arranged at intervals along a first direction; each fifth heat exchange part extends along a second direction; each second bending part is in an arc shape and is connected between two adjacent fifth heat exchange parts in a bent way, so that the plurality of fifth heat exchange parts are sequentially connected; the second direction and the first direction are arranged by an included angle;
the fifth heat exchange sections are arranged between the third heat exchange sections and the fourth heat exchange sections, and/or, the fifth heat exchange sections are arranged between the third heat exchange sections and the corresponding ports.

36. The battery according to any one of claims 32 to 35, wherein the first heat exchange member further comprises a third heat exchange tube, and at least part of the third heat exchange tube is arranged in the U-shaped area of each second heat exchange tube in a bent way.

37. The battery according to any one of claims 1 to 36, wherein the fixed beam is constructed to be the first expansion beam and comprises:
a beam body which defines a cavity; and
a reinforcement partition plate which is arranged in the cavity and is provided with a plurality of connecting parts arranged at intervals; the plurality of connecting parts comprise a first connecting part and a second connecting part, the first connecting part and the second connecting part are respectively connected to two opposite side walls of the beam body so that the cavity is divided to a plurality of chambers by the reinforcement partition plate; and the first connecting part and the second connecting part are arranged in a staggered way.

38. The battery according to claim 37, wherein the beam body comprises a first plate body and a second plate body which are oppositely arranged; the first plate body and the second plate body are connected and jointly define a cavity; the reinforcement partition plate is arranged between the first plate body and the second plate body and is provided with a third connecting part; and the third connecting part is clamped between the first plate body and the second plate body and is connected to the first plate body and the second plate body.

39. The battery according to claim 37 or 38, further comprising a second expansion beam which is arranged at an interval with the first expansion beam, wherein the battery cells are arranged between the first expansion beam and the second expansion beam, a third fixing member is arranged in the cavity of the first expansion beam, and a fourth fixing member is arranged in the cavity of the second expansion beam; and the battery further comprises a pull rope, and the pull rope penetrates through the corresponding cavity and is connected to the third fixing member and the fourth fixing member.

40. The battery according to any one of claims 1 to 39, wherein the box comprises a first box body, wherein the first box body is an integrated punch forming member and comprises a bottom wall and an enclosure, the enclosure is arranged around the bottom wall, the fixed beam is connected to the bottom wall and the enclosure, and the first heat exchange member is arranged on at least one of the bottom wall and the enclosure.

41. The battery according to any one of claims 1 to 40, wherein the box is provided with a top wall, the bottom wall and the enclosure, the enclosure is arranged between the top wall and the bottom wall, and the first heat exchange member is arranged on at least one of the top wall, the bottom wall and the enclosure.

42. The battery according to claim 41, wherein the fixed beam is constructed to be the first expansion beam and is abutted against the battery cells, the first heat exchange member is arranged on the top wall, and the first heat exchange member on the top wall is connected to the fixed beam.

43. The battery according to any one of claims 1 to 42, further comprising at least one of a second heat exchange member and a third heat exchange member, wherein at least one of the second heat exchange member and the third heat exchange member is used for exchanging heat with the battery cells; the second heat exchange member is attached to the outside of the box; and the third heat exchange member is arranged between two adjacent battery cells.

44. An electrical apparatus, comprising the battery according to any one of claims 1 to 43.
